# EUROPEAN PATENT SPECIFICATION

(11) **EP 4 468 690 B1**
(45) Date of publication and mention of the grant of the patent: **18.03.2026**
(21) Application number: 23867322.2
(22) Date of filing: 08.09.2023
(51) Int. Cl.: H04M 1/724

(54) **WINDOW DISPLAY METHOD AND RELATED APPARATUS**
FENSTERANZEIGEVERFAHREN UND ZUGEHÖRIGE VORRICHTUNG
PROCÉDÉ D'AFFICHAGE DE FENÊTRE ET APPAREIL ASSOCIÉ

(30) Priority: 22.09.2022 CN 202211158219
(43) Date of publication of application: 27.11.2024
(73) Proprietor: Honor Device Co., Ltd., Shenzhen, Guangdong 518040 (CN)
(72) Inventor: HUANG, Hua, Shenzhen, Guangdong 518040 (CN); HAN, Canyang, Shenzhen, Guangdong 518040 (CN)
(74) Representative: Gill Jennings & Every LLP
(86) International application number: PCT/CN2023/117839
(87) International publication number: WO 2024/061032

(56) References cited:
- WO-A1-2022/068483
- CN-A- 107 870 711
- CN-A- 112 835 485
- CN-A- 113 946 248
- CN-A- 114 237 779
- CN-A- 114 363 462
- US-A1- 2024 256 305

## Description

This application claims priority to Chinese Patent Application No. 202211158219.5, filed with the China National Intellectual Property Administration on September 22, 2022 and entitled "WINDOW DISPLAY METHOD AND RELATED APPARATUS", which is incorporated herein by reference in its entirety.

### TECHNICAL FIELD

This application relates to the field of terminal technologies, and in particular, to a window display method and a related apparatus.

### BACKGROUND

With the development of terminal technologies, electronic devices can support running of various types of applications.

In some implementations, for an application loaded on an electronic device, if a user wants to use a specific function of the application, the user needs to tap, on the electronic device, an icon of the application, and look for the function, level by level, in various levels of pages of the application after the application is started, to find and use the function.

However, in the implementations, operations performed by the user for using the application is complicated, affecting user experience.

Documents CN113946248A and CN112835485A disclose alternative methods for displaying user interfaces comprising task windows.

### SUMMARY

Embodiments of this application provide a window display method and a related apparatus, to simplify a manner of opening a function of an application.

According to a first aspect, an embodiment of this application provides a window display method applied to an electronic device. The method includes:
displaying a first interface, where the first interface includes page content corresponding to a first task of a first application; receiving a first preset operation; in response to the first preset operation, displaying an embedded window at an upper layer of the first interface, and skipping interrupting execution of the first task, where the embedded window includes page content corresponding to a second task of a second application; receiving a second preset operation; and in response to the second preset operation, canceling display of the embedded window, and restoring display of the page content corresponding to the first task of the first application.

In this way, the embedded window can be displayed conveniently based on the user operation, to provide some tasks for a user in the embedded window, so that the user can use a task in the embedded window conveniently. In addition, display of the embedded window does not interrupt an application already running on the electronic device, so that the application already running on the electronic device has good continuity. The user is less disturbed when using the application, and user experience is improved.

In a possible implementation, the page content corresponding to the second task of the second application is displayed in a first area of the embedded window, the embedded window further includes a second area, and at the upper layer of the first interface, the following are further displayed in the second area of the embedded window: a first icon corresponding to the second task, and a second icon corresponding to a third task, where the first icon is in a selected state, and the second icon is in an unselected state. In this way, a plurality of tasks may be provided in the embedded window, so that the user can use a plurality of applications conveniently. A task corresponding to currently displayed page content is in the selected state in the second area, and an identifier of a task corresponding to no currently displayed page content may be in the unselected state. This can help the user know about a name of a currently used task.

In a possible implementation, before the receiving a second preset operation, the method further includes: receiving, in the embedded window, a third preset operation for switching the second task to the third task; and in response to the third preset operation, displaying interface content corresponding to the third task in the first area of the embedded window, and displaying the first icon and the second icon in the second area of the embedded window, where the first icon is in the unselected state, and the second icon is in the selected state. In this way, the user can switch between the plurality of tasks in the embedded window flexibly, bringing greater convenience for the user to use the plurality of tasks.

In a possible implementation, after the displaying interface content corresponding to the third task in the first area of the embedded window, the method further includes: receiving a swipe-up operation in the first area of the embedded window; in response to the swipe-up operation, displaying a first button in the first area of the embedded window; and when a trigger operation on the first button is received, displaying page content, associated with the first button, of the third task in the first area of the embedded window. In this way, there can be more content in the embedded window, so that the user can implement more services based on the embedded window.

In a possible implementation, the page content, associated with the first button, of the third task includes a second button, and the method further includes: when a trigger operation on the second button is received, restoring display of the interface content corresponding to the first task in the first area of the embedded window. In this way, the user may further return to an upper-level page in the embedded window conveniently.

In a possible implementation, the third task is a task of the first application, a task of the second application, or a task of a third application. In this way, the user can use different tasks of different applications based on the embedded window, bringing more richness and convenience in use.

In a possible implementation, the page content corresponding to the second task of the second application includes a third button, and the method further includes: when a trigger on the third button is received, displaying an input box in the embedded window; when a trigger on the input box is received, displaying a keyboard; and displaying, in the input box, input content received by the keyboard. In this way, the user can implement input in the embedded window conveniently.

In a possible implementation, after the displaying an embedded window at the upper layer of the first interface, the method further includes: receiving a notification message; and keeping displaying the embedded window, and displaying the notification message in a form of a capsule or a banner at an upper layer of the embedded window. In this way, the user can see the notification message in real time when using the embedded window.

In a possible implementation, the method further includes: displaying a second interface, where the second interface includes a first switch; when a trigger operation for enabling the first switch is received, displaying a third interface, where the third interface includes an Added bar and a Not-added bar, the Added bar includes an identifier of one or more custom tasks added by a user, and the Not-added bar includes an identifier of one or more tasks that are provided by the electronic device and that are not added by the user; and when an operation for deleting a first target task from the Added bar is received, canceling display of an identifier of the first target task in the Added bar, and displaying the identifier of the first target task in the Not-added bar; or when an operation for adding a second target task in the Not-added bar is received, canceling display of an identifier of the second target task in the Not-added bar, and displaying the identifier of the second target task in the Added bar. In this way, the user can be supported in customizing a needed task conveniently.

In a possible implementation, the Not-added bar includes an identifier of a third target task, an application corresponding to the third target task is not installed on the electronic device, and the method further includes: when an operation for adding the third target task in the Not-added bar is received, displaying prompt information, where the prompt information is used to prompt for installing the application corresponding to the third target task. In this way, the user can customize various tasks, not limited to an application already installed on the electronic device.

In a possible implementation, the third interface further includes a second switch, and the method further includes: when a trigger operation for enabling the second switch is received, displaying a recommended identifier in a blank area of the Added bar. In this way, the electronic device can be supported in recommending an appropriate task to the user with reference to a scenario that the user is in.

In a possible implementation, the in response to the first preset operation, displaying an embedded window at an upper layer of the first interface, where the embedded window includes page content corresponding to a second task of a second application includes: in response to the first preset operation, determining the second task of the second application according to a recommendation algorithm if it is determined that the second switch is on, where the recommendation algorithm is related to one or more of the following: time information, a geo-fence within which the user is located, or user-related information in a user profile; and displaying the embedded window at the upper layer of the first interface, where the embedded window includes a page corresponding to the second task of the second application. In this way, the electronic device can recommend an appropriate shortcut task card to the user based on the scenario that the user is in, improving user experience.

In a possible implementation, the determining the second task of the second application according to a recommendation algorithm includes: when it is determined according to the recommendation algorithm that the user is going to go out, determining that the second task of the second application is a transportation-related task; when it is determined according to the recommendation algorithm that the user is going to punch in, determining that the second task of the second application is a punch in-related task; when it is determined according to the recommendation algorithm that the user is going to make a payment, determining that the second task of the second application is a payment-related task; or when it is determined according to the recommendation algorithm that the user is going to use transportation, determining that the second task of the second application is a passenger QR code-related task. In this way, the electronic device can recommend an appropriate shortcut task card to the user based on the scenario that the user is in, improving user experience.

In a possible implementation, the first application includes an application that supports video or audio content play, and the electronic device keeps the first application playing a video or audio in a process in which the electronic device displays the embedded window. In this way, an application already running on the electronic device can keep running.

In a possible implementation, the method further includes: when the first preset operation is received by the electronic device in a screen-off state or an always-on-display state, lighting up a display screen of the electronic device; displaying a lock screen interface, where a lower layer of the lock screen interface includes the embedded window; and when a correct unlock input is received in the lock screen interface, displaying the embedded window. In this way, the electronic device can wake from the screen-off state or the always-on-display state and display the embedded window based on a simple trigger of the user.

In a possible implementation, the method further includes: when the first preset operation is received by the electronic device in a lock screen-on state, displaying the lock screen interface, where the lower layer of the lock screen interface includes the embedded window; and when the correct unlock input is received in the lock screen interface, displaying the embedded window. In this way, the electronic device can wake from the lock screen-on state and display the embedded window based on a simple trigger of the user.

In a possible implementation, the in response to the first preset operation, displaying an embedded window at an upper layer of the first interface, and skipping interrupting execution of the first task, where the embedded window includes page content corresponding to a second task of a second application includes: in response to the first preset operation, creating a new task task for the second application, displaying the embedded window at the upper layer of the first interface, and skipping interrupting execution of the first task, where the embedded window includes the page content corresponding to the second task of the second application. In this way, the second application can provide the page content corresponding to the second task for the embedded window based on the newly created task, and the electronic device does not need to jump to the second application, so that running of the second application has good continuity.

In a possible implementation, the receiving a first preset operation includes: receiving a double-tap operation on the back of the electronic device. Such an operation manner is convenient and easy for the user to implement.

According to a second aspect, an embodiment of this application provides a window display apparatus. The window display apparatus may be an electronic device, or may be a chip or a chip system in the electronic device. The window display apparatus may include a display unit and a processing unit. When the window display apparatus is the electronic device, the display unit herein may be a display screen. The display unit is configured to perform a step of displaying, to enable the electronic device to implement the window display method according to any one of the first aspect or the possible implementations of the first aspect. When the window display apparatus is the electronic device, the processing unit may be a processor. The window display apparatus may further include a storage unit, and the storage unit may be a memory. The storage unit is configured to store instructions, and the processing unit executes the instructions stored in the storage unit, to enable the electronic device to implement the window display method according to any one of the first aspect or the possible implementations of the first aspect. When the window display apparatus is the chip or the chip system in the electronic device, the processing unit may be a processor. The processing unit executes instructions stored in a storage unit, to enable the electronic device to implement the window display method according to any one of the first aspect or the possible implementations of the first aspect. The storage unit may be a storage unit (for example, a register or a buffer) in the chip or a storage unit (for example, a read-only memory or a random access memory), within the electronic device, outside the chip.

For example, the display unit is configured to display a first interface, where the first interface includes page content corresponding to a first task of a first application; the processing unit is configured to receive a first preset operation; the display unit is further configured to: in response to the first preset operation, display an embedded window at an upper layer of the first interface, and skip interrupting execution of the first task, where the embedded window includes page content corresponding to a second task of a second application; the processing unit is further configured to receive a second preset operation; and the display unit is further configured to: in response to the second preset operation, cancel display of the embedded window, and restore display of the page content corresponding to the first task of the first application.

In a possible implementation, the page content corresponding to the second task of the second application is displayed in a first area of the embedded window, the embedded window further includes a second area, and at the upper layer of the first interface, the following are further displayed in the second area of the embedded window: a first icon corresponding to the second task, and a second icon corresponding to a third task, where the first icon is in a selected state, and the second icon is in an unselected state.

In a possible implementation, the processing unit is further configured to receive, in the embedded window, a third preset operation for switching the second task to the third task; and the display unit is further configured to: in response to the third preset operation, display interface content corresponding to the third task in the first area of the embedded window, and display the first icon and the second icon in the second area of the embedded window, where the first icon is in the unselected state, and the second icon is in the selected state.

In a possible implementation, the processing unit is further configured to receive a swipe-up operation in the first area of the embedded window; the display unit is further configured to: in response to the swipe-up operation, display a first button in the first area of the embedded window; and the display unit is further configured to: when a trigger operation on the first button is received, display page content, associated with the first button, of the third task in the first area of the embedded window.

In a possible implementation, the page content, associated with the first button, of the third task includes a second button, and the display unit is further configured to: when a trigger operation on the second button is received, restore display of the interface content corresponding to the first task in the first area of the embedded window.

In a possible implementation, the third task is a task of the first application, a task of the second application, or a task of a third application.

In a possible implementation, the page content corresponding to the second task of the second application includes a third button, and the display unit is further configured to: when a trigger on the third button is received, display an input box in the embedded window; when a trigger on the input box is received, display a keyboard; and display, in the input box, input content received by the keyboard.

In a possible implementation, the display unit is further configured to: receive a notification message; and keep displaying the embedded window, and display the notification message in a form of a capsule or a banner at an upper layer of the embedded window.

In a possible implementation, the display unit is further configured to: display a second interface, where the second interface includes a first switch; when a trigger operation for enabling the first switch is received, display a third interface, where the third interface includes an Added bar and a Not-added bar, the Added bar includes an identifier of one or more custom tasks added by a user, and the Not-added bar includes an identifier of one or more tasks that are provided by the electronic device and that are not added by the user; and when an operation for deleting a first target task from the Added bar is received, cancel display of an identifier of the first target task in the Added bar, and display the identifier of the first target task in the Not-added bar; or when an operation for adding a second target task in the Not-added bar is received, cancel display of an identifier of the second target task in the Not-added bar, and display the identifier of the second target task in the Added bar.

In a possible implementation, the Not-added bar includes an identifier of a third target task, an application corresponding to the third target task is not installed on the electronic device, and the display unit is further configured to: when an operation for adding the third target task in the Not-added bar is received, display prompt information, where the prompt information is used to prompt for installing the application corresponding to the third target task.

In a possible implementation, the third interface further includes a second switch, and the display unit is further configured to: when a trigger operation for enabling the second switch is received, display a recommended identifier in a blank area of the Added bar.

In a possible implementation, the processing unit is specifically configured to: in response to the first preset operation, determine the second task of the second application according to a recommendation algorithm if it is determined that the second switch is on, where the recommendation algorithm is related to one or more of the following: time information, a geo-fence within which the user is located, or user-related information in a user profile; and display the embedded window at the upper layer of the first interface, where the embedded window includes a page corresponding to the second task of the second application.

In a possible implementation, the processing unit is specifically configured to: when it is determined according to the recommendation algorithm that the user is going to go out, determine that the second task of the second application is a transportation-related task; when it is determined according to the recommendation algorithm that the user is going to punch in, determine that the second task of the second application is a punch in-related task; when it is determined according to the recommendation algorithm that the user is going to make a payment, determine that the second task of the second application is a payment-related task; or when it is determined according to the recommendation algorithm that the user is going to use transportation, determine that the second task of the second application is a passenger QR code-related task.

In a possible implementation, the first application includes an application that supports video or audio content play, and the electronic device keeps the first application playing a video or audio in a process in which the electronic device displays the embedded window.

In a possible implementation, the processing unit is further configured to: when the first preset operation is received by the electronic device in a screen-off state or an always-on-display state, light up a display screen of the electronic device; the display unit is further configured to display a lock screen interface, where a lower layer of the lock screen interface includes the embedded window; and the display unit is further configured to: when a correct unlock input is received in the lock screen interface, display the embedded window.

In a possible implementation, the display unit is further configured to: when the first preset operation is received by the electronic device in a lock screen-on state, display the lock screen interface, where the lower layer of the lock screen interface includes the embedded window; and the display unit is further configured to: when the correct unlock input is received in the lock screen interface, display the embedded window.

In a possible implementation, the processing unit is further configured to: in response to the first preset operation, create a new task task for the second application, and the display unit is further configured to: display the embedded window at the upper layer of the first interface, and skip interrupting execution of the first task, where the embedded window includes the page content corresponding to the second task of the second application.

In a possible implementation, the processing unit is specifically configured to receive a double-tap operation on the back of the electronic device.

According to a third aspect, an embodiment of this application provides an electronic device, including a processor and a memory. The memory is configured to store code instructions, and the processor is configured to run the code instructions, to perform the method according to any one of the first aspect or the possible implementations of the first aspect.

According to a fourth aspect, an embodiment of this application provides a computer-readable storage medium. The computer-readable storage medium stores a computer program or instructions, and when the computer program or instructions are run on a computer, the computer is enabled to perform the method according to any one of the first aspect or the possible implementations of the first aspect.

According to a fifth aspect, an embodiment of this application provides a computer program product including a computer program. When the computer program is run on a computer, the computer is enabled to perform the method according to any one of the first aspect or the possible implementations of the first aspect.

According to a sixth aspect, this application provides a chip or a chip system. The chip or the chip system includes at least one processor and a communication interface. The communication interface and at least one processor are interconnected through a line. The at least one processor is configured to run a computer program or instructions to perform the method according to any one of the first aspect or the possible implementations of the first aspect. The communication interface in the chip may be an input/output interface, a pin, a circuit, or the like.

In a possible implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

It should be understood that technical solutions according to the second aspect to the sixth aspect of this application correspond to a technical solution according to the first aspect of this application, and beneficial effects achieved according to the aspects and corresponding feasible implementations are similar. Details are not provided again.

### BRIEF DESCRIPTION OF DRAWINGS

FIG. 1 is a diagram of a structure of an electronic device 100 according to an embodiment of this application;
FIG. 2 is a diagram of a software structure of an electronic device 100 according to an embodiment of this application;
FIG. 3 is an interface diagram according to an embodiment of this application;
FIG. 4 is a diagram of a software and hardware framework according to an embodiment of this application;
FIG. 5 is a diagram of module interaction according to an embodiment of this application;
FIG. 6A to FIG. 6F are a diagram of interfaces for task setting according to an embodiment of this application;
FIG. 7A to FIG. 7F are a diagram of other interfaces for task setting according to an embodiment of this application;
FIG. 8A to FIG. 8D are a diagram of interfaces for adjusting a task sequence according to an embodiment of this application;
FIG. 9A to FIG. 9D are a diagram of interfaces from screen-off to display of an embedded window according to an embodiment of this application;
FIG. 10A to FIG. 10C are a diagram of interfaces from a lock screen to display of an embedded window according to an embodiment of this application;
FIG. 11A and FIG. 11B are a diagram of interfaces from a home screen to display of an embedded window according to an embodiment of this application;
FIG. 12A and FIG. 12B are a diagram of interfaces from a screen of a video application to display of an embedded window according to an embodiment of this application;
FIG. 13A and FIG. 13B are a diagram of interfaces from an application A to display of an embedded window according to an embodiment of this application;
FIG. 14A to FIG. 14C are a diagram of interfaces from a cold start or failed loading to display of an embedded window according to an embodiment of this application;
FIG. 15A to FIG. 15D are a diagram of interfaces of several types of possible tasks displayed in the embedded window according to an embodiment of this application;
FIG. 16A and FIG. 16B are a diagram of interfaces of a payment-related task displayed in the embedded window according to an embodiment of this application;
FIG. 17A to FIG. 17F are a diagram of other interfaces of a payment-related task displayed in the embedded window according to an embodiment of this application;
FIG. 18A to FIG. 18C are a diagram of interfaces of a transportation-related task displayed in the embedded window according to an embodiment of this application;
FIG. 19A to FIG. 19D are a diagram of interfaces of receiving a notification message when the embedded window is displayed according to an embodiment of this application;
FIG. 20A to FIG. 20D are a diagram of interfaces of exiting an embedded window according to an embodiment of this application;
FIG. 21A to FIG. 21C are a diagram of other interfaces of exiting an embedded window according to an embodiment of this application;
FIG. 22 is a schematic flowchart of window display according to an embodiment of this application; and
FIG. 23 is a diagram of a hardware structure of a chip according to an embodiment of this application.

### DESCRIPTION OF EMBODIMENTS

For ease of clearly describing technical solutions of embodiments of this application, some terms and technologies involved in embodiments of this application are briefly introduced below.
1. Launcher: A launcher may be understood as a desktop application (application, APP) and an entry to an application on an electronic device using an Android (Android) system, can manage applications, and can provide functions such as windows.
2. SystemUI: SystemUI may be referred to as a system user interface and runs in the Android system in a form of an application. SystemUI provides a basic display interface for the system, for example, a status bar at the top of a screen, a navigation bar at the bottom of the screen, a quick settings bar in a pull-down interface, a notification bar, a lock screen interface, a volume control dialog box, a screenshot display interface, and another interface.
3. Shortcut task card: A shortcut task card may be understood as a page, of a specific function of an application, displayed in a window. When switching, in the window, between function pages of a plurality of applications is supported, it may be said that switching, in the window, between a plurality of shortcut task cards is supported. The launcher may manage display of the shortcut task card, and detailed service content of the shortcut task card may be provided by SystemUI.

It should be noted that, the shortcut task card according to embodiments of this application is not limited to having a meaning the same as that of a card in a leftmost home screen or a main interface, but may be understood as a custom name for ease of description. In a possible implementation, the shortcut task card may also be referred to as any one of the following: a shortcut service card, a shortcut function card, a task card, a shortcut card, a card, a shortcut function page, a shortcut function interface, a function page, a function interface, and the like. This is not specifically limited in embodiments of this application.

### 4. Other terms

In embodiments of this application, terms such as "first" and "second" are used to distinguish between same items or similar items that have substantially same functions and purposes. For example, a first chip and a second chip are merely used for distinguishing between different chips, and are not intended to limit a sequence thereof. A person skilled in the art may understand that the terms such as "first" and "second" do not limit a quantity or an execution sequence, and the terms such as "first" and "second" do not indicate a definite difference.

It should be noted that in embodiments of this application, terms such as "example" or "for example" are used to represent giving an example, an illustration, or a description. Any embodiment or design scheme described as an "example" or with "for example" in this application should not be construed as being more preferred or more advantageous than another embodiment or design scheme. Precisely, use of "example", "for example", or the like is intended to present a relative concept in a specific manner.

In embodiments of this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects. "At least one of the following items (pieces)" or a similar expression thereof means any combination of these items, and includes a single item (piece) or any combination of a plurality of items (pieces). For example, at least one of a, b, or c may indicate a; b; c; a and b; a and c; b and c; or a, b, and c, where a, b, and c may be singular or plural.

### 5. Electronic device

An electronic device in embodiments of this application may include a handheld device, an in-vehicle device, or the like having an image processing function. For example, some electronic devices are a mobile phone (mobile phone), a tablet computer, a palmtop computer, a laptop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an in-vehicle device, a wearable device, a terminal device in a 5G network, a terminal device in a future evolved public land mobile network (public land mobile network, PLMN), and the like. This is not limited in embodiments of this application.

As an example but not a limitation, in embodiments of this application, the electronic device may alternatively be a wearable device. The wearable device may also be referred to as a wearable intelligent device, and is a collective term for wearable devices developed by intelligently designing daily wear based on a wearable technology, for example, glasses, gloves, a watch, clothes, and shoes. The wearable device is a portable device that can be directly worn on a human or integrated into clothes or an accessory that a user wears. The wearable device is not merely a hardware device, but is used to implement a powerful function through software support, data exchange, and cloud interaction. In a broad sense, wearable intelligent devices include full-featured and large-size devices that can implement all or partial functions without depending on smartphones, such as smart watches or smart glasses; and devices that focus on only one specific type of application function and need to work with other devices such as smartphones, such as various smart bands or smart accessories for monitoring physical signs.

In addition, in embodiments of this application, the electronic device may alternatively be a terminal device in an Internet of Things (Internet of Things, IoT) system. The IoT is an important part of future information technology development. A main technical feature of the IoT is to connect an object to a network by using a communication technology, to implement an intelligent network with a man-machine interconnection and an interconnection between objects.

In embodiments of this application, the electronic device may also be referred to as a terminal device, user equipment (user equipment, UE), a mobile station (mobile station, MS), a mobile terminal (mobile terminal, MT), an access terminal, a subscriber unit, a subscriber station, a mobile console, a mobile station, a remote station, a remote terminal, a mobile device, a user terminal, a terminal, a wireless communication device, a user agent, a user apparatus, or the like.

In embodiments of this application, the electronic device or each network device includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), such as a Linux operating system, a Unix operating system, an Android operating system, an iOS operating system, or a Windows operating system. The application layer includes applications such as a browser, contacts, word processing software, and instant messaging software.

In some implementations, for an application loaded on the electronic device, if a user wants to use a specific function of the application, the user needs to tap, on the electronic device, an icon of the application, and look for the function, level by level, in various levels of pages of the application after the application is started, to find and use the function. However, in the implementations, operations performed by the user for using the application is complicated, affecting user experience.

Alternatively, in some other implementations, the user may tap the electronic device to quickly open an application. A home page of the application is first displayed, and then a page of a specific function of the application is displayed in the application. However, in the implementations, one tap performed by the user can open a specific function of only one application, and a display process causes a change of pages of the application, affecting user experience. In addition, if the user wants to open a function of another application, the user needs to perform another operation, for example, another tap, or the user needs to open the another application and look for the function in a page of the application. Operations are complicated, affecting user experience.

In view of this, embodiments of this application provide a window display method. After receiving a preset operation of a user, an electronic device displays an independent window. The window may include a function page of a specific application, so that the user can use a function of the application conveniently. The window may further provide identifiers of one or more other functions of the application and/or identifiers of one or more functions of another application. In this way, the user can switch between different functions of different applications flexibly based on identifiers of various functions in the window.

The independent window may be understood as that the window is not a window in a specific application opened by the user, but may be an independent window provided by a system on the electronic device. The independent window may cover an upper part of a page, of any application, displayed on the electronic device, and entries to tasks of one or more applications may be embedded in the independent window. When a task in the independent window is executed, a new task may be created for an application corresponding to the task, so that execution of the task is independent of another task, that is already running, of the application. In this way, running of any application displayed on the electronic device is not interrupted when a task in the embedded window is triggered. In this way, invoking of the window does not affect a current user operation, improving user experience. For example, when the user is watching a video or playing a game by using the electronic device, if the user triggers the electronic device to display the window, the video and the game is not interrupted when the window is displayed.

The independent window may also be referred to as a window, an embedded window, a shortcut card pop-up window, a pop-up window, a card application window, a shortcut card window, a shortcut function window, a shortcut function pop-up window, or the like. This is not specifically limited in embodiments of this application.

To help better understand embodiments of this application, a structure of the electronic device according to embodiments of this application is described below.

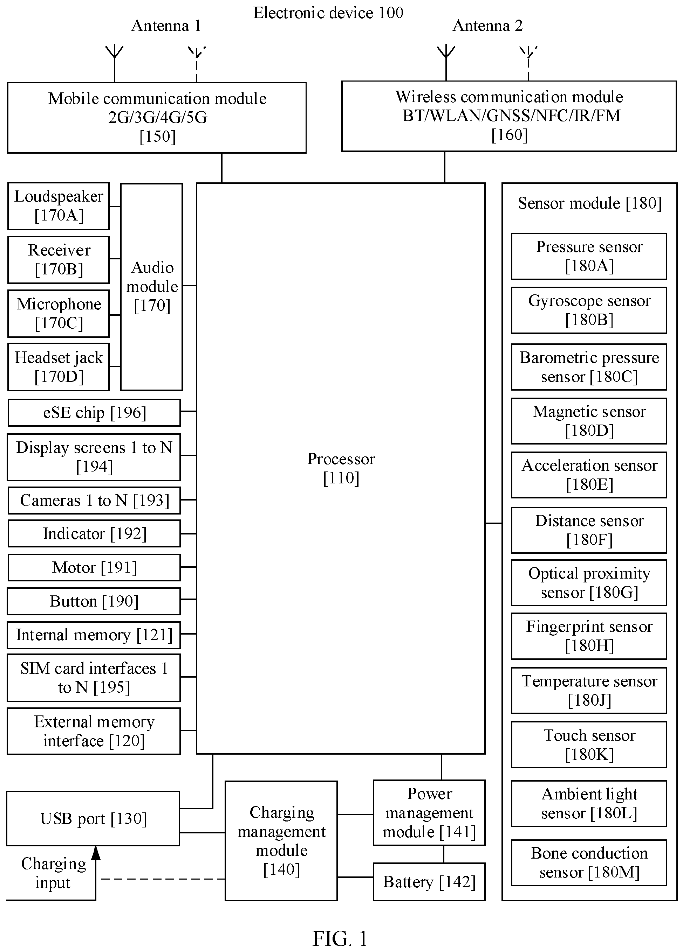

FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, some components may be combined, some components may be split, or there may be different component arrangements. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor may invoke the instructions or the data from the memory. This avoids repeated access, and reduces a waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

A wireless communication function of the electronic device 100 may be implemented by the antenna 1, the antenna 2, the mobile communication module 150, the wireless communication module 160, the modem processor, the baseband processor, and the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs that execute a program instruction to generate or change display information.

The display screen 194 is configured to display, for example, an image and a video. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include 1 or N display screens 194, where N is a positive integer greater than 1.

The pressure sensor 180A is configured to sense a pressure signal and may convert the pressure signal into an electrical signal. In some embodiments, the pressure sensor 180A may be disposed in the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When pressure is applied to the pressure sensor 180A, a capacitance between electrodes changes. The electronic device 100 determines intensity of the pressure based on the capacitance change. When a touch operation is performed on the display screen 194, the electronic device 100 detects intensity of the touch operation by using the pressure sensor 180A. The electronic device 100 may further calculate a touch position based on a detection signal of the pressure sensor 180A. In some embodiments, touch operations that are performed at a same touch position but have different touch operation intensity may correspond to different operation instructions.

The gyroscope sensor 180B may be configured to determine a motion posture of the electronic device 100. In some embodiments, an angular velocity of the electronic device 100 about three axes (that is, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 vibrates, calculates, based on the angle, a distance for which a lens module needs to compensate, and allows the lens to cancel the vibration of the electronic device 100 through reverse motion, to implement stabilization. The gyroscope sensor 180B may be further used in navigation or a motion-sensing game scenario.

The acceleration sensor 180E may detect accelerations of the electronic device 100 in all directions (usually in the three axes). When the electronic device 100 is stationary, a magnitude and a direction of gravity may be detected. The acceleration sensor 180E may be further configured to identify a posture of the terminal device, and is applied to applications such as landscape and portrait mode switching and a pedometer.

The touch sensor 180K is also referred to as a "touch device". The touch sensor 180K may be disposed in the display screen 194. The touch sensor 180K and the display screen 194 form a touch screen, also referred to as a "touchscreen". The touch sensor 180K is configured to detect a touch operation performed on or near the touch sensor. The touch sensor may transfer a detected touch operation to the application processor to determine a type of the touch event. A visual output related to the touch operation may be provided through the display screen 194. In some other embodiments, the touch sensor 180K may be alternatively disposed on a surface of the electronic device 100, and is located at a position different from that of the display screen 194.

A software system of the electronic device 100 may use a layered architecture, an event-driven architecture, a microkernel architecture, a microservice architecture, a cloud architecture, or the like. In embodiments of this application, a software structure of the electronic device 100 is described by using an Android system with a layered architecture as an example.

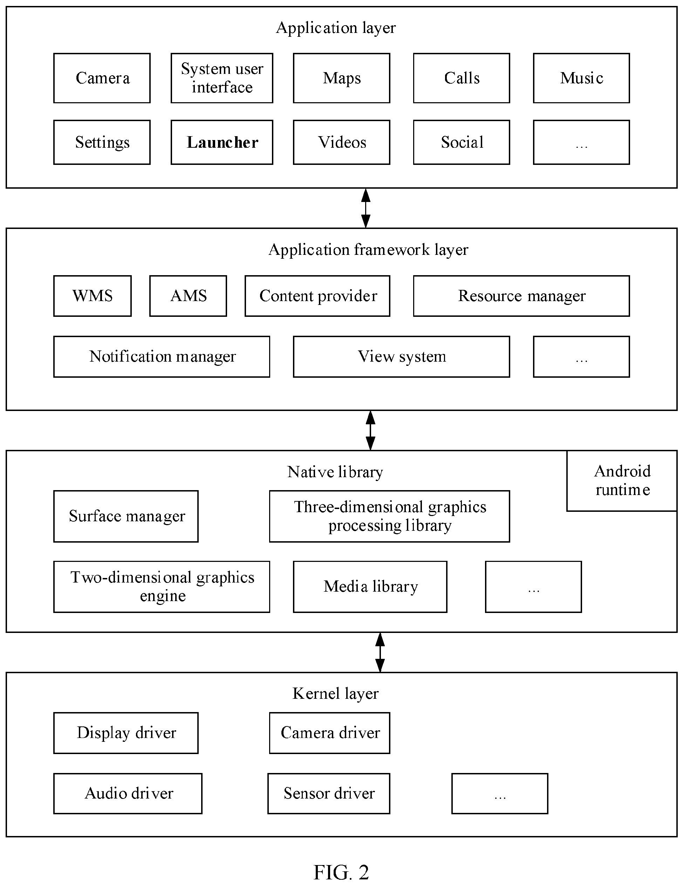

FIG. 2 is a block diagram of the software structure of the electronic device 100 according to an embodiment of this application.

In a layered architecture, software is divided into several layers, and each layer has a clear-cut role and function. The layers communicate with each other through a software interface. In some embodiments, the Android system is divided into four layers that are an application layer, an application framework layer, Android runtime (Android runtime) and a native library, and a kernel layer from top to bottom.

The application layer may include a series of application packages.

As shown in FIG. 2, an application package may include applications such as Camera, System user interface (SystemUI), Phone, Maps, Calls, Music, Settings, Launcher (launcher), Videos, and Social.

The application framework layer provides an application programming interface (application programming interface, API) and a programming framework for applications at the application layer. The application framework layer includes some predefined functions.

As shown in FIG. 2, the application framework layer may include a window manager service (window manager service, WMS), an activity manager service (activity manager service, AMS), a content provider, a resource manager, a view (view) system, a notification manager, and the like.

The window manager service is used to manage a window program. The window manager service may obtain a size of the display screen, and determine whether there is a status bar, whether the screen is locked, touched, or dragged, whether a screenshot is taken, and the like.

The AMS is used to manage a lifecycle of an application, start or kill a process of the application, schedule a task (task), and the like.

The content provider is used to store and obtain data, and enable the data to be accessed by an application. The data may include a video, an image, audio, outgoing and incoming calls, a browse history, a bookmark, contacts, and the like.

The view system includes visual controls, for example, a control for displaying text and a control for displaying an image. The view system may be used to construct an application. A display interface may include one or more views. For example, a display interface including an icon for message notification may include a text display view and an image display view. The view system in this embodiment of this application may include a view or a surface view.

The resource manager provides various resources for an application, for example, a localized string, an icon, an image, a layout file, and a video file.

The notification manager enables an application to display notification information in a status bar, and may be used to transfer a notification-type message. The notification information may automatically disappear after a short stay without user interaction. For example, the notification manager is used to notify download completion, provide a message reminder, and the like. The notification manager may alternatively provide a notification that appears, in a form of a graph or scroll bar text, in a status bar on the top of a system, for example, a notification of an application running in the background, or a notification that appears on a screen in a form of a dialog window. For example, text information is prompted for in the status bar, a prompt tone is produced, a terminal device vibrates, or an indicator light blinks.

The Android runtime includes a core library and a virtual machine. The Android runtime is responsible for scheduling and managing the Android system.

The core library includes two parts. One of the parts is a performance function that needs to be invoked in the Java language, and the other part is a core library of Android.

The application layer and the application framework layer run on the virtual machine. The virtual machine executes Java files at the application layer and the application framework layer as binary files. The virtual machine is configured to implement functions such as object life cycle management, stack management, thread management, safety and exception management, and garbage collection.

The native library may include a plurality of functional modules, for example, a surface manager (surface manager), media libraries (Media Libraries), a three-dimensional graphics processing library (for example, OpenGL ES), a 2D graphics engine (for example, SGL), and the like.

The surface manager is used to manage a display subsystem and provide fusion of 2D and 3D layers for a plurality of applications.

The media libraries support playback and recording of a plurality of commonly used audio and video formats, static image files, and the like. The media libraries may support a plurality of audio and video coding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

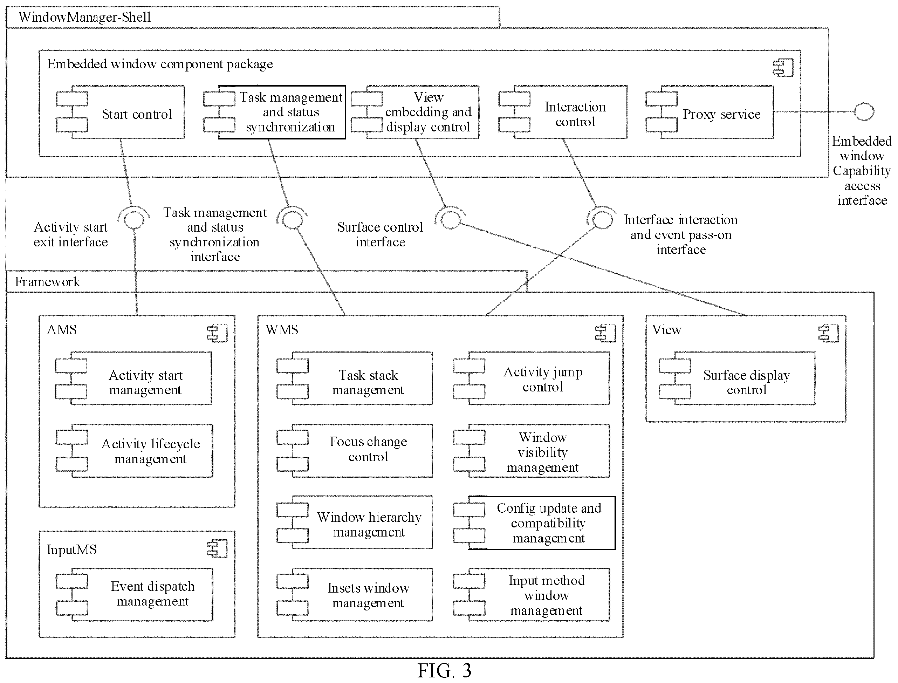

For example, with reference to FIG. 2, FIG. 3 shows some interfaces between the application layer and the application framework layer according to an embodiment of this application.

As shown in FIG. 3, the application layer may include an embedded window component package. The embedded window component package may be part of the launcher. The embedded window component package may interact with the AMS, the WMS, the view, and an input manager service (input manager service, inputMS) at the application framework layer.

For example, the embedded window component package may include a start control module, a task management and status synchronization module, a view embedding and display control module, an interaction control module, and a proxy service module.

The start control module may interact with the AMS based on an activity start exit interface, so that the AMS can implement activity start management and activity lifecycle management for the embedded window based on the activity start exit interface.

The task management and status synchronization module may interact with the WMS based on a task management and status synchronization interface, and the interaction control module may interact with the WMS based on an interface interaction and event pass-on interface, so that the WMS can implement, based on the task management and status synchronization interface and the interface interaction and event pass-on interface, one or more of the following items of management: task task stack management, activity jump control, focus change control, window visibility management, window hierarchy management, config update and compatibility management, insets window management, and input method window management.

The view embedding and display control module may interact with the view based on a surface control interface, so that the view can implement surface display control based on the surface control interface.

A proxy service may correspond to an embedded window capability access interface (also referred to as a task access interface).

The inputMS may be used to dispatch an event when a user trigger is received in the embedded window.

The electronic device can implement, based on the functional modules at the application layer and the application framework layer in FIG. 3, the embedded window with cross-task display. In this way, a current scenario that the user is in is not interrupted.

For example, when the electronic device receives the user trigger and needs to display the embedded window, the start control module may invoke, based on the activity start exit interface, the AMS to perform activity start management and activity lifecycle management for the embedded window. The task management and status synchronization module may invoke, based on the task management and status synchronization interface, the WMS to perform task task stack management to create a new task or a new stack. The interaction control module may invoke, based on the interface interaction and event pass-on interface, the WMS to perform activity jump control to obtain page content to be displayed in the embedded window from an application that a proxy service accesses. The view embedding and display control module may invoke, based on the surface control interface, a surface view converted from the to-be-displayed page content in the view, to display the embedded window. When the embedded window is displayed, the WMS may configure basic parameters for the embedded window based on the config update and compatibility management. The WMS may further manage, based on insets window management, a status bar (for example, a sign of Wi-Fi and a sign of an operator), a navigation bar (for example, a virtual key), and the like on a display screen except the embedded window, so that the status bar, the navigation bar, and the like do not affect display of the embedded window.

During display of the embedded window, a trigger operation may be further received in the embedded window to generate a trigger event. The inputMS may dispatch the event, and a corresponding module of the WMS responds to and process the event. For example, when an operation for switching a task is received in the embedded window, a focus change may be implemented through control performed based on focus change control of the WMS; when an operation for displaying an upper-level page or a lower-level page is received in the embedded window, a hierarchical change in the window may be implemented through control performed based on window hierarchy management of the WMS; when an input operation is received in the embedded window, input method management may be performed based on input method window management of the WMS; and when an operation for canceling display of the embedded window is received in the embedded window, display of the embedded window may be canceled through control performed based on window visibility management of the WMS.

In embodiments of this application, when the embedded window is displayed, the new task or the new stack is created, so that a running task in the embedded window is independent of a running task of an application. In this way, the task running in the application is not interrupted.

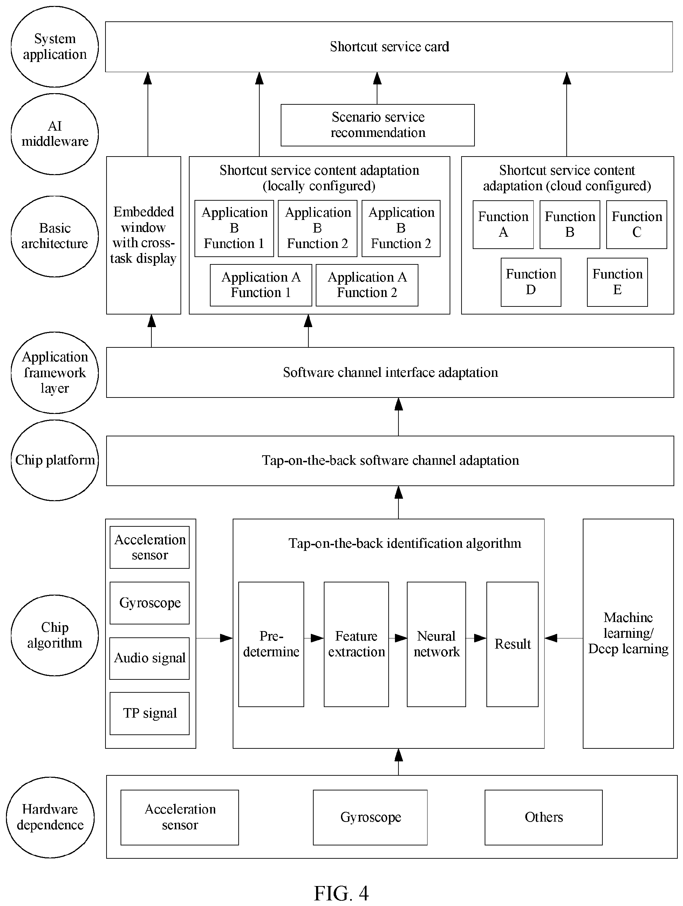

It can be understood that, when the window display method according to embodiments of this application is implemented, logic of software in the electronic device is needed, and some hardware in the electronic device is also needed. For example, FIG. 4 is a diagram of a software and hardware architecture for the method according to an embodiment of this application.

In a possible implementation, a system application, artificial intelligence (artificial intelligence, AI) middleware, and a basic architecture in FIG. 4 all may be applications running at the application layer. A chip platform and a chip algorithm may run at the kernel layer, or may run at the application framework layer. This is not specifically limited in embodiments of this application.

An example of working processes of software and hardware of the electronic device 100 are described below with reference to a scenario in which a user taps the back of a mobile phone to trigger implementation of the window display method according to embodiments of this application.

When the acceleration sensor and/or the gyroscope receives a tap operation, a corresponding hardware interrupt is sent to the kernel layer. The kernel layer processes the tap operation into a raw input event. The raw input event may include a value acquired by the acceleration sensor, a value acquired by the gyroscope, an audio signal, and/or a touch (touch panel, TP) signal. The raw input event is stored at the kernel layer. The chip algorithm may be used to identify, based on an algorithm for identifying a tap on the back of the mobile phone, whether the raw input event is a tap event on the back of the mobile phone. The tap may mean a plurality of consecutive taps or a single tap. The algorithm for identifying a tap on the back of a mobile phone may include pre-determining of information in the raw input event, feature extraction, neural network identification, and result output. The value acquired by the acceleration sensor and the value acquired by the gyroscope that are in the raw input event may be core features, and the audio signal and the TP signal may be auxiliary features. A neural network may be a model that is obtained by training based on machine learning or deep learning and that is used for identifying a tap on the back of a mobile phone. After the tap event on the back of the mobile phone is identified, the chip platform may perform software channel interface adaption at the application framework layer based on tap-on-the-back software channel adaption. The application framework layer may encapsulate an event on a software channel side into an interface that a system application can invoke, and the application layer may invoke the interface encapsulated by the application framework layer to start an embedded pop-up window. Content to be displayed in the embedded pop-up window may include function pages that are of one or more applications and that are configured by the user on the mobile phone locally, and/or function pages that are of one or more applications and that are configured in the cloud. In a possible implementation, the AI middleware may identify a scenario that the user is in. The scenario may be related to use habits of the user, time that the user is at, a position of the user, a profession of the user, and/or the like. Further, the AI middleware may determine, based on the scenario that the user is in, a shortcut task card displayed in the embedded window from the to-be-displayed content, and the terminal device may display the shortcut task card.

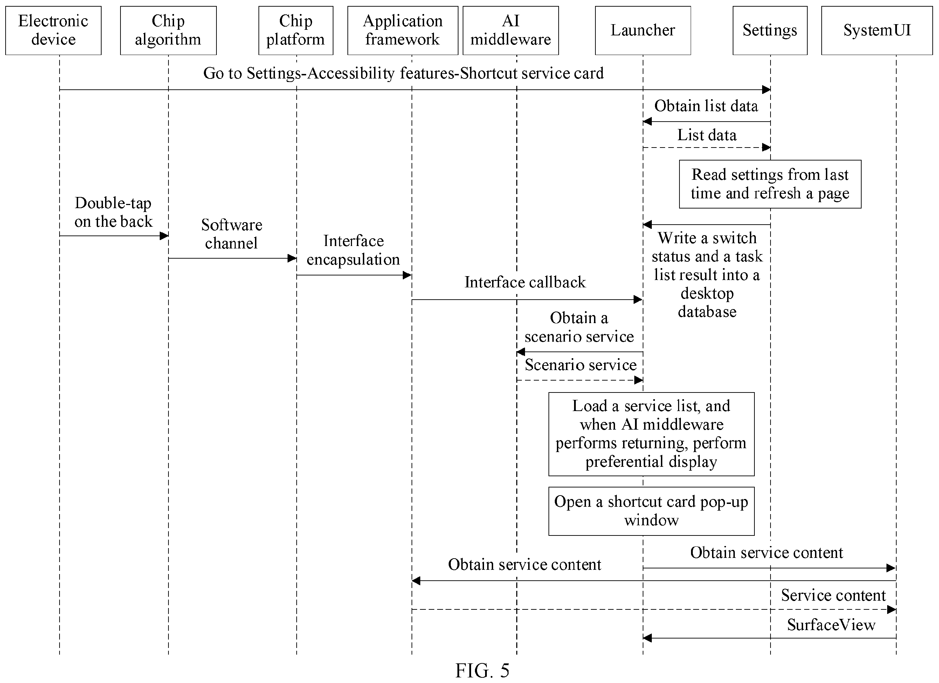

Corresponding to FIG. 4, FIG. 5 is a schematic flowchart of interaction between modules according to an embodiment of this application.

The implementation of the window display method according to embodiments of this application may include a setting phase and a usage phase. The setting phase may mean a phase for setting a shortcut task card in the window for subsequent window display. The usage phase may mean a phase for displaying the window after the electronic device receives a user trigger.

For example, as shown in FIG. 5, in the setting phase, the electronic device may provide accessibility features in a settings application. The accessibility features may provide a switch for controlling a shortcut task card function to be enabled or disabled, and an identifier of a settable shortcut task card. When the switch for controlling the shortcut task card function to be enabled or disabled is on, the electronic device may receive, in a page of the accessibility features, identifiers of one or more shortcut task cards selected by the user, and/or identifiers of one or more shortcut task cards recommended by the cloud. In this case, the settings application may obtain an identifier of a new shortcut task card set this time, and the settings application may further obtain an identifier of a shortcut task card set at a previous time from a database of a desktop application, to obtain a new task list result including the identifier of the new shortcut task card set this time and the identifier of the shortcut task card set at the previous time. It can be understood that, the database of the desktop application may include the identifier of the shortcut task card set at the previous time, or may not include the identifier of the shortcut task card set at the previous time. The task list result may also be referred to as a task list, a service list result, a service list, or the like. This is not specifically limited in embodiments of this application.

The settings application may further write a status of the switch and the new task list result into the database of the desktop application to update the database of the desktop application.

In the usage phase, when the electronic device receives a double-tap operation on the back, the electronic device may process the operation into a double-tap-on-the-back event, and transfer the double-tap-on-the-back event to the chip platform through a software channel of the chip algorithm. The application framework layer may perform interface encapsulation for the double-tap-on-the-back event on the chip platform. The desktop application performs an interface callback on an interface encapsulated by the application framework layer, and the desktop application loads the task list result in the database of the desktop application and obtains a scenario service from the AI middleware. When the AI returns a current scenario service, the desktop application may determine a shortcut task card corresponding to the current scenario service from the task list result with reference to the current scenario service, and preferentially display the shortcut task card corresponding to the current scenario service. For example, the current scenario service indicates that the user is at a subway entrance. In this case, the preferentially displayed shortcut task card may be a shortcut task card corresponding to a passenger QR code function.

When the shortcut task card is displayed, the desktop application may open a window including the shortcut task card and obtain service content of the shortcut task card from SystemUI. SystemUI may further obtain the service content from the application framework layer and return a surface view to the desktop application. The desktop application may control, based on the surface view, display of the shortcut task card.

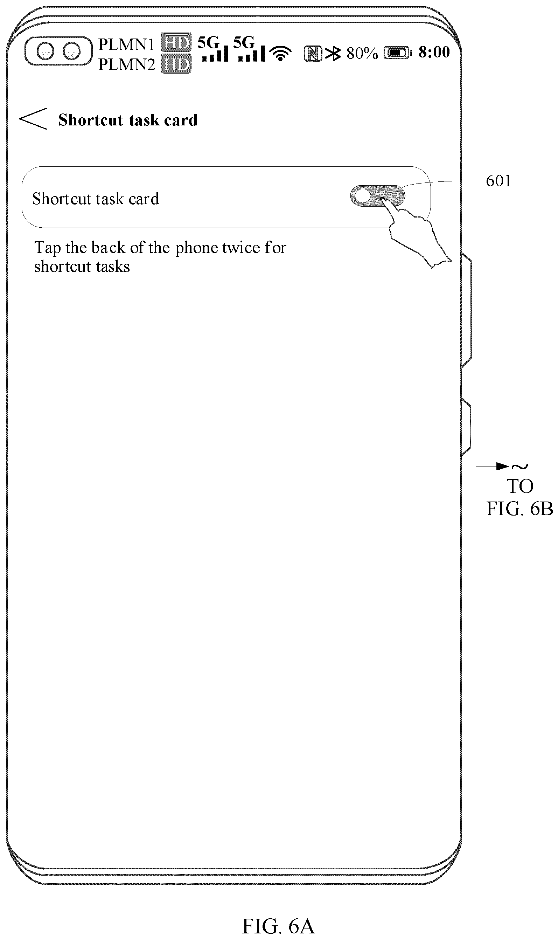

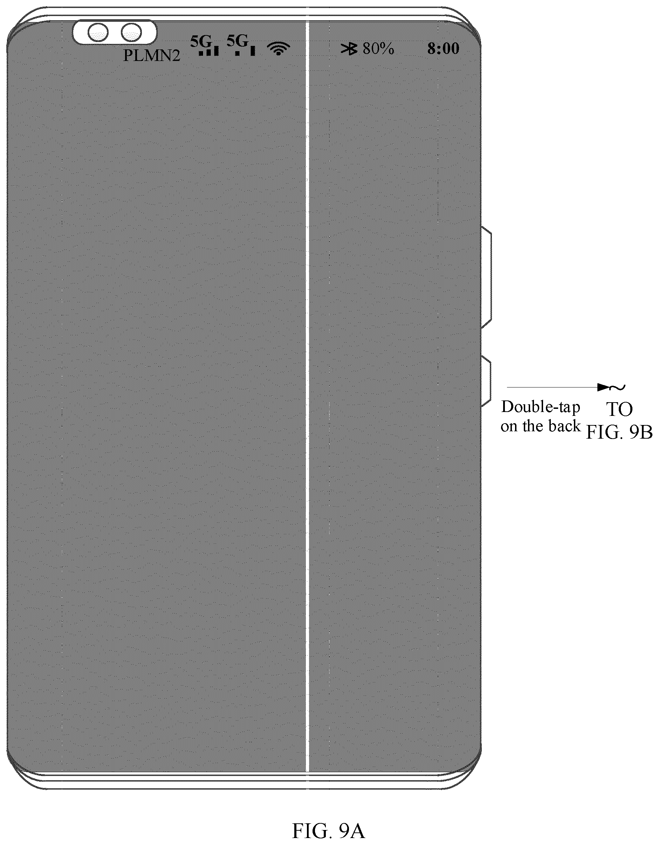

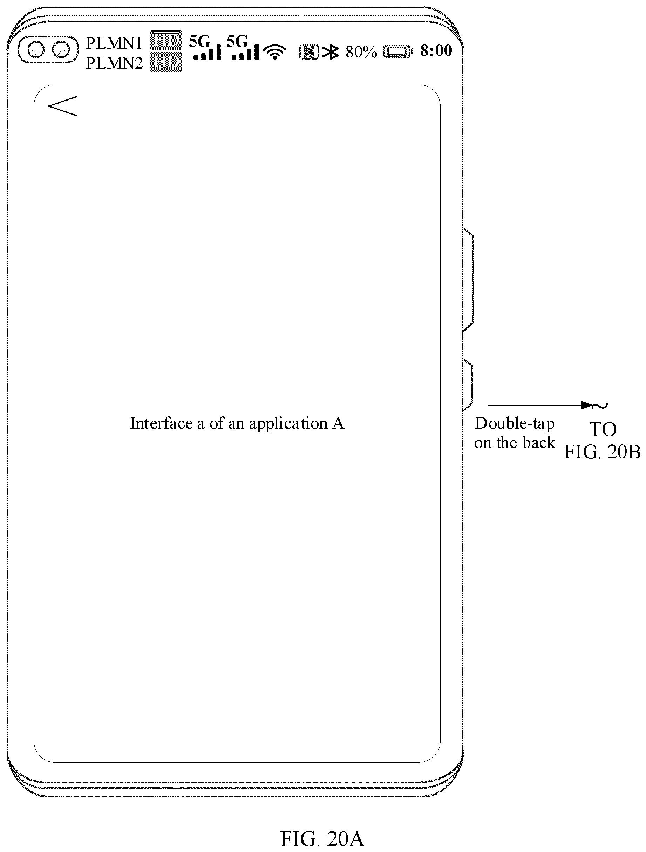

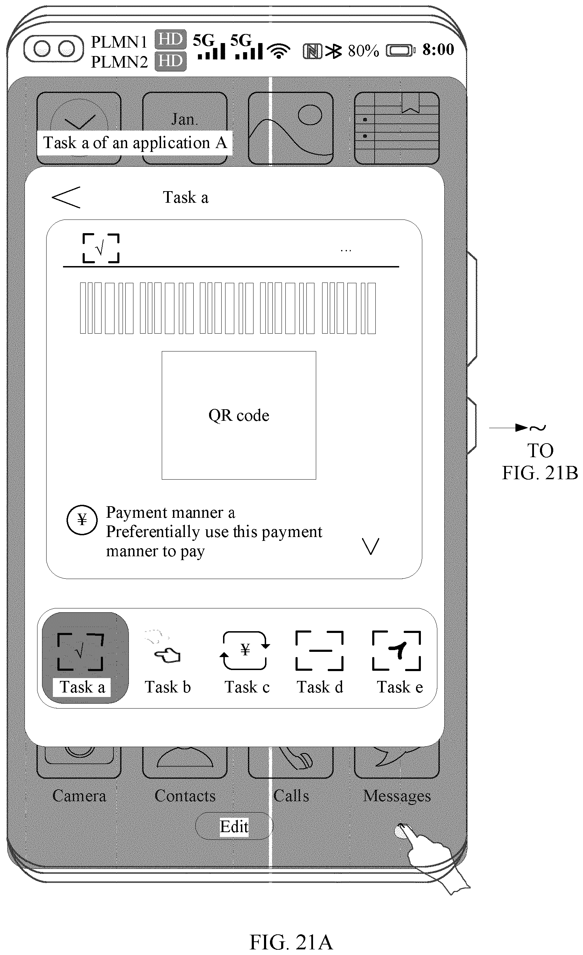

Internal implementation in which the user taps the back of the electronic device two consecutive times and the window including the shortcut task card pops up on the electronic device is described above based on internal implementation logic of the electronic device according to FIG. 3 to FIG. 5. Possible interface interaction during window display according to embodiments of this application is described below in detail with reference to a user interface. Subsequent user interface diagrams are described separately by using examples with division into a shortcut task card setting phase, a shortcut task card usage phase, and a shortcut task card closing phase. The shortcut task card setting phase may correspond to FIG. 6A to FIG. 6F to FIG. 8A to FIG. 8D, the shortcut task card usage phase may correspond to FIG. 9A to FIG. 9D to FIG. 19A to FIG. 19D, and the shortcut task card closing phase may correspond to FIG. 20A to FIG. 20D and FIG. 21A to FIG. 21C.

It can be understood that, the foregoing double-tap operation on the back according to FIG. 3 to FIG. 5 may be replaced with any one of the following: an N-time-tap operation on the back, an N-time-tap operation on a function key (for example, a volume key, an on-off key, or a power key), an N-time-tap operation on any area (for example, the front, the back, a side) of the electronic device, a particular gesture operation, a particular swipe touch operation, voice control, and the like. A specific operation for triggering display of the embedded window is not limited in embodiments of this application, provided that the embedded window can be displayed quickly based on one operation. N is a natural number. For ease of description, all subsequent user interfaces are described by using an example in which display of an embedded window on a mobile phone is triggered by a double-tap on the back, and corresponding prompt information is also provided with an example of a double-tap on the back to implement a shortcut task. The example does not constitute a limitation on an operation for triggering display of the embedded window and the prompt information.

As shown in FIG. 6A, the electronic device may provide an interface for setting a shortcut function card, and the interface may include a main switch 601 for enabling or disabling a shortcut task card. A status of the main switch 601 may be on or off. In the interface shown in FIG. 6A, the main switch 601 is off, and prompt information "Tap the back of the phone twice for shortcut tasks" may be displayed in the interface shown in FIG. 6A, while a shortcut task or the like that can be added may not be displayed.

The interface shown in FIG. 6A may be displayed in at least the following manners: In a first manner, in the settings application, triggers in a sequence of "Settings-Accessibility features-Shortcut start and gestures" are performed to display the interface for setting the shortcut function card shown in FIG. 6A. In a second manner, when the embedded window is displayed, a shortcut control for displaying the interface for setting the shortcut function card shown in FIG. 6A is provided in the embedded window, and an identifier of the shortcut control may be a setting identifier, an editing identifier, or the like. Display of the embedded window is described subsequently with reference to the figures. Details are not provided herein. Clearly, the electronic device may alternatively provide another manner of displaying the interface for setting the shortcut function card shown in FIG. 6A. This is not specifically limited in embodiments of this application.

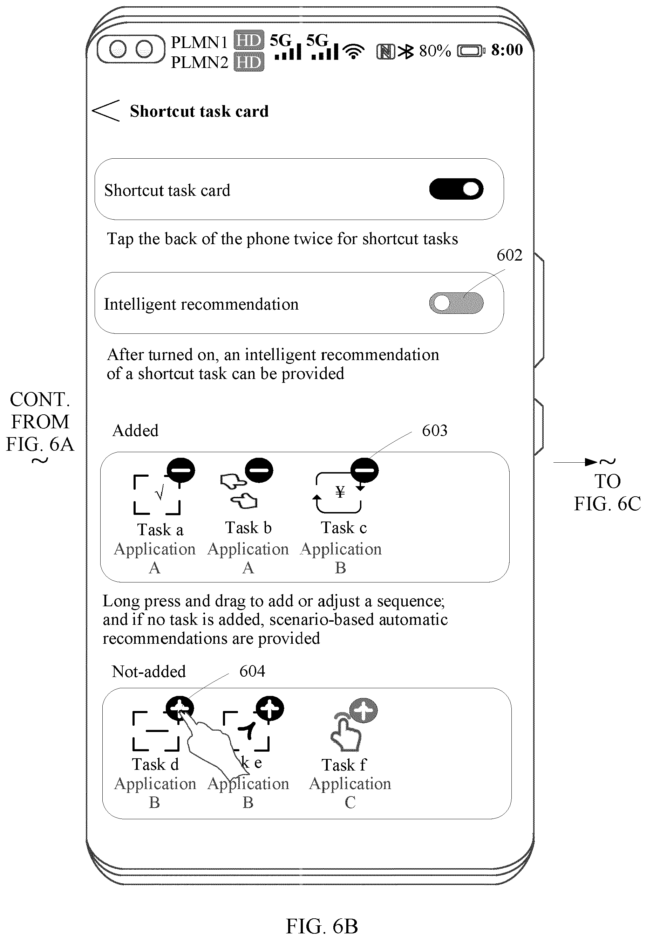

After a trigger operation for turning on the main switch 601 is received in the interface shown in FIG. 6A, an interface shown in FIG. 6B may be displayed.

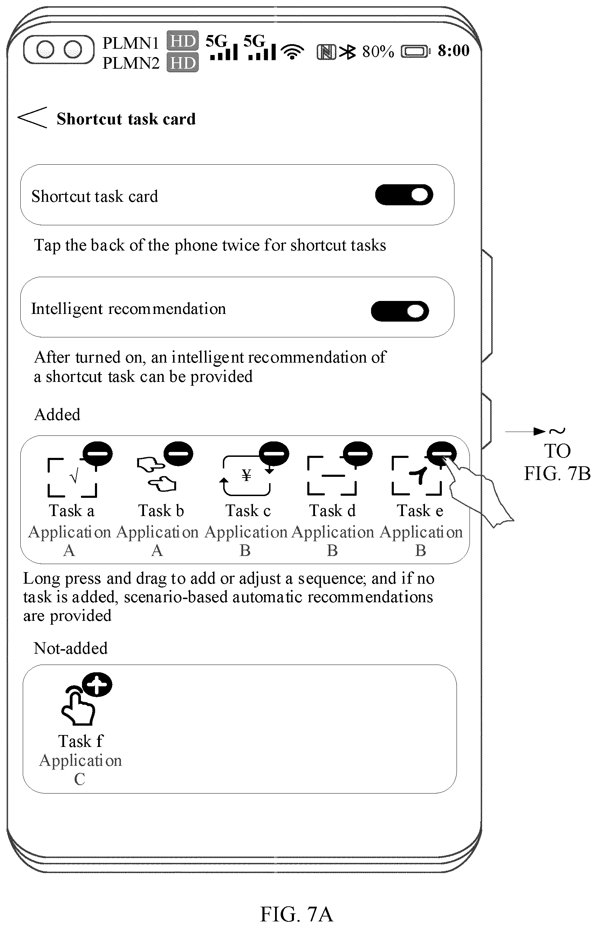

In the interface shown in FIG. 6B, the main switch is on. Optionally, there may further be an intelligent recommendation switch 602 below the main switch. A status of the intelligent recommendation switch 602 may be on or off. When the intelligent recommendation switch 602 is on, the electronic device can be supported in recommending, based on the scenario that the user is in, a shortcut task card to be displayed in the embedded window to the user. When the intelligent recommendation switch 602 is off, the electronic device is not supported in recommending, based on the scenario that the user is in, a shortcut task card to be displayed in the embedded window to the user, and the shortcut task card to be displayed in the embedded window is default or customized by the user. In the interface shown in FIG. 6B, an example in which the intelligent recommendation switch 602 is off is used for description. A case in which the intelligent recommendation switch 602 is on is described in detail in FIG. 7A to FIG. 7F. Details are not provided herein.

The interface shown in FIG. 6B further includes an Added bar and a Not-added bar. The Added bar includes identifiers of M shortcut task cards subsequently displayed in the embedded pop-up window, and the Not-added bar includes identifiers of L shortcut task cards that are provided by the electronic device and that can be displayed when the embedded window pops up. Values of M and L are not specifically limited in embodiments of this application. An identifier of a shortcut task card in the Not-added bar may be moved to the Added bar based on an adding operation of the user, and an identifier of a shortcut task card in the Added bar may be moved to the Not-added bar based on a removing operation of the user.

For example, as shown in FIG. 6B, an identifier of any shortcut task card in the Added bar may include an icon of the shortcut task, a name of the shortcut task, a name of an application corresponding to the shortcut task, and a remove control 603 for removing the shortcut task. The shortcut task may be understood as any function, task, or service of the application. For example, the shortcut task may include a receipt and payment service and a scanning service of each payment application, a transportation service of each transportation application, a punch-in service of each office application, and the like. In some implementations, any function supporting a scheme or a shortcut may be used as a shortcut task.

An identifier of any shortcut task card in the Not-added bar may include an icon of the shortcut task, a name of the shortcut task, a name of an application corresponding to the shortcut task, and an add control 604 for adding the shortcut task.

It should be noted that, the identifiers of the shortcut task cards in the Added bar and the Not-added bar may belong to tasks of one application, or may belong to tasks of a plurality of applications. The identifier of the shortcut task card in the Added bar belongs to a task of an application already installed on the electronic device. The identifier of the shortcut task card in the Not-added bar may belong to a task of an application already installed on the electronic device, or may belong to a task of an application not installed on the electronic device. For example, a task a and a task b belong to an application A; a task c, a task d, and a task e belong to an application B; and a task f belongs to an application C. The application A and the application B are applications already installed on the electronic device, and the application C is an application not installed on the electronic device. An identifier of a shortcut task card corresponding to the application C that is not installed may be different, in colors, sizes, and the like, from those of the application A and the application B that are already installed.

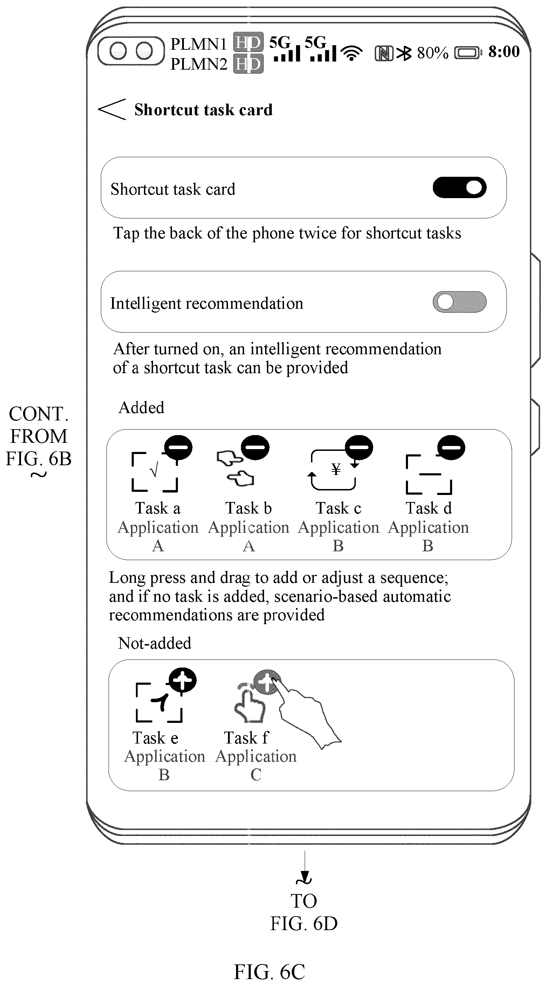

When an add control for the task d in the Not-added bar shown in FIG. 6B receives a user trigger, an interface shown in FIG. 6C may be displayed. As shown in FIG. 6C, the task d is added to the Added bar, and the corresponding task d in the Not-added bar disappears.

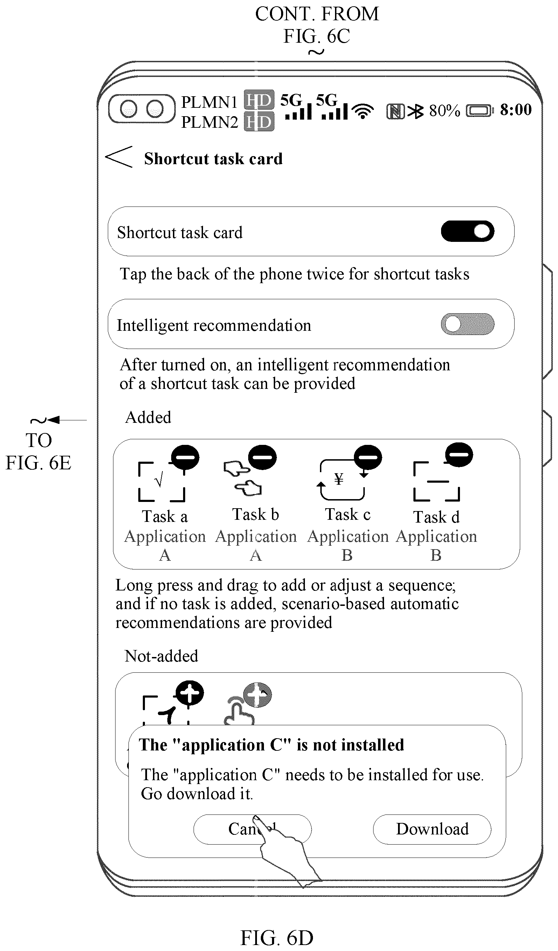

When an add control for the task f in the Not-added bar shown in FIG. 6C receives a user trigger, as the application C to which the task f belongs is not installed on the electronic device, an interface shown in FIG. 6D may be displayed. As shown in FIG. 6D, a prompt box may be displayed to notify that the application C is not installed and the application C needs to be installed before use, and a control for downloading and a control for canceling download are provided. When the electronic device receives a trigger on the control for downloading, the electronic device may jump to a download interface. After the application C is downloaded and installed, the interface shown in FIG. 6C may be displayed again. Implementation of downloading, installing, and jumping are not limited in embodiments of this application.

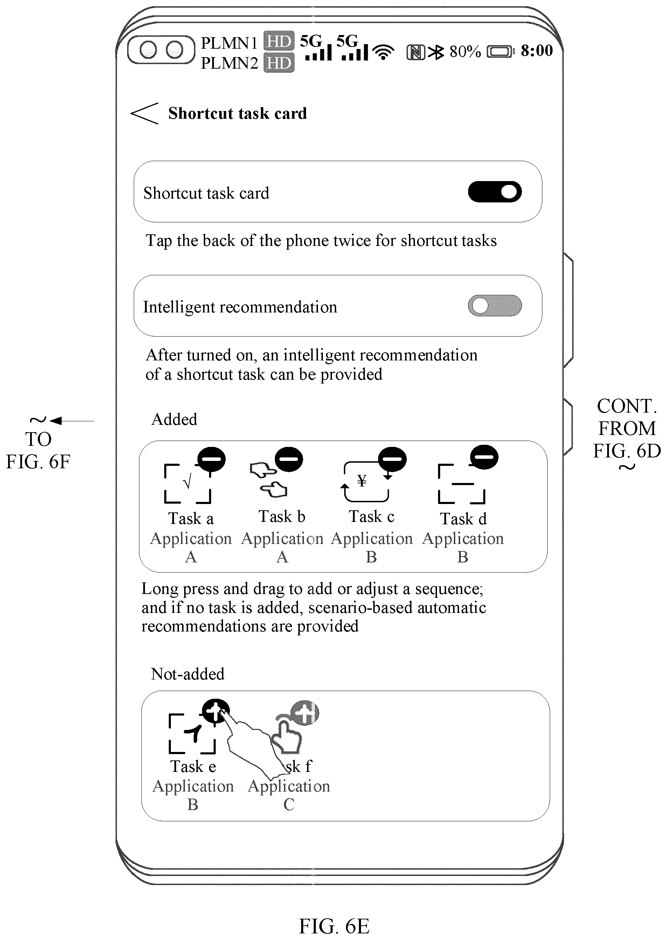

When the electronic device receives a trigger on the control for canceling download, an interface shown in FIG. 6E may be displayed. The interface may be the same as that shown in FIG. 6C. Details are not provided again.

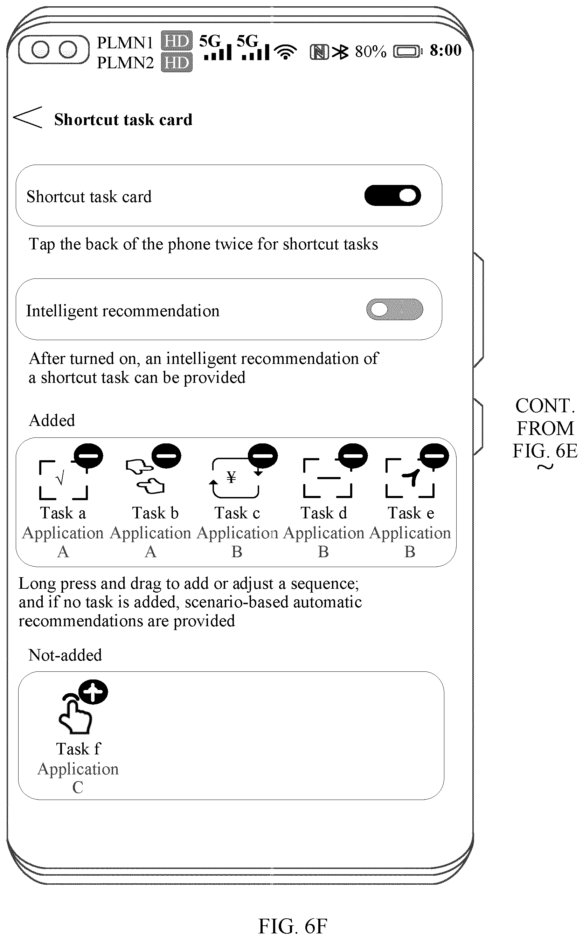

The user may keep adding content to the Added bar, until an upper limit of tasks allowed to be added to the Added bar is reached. For example, when an add control for the task e in the Not-added bar shown in FIG. 6E receives a user trigger, an interface shown in FIG. 6F may be displayed. As shown in FIG. 6F, the task e is added to the Added bar, and the corresponding task e in the Not-added bar disappears. A quantity of tasks in the Added bar reaches the upper limit.

It can be understood that, in any interface shown in (b) to FIG. 6E, if a user operation of turning off the main switch is received, the interface shown in FIG. 6A may be displayed again. In any interface shown in (b) to FIG. 6E, if an operation on a remove control corresponding to any task in the Added bar is received, the task may be removed from the Added bar and displayed in the Not-added bar (not shown in the figure).

Related interfaces showing user custom shortcut task cards are described in FIG. 6A to FIG. 6F by using the example in which the intelligent recommendation switch is off. Related interfaces of setting a shortcut task card are described in FIG. 7A to FIG. 7F by using an example in which the intelligent recommendation switch is on.

For example, when the intelligent recommendation switch shown in FIG. 6F receives a user trigger, an interface shown in FIG. 7A may be displayed. As shown in FIG. 7A, the intelligent recommendation switch is on, and there are the five custom tasks added by the user in the Added bar. In this case, when the user subsequently triggers display of the embedded window, as intelligent recommendation is enabled, the first task displayed in the embedded window on the electronic device may not be the first task a among the five custom tasks added by the user. A shortcut task card may be displayed by selecting, based on the scenario that the user is in, a task best matching the scenario from the five tasks and any task that can be provided by an application installed on the electronic device.

To be specific, when the intelligent recommendation switch is on, the electronic device may select, based on a scenario that the device is in, one or more tasks matching the scenario that the device is in from tasks corresponding to all services that can be provided the application installed on the electronic device, and display the task in the shortcut task card.

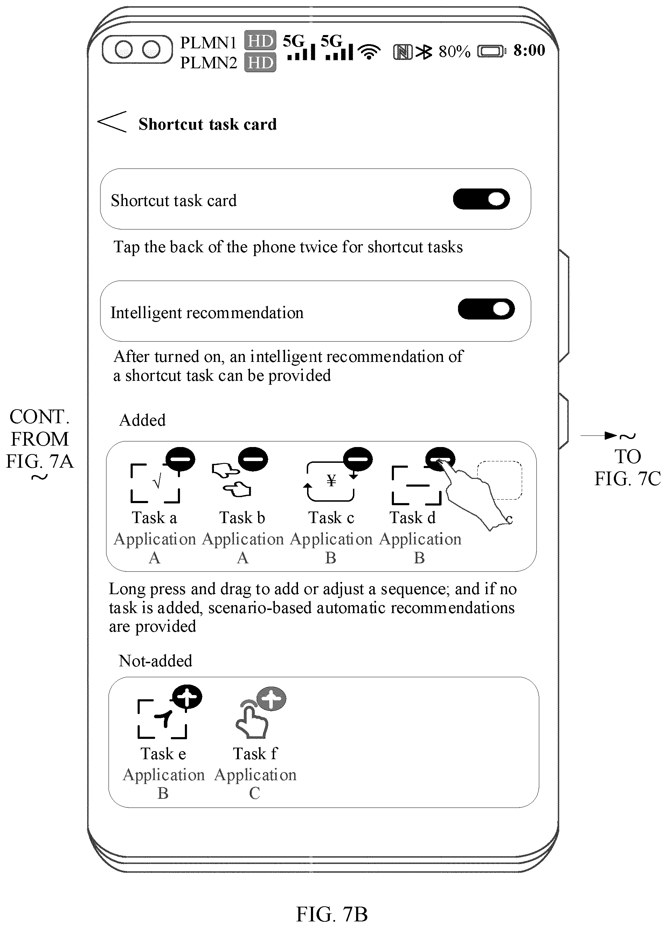

When a remove control for the task e shown in FIG. 7A receives a user trigger, an interface shown in FIG. 7B may be displayed. As shown in FIG. 7B, the task e is displayed in the Not-added bar, and the corresponding task e in the Added bar disappears. In addition, an identifier in a dashed box for prompting for a recommendation is displayed at a position, behind a task, in the Added bar. In this case, when the user subsequently triggers display of the embedded window and the electronic device displays the first task in the embedded window, a shortcut task card may be displayed by selecting, based on the scenario that the user is in, the task best matching the scenario from any task that can be provided by the application already installed on the electronic device.

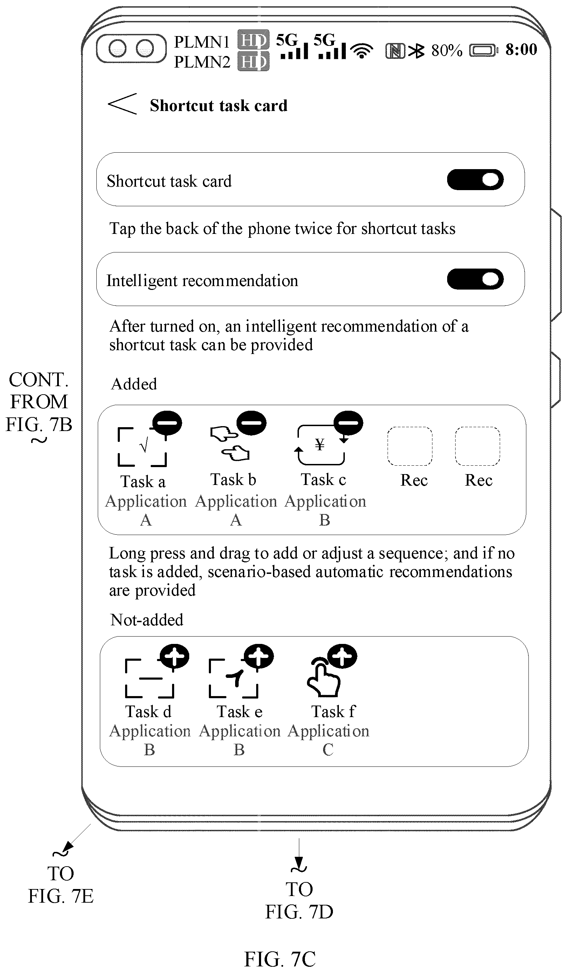

When a remove control for the task d shown in FIG. 7B receives a user trigger, an interface shown in FIG. 7C may be displayed. As shown in FIG. 7C, the task d is displayed in the Not-added bar, and the corresponding task d in the Added bar disappears. In addition, two identifiers in dashed boxes for prompting for recommendations are displayed at a position, behind a task, in the Added bar. In this case, when the user subsequently triggers display of the embedded window and the electronic device displays the first task in the embedded window, a shortcut task card may be displayed by selecting, based on the scenario that the user is in, the task best matching the scenario from any task that can be provided by the application already installed on the electronic device. A specific recommendation method is described in the subsequent shortcut task card usage phase. Details are not provided herein.

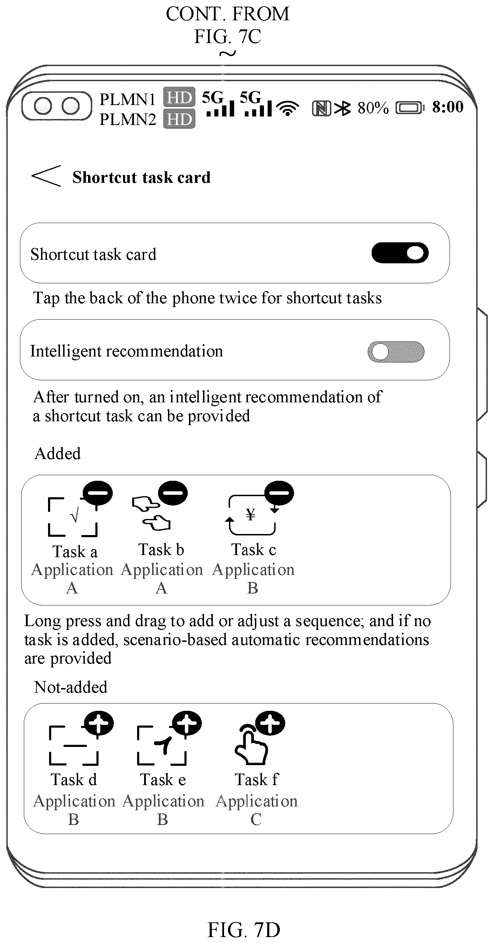

It can be understood that, the user may turn off the intelligent recommendation switch at any time. For example, when the intelligent recommendation switch receives a user trigger as shown in FIG. 7C, an interface shown in FIG. 7D may be displayed. The intelligent recommendation switch is off, and an identifier in a dashed box for prompting for a recommendation is not displayed in the Added bar.

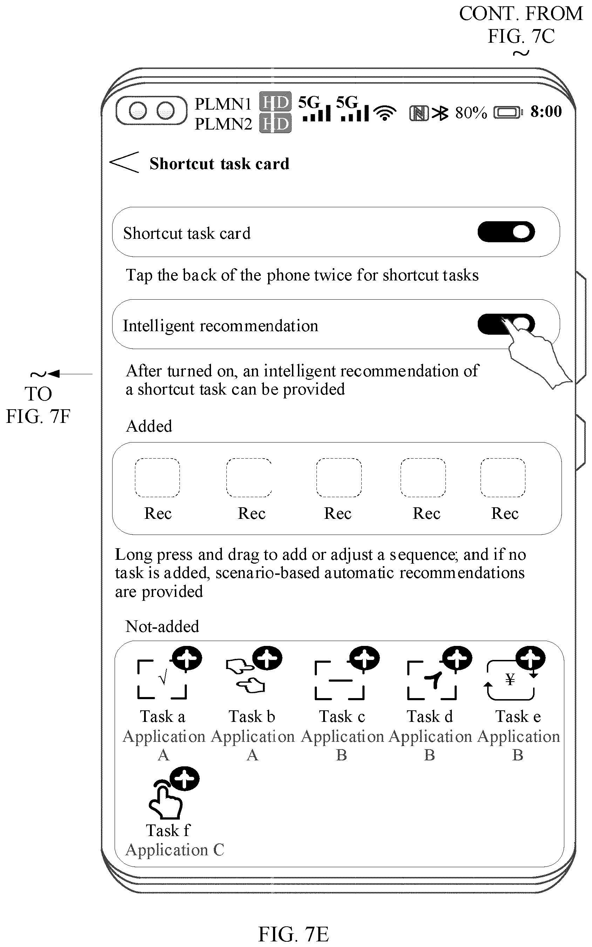

The user may keep removing a task from the Added bar. For example, based on the interface shown in FIG. 7C, the electronic device may keep receiving a removing operation of the user and remove all tasks from the Added bar, to display an interface shown in FIG. 7E. Only identifiers in dashed boxes for prompting for recommendations are displayed in the Added bar. In a possible implementation, the electronic device may provide, in any interface in FIG. 7A to FIG. 7F, a control (not shown in the figure) for removing all tasks from the Added bar at once, to achieve convenient task removal from the Added bar.

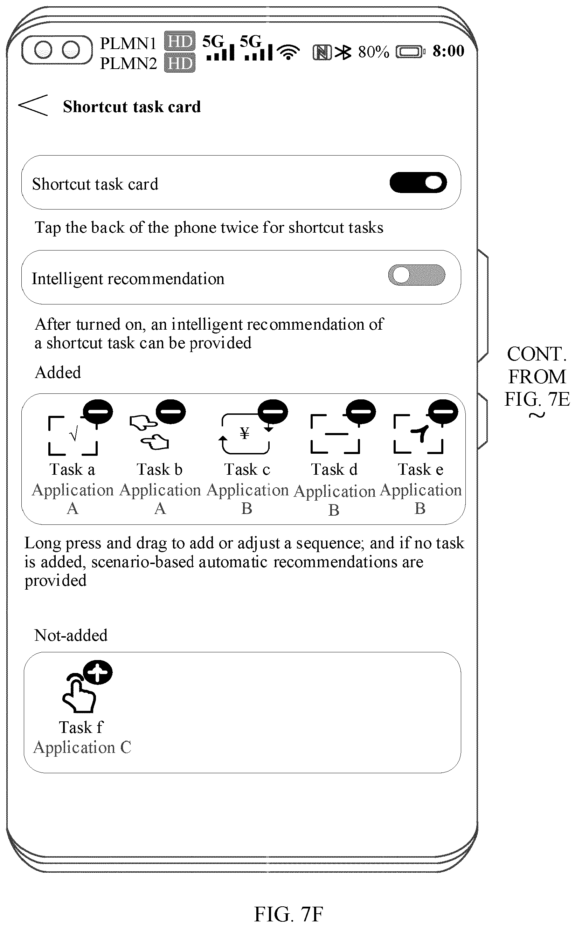

When the intelligent recommendation switch shown in FIG. 7E receives a user trigger, an interface shown in FIG. 7F may be displayed. Five default tasks may be automatically filled in the Added bar, and the five default tasks are applications already installed on the electronic device.

In FIG. 6A to FIG. 6F and FIG. 7A to FIG. 7F, the main switch, the intelligent recommendation switch, and the Added bar may each have some characteristics. For example, the main switch may be on or off by default, and the electronic device may memorize a user operation. When an interface including the main switch is displayed next time, a status of the main switch is a user-set status memorized from last time. For example, the intelligent recommendation switch may be on or off by default, and the electronic device may memorize a user operation. When an interface including the intelligent recommendation switch is displayed next time, a status of the intelligent recommendation switch is a user-set status memorized from last time. The Added bar may support long pressing and dragging for adjusting a task sequence.

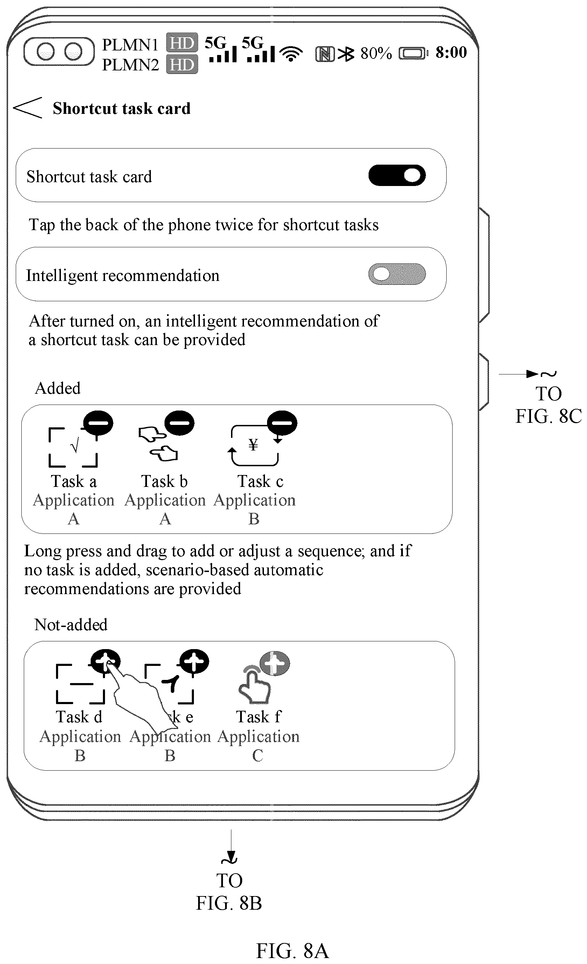

For example, FIG. 8A to FIG. 8D are a diagram of interfaces for adjusting a task sequence in the Added bar.

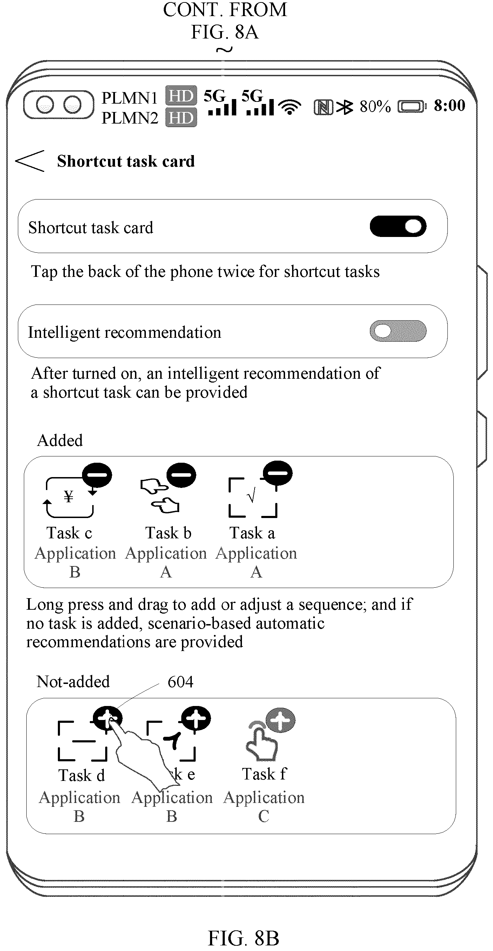

In an interface shown in FIG. 8A, the intelligent recommendation switch is off, and an identifier in a dashed box for prompting for a recommendation is not displayed in the Added bar. When a user operation of long pressing and moving toward a position of the task c is received on an icon of the task a, an interface shown in FIG. 8B may be displayed. As shown in FIG. 8B, positions of the task a and the task c in the Added bar have changed. In this way, when the user subsequently triggers display of the embedded window, a shortcut task card corresponding to a task at the first position in the Added bar is first displayed by default.

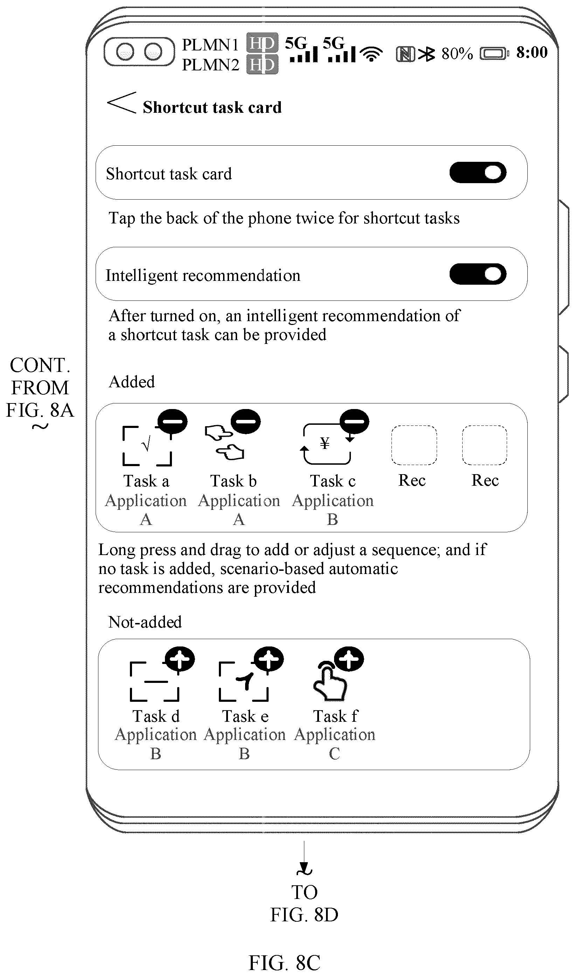

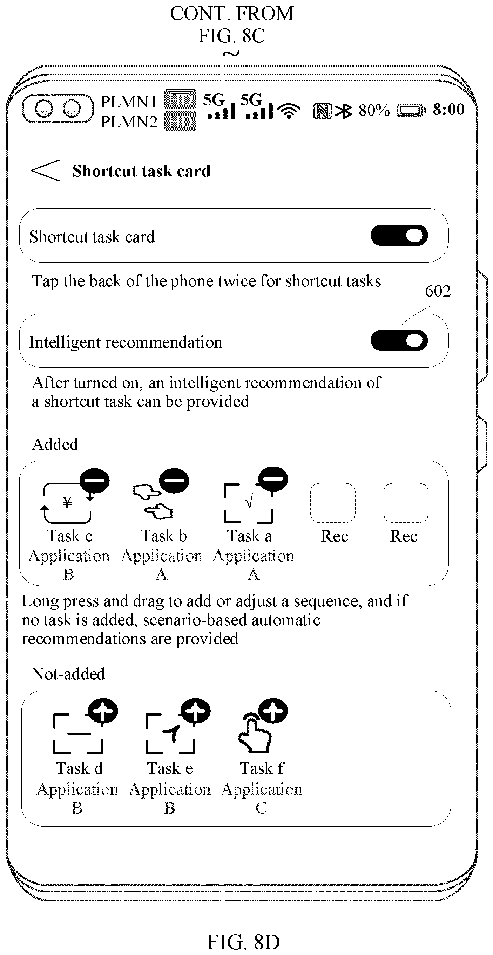

In the interface shown in FIG. 8A, if the intelligent recommendation switch receives a user trigger, an interface as shown in FIG. 8C may be displayed. The intelligent recommendation switch is on, and an identifier in a dashed box for prompting for a recommendation is displayed in the Added bar. When a user operation of long pressing and moving toward a position of the task c is received on the icon of the task a in the interface shown in FIG. 8C, an interface shown in FIG. 8D may be displayed. As shown in FIG. 8B, the positions of the task a and the task c in the Added bar have changed, and a position of the identifier in the dashed box for prompting for a recommendation remains unchanged. In this way, when the user subsequently triggers display of the embedded window, a shortcut task card corresponding to a task at the first position in the Added bar may be first displayed, or a recommended shortcut task card corresponding to the scenario that the user is in may be displayed.

It can be understood that, any interface showing the Added bar in FIG. 6A to FIG. 6F and FIG. 7A to FIG. 7F can support adjustment of a task in the Added bar, similar to the descriptions of FIG. 8A to FIG. 8D. Details are not provided again.

FIG. 6A to FIG. 6F to FIG. 8A to FIG. 8D show examples of interfaces possibly related to the shortcut task card setting phase. Examples of possibly related interfaces when the electronic device displays a shortcut task card is displayed in the embedded window based on a user trigger are described below.

When the user triggers display of the embedded window, the electronic device may be in different states. For example, the electronic device is in a screen-off (or an always-on-display) state, the electronic device is in a screen-on and lock-screen state, the electronic device displays a home screen, or the electronic device displays any interface of any application. Manners of implementing shortcut display of the electronic device in different states may be different. FIG. 9A to FIG. 9D to FIG. 14A to FIG. 14C respectively show several possible manners of triggering display of the embedded window.

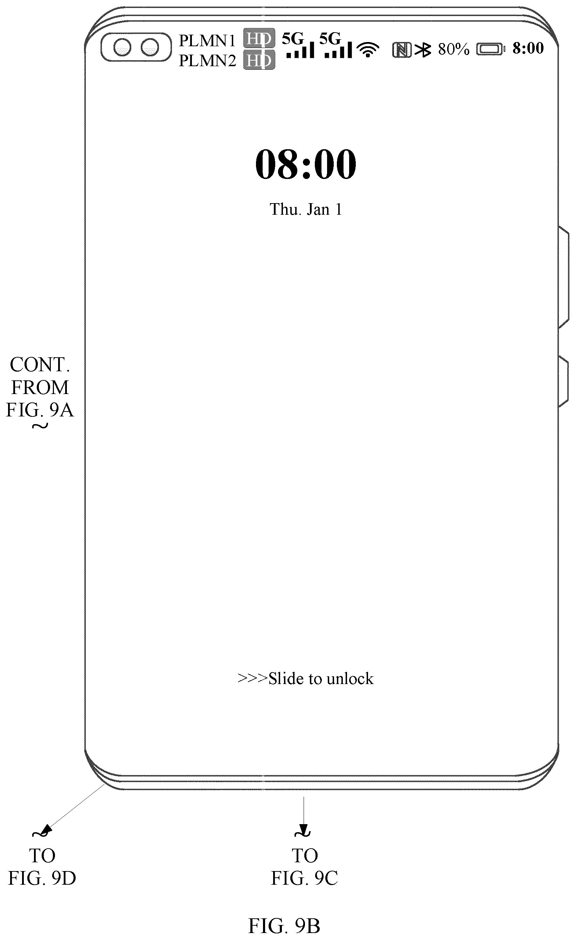

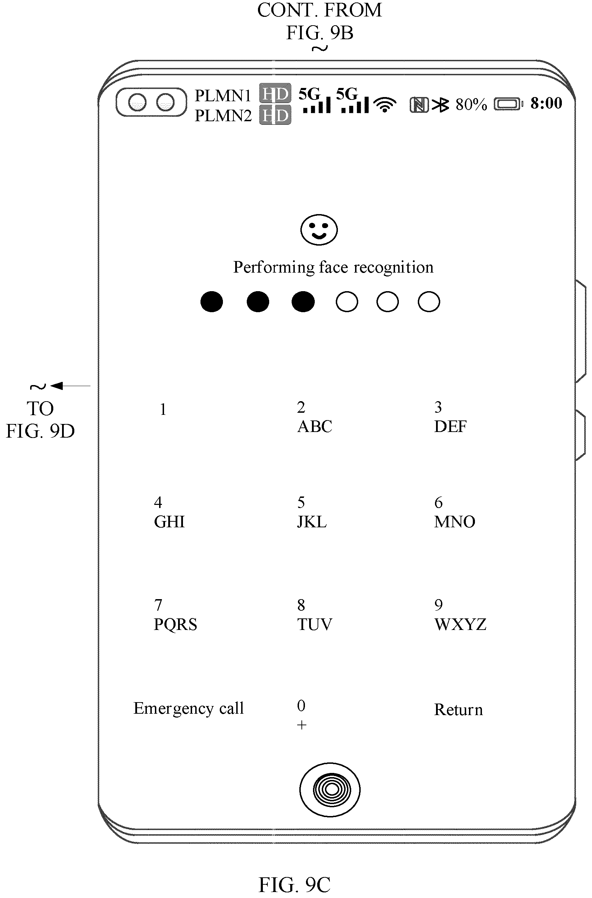

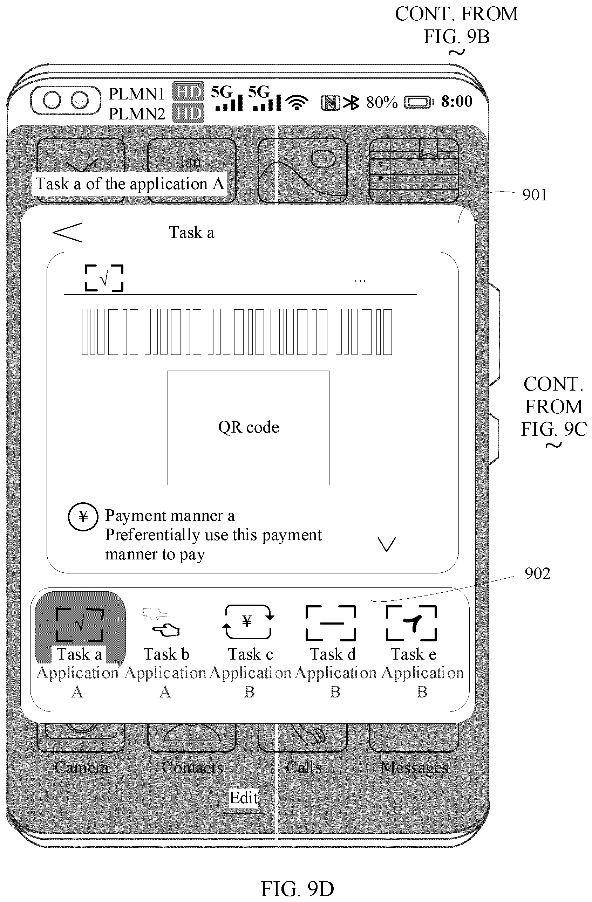

FIG. 9A to FIG. 9D are a diagram of interfaces from screen-off to display of the embedded window on the electronic device. As shown in FIG. 9A, the electronic device is in a screen-off state. When the electronic device receives a double-tap operation on the back, the electronic device may light up the screen and display an interface shown in FIG. 9B. Then, there may be two possible implementations: In an implementation 1, a password is not set on the electronic device, or the electronic device recognizes a human face that can unlock the device, and in this case, the electronic device may jump to an interface shown in FIG. 9D from the interface shown in FIG. 9B. In an implementation 2, the electronic device needs to be unlocked with a password input by the user, and in this case, the electronic device may first jump to an unlocking interface shown in FIG. 9C from the interface shown in FIG. 9B, and the embedded window that is scaled down (for example, to 90%) may be displayed in a lower layer of the unlocking interface. After a correct password input is received in the unlocking interface shown in FIG. 9C, the interface shown in FIG. 9D may be displayed, and the embedded window is displayed.

The interface shown in FIG. 9D may be understood as an interface of the embedded window. The embedded window may float over another application on the electronic device, the embedded window may have a specific transparency, and the embedded window may include a detail display area 901 and a taskbar 902.

A shortcut task card of one task may be displayed in the detail display area 901, and content of the shortcut task card may be a detail page of the task. Identifiers of a plurality of tasks may be displayed in the taskbar 902, and the identifiers may include icons, text, and/or the like. A sorting sequence of the identifiers of the plurality of tasks may be the same as or different from the foregoing sorting sequence in the Added bar. The task displayed in the detail display area 901 is one of the tasks in the taskbar 902. An identifier of the task displayed in the detail display area 901 is different from an identifier of another task in the taskbar 902 in colors, shapes, sizes, selected signs, and the like.

The embedded window shown in FIG. 9D may further include an edit control. The interface shown in FIG. 6A to FIG. 6F for setting a shortcut task card may be displayed when the user taps the edit control. Details are not provided herein again.

In a possible implementation, if no user operation is received in the interface shown in FIG. 9D after the interface has been displayed for a period of time, the embedded window stops to be displayed, and the electronic device displays the screen-off state again. In this way, power consumption caused by a false trigger for display of the embedded window can be reduced.

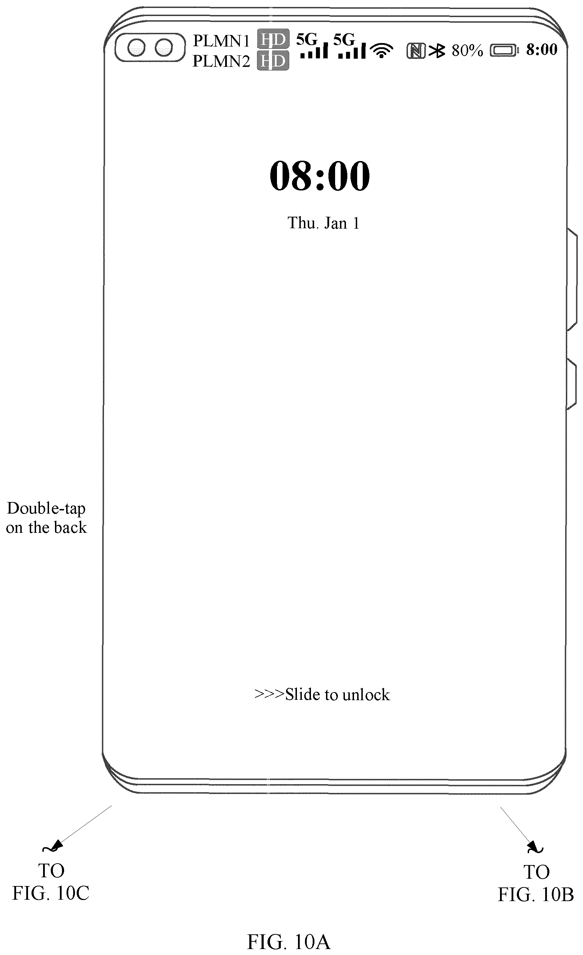

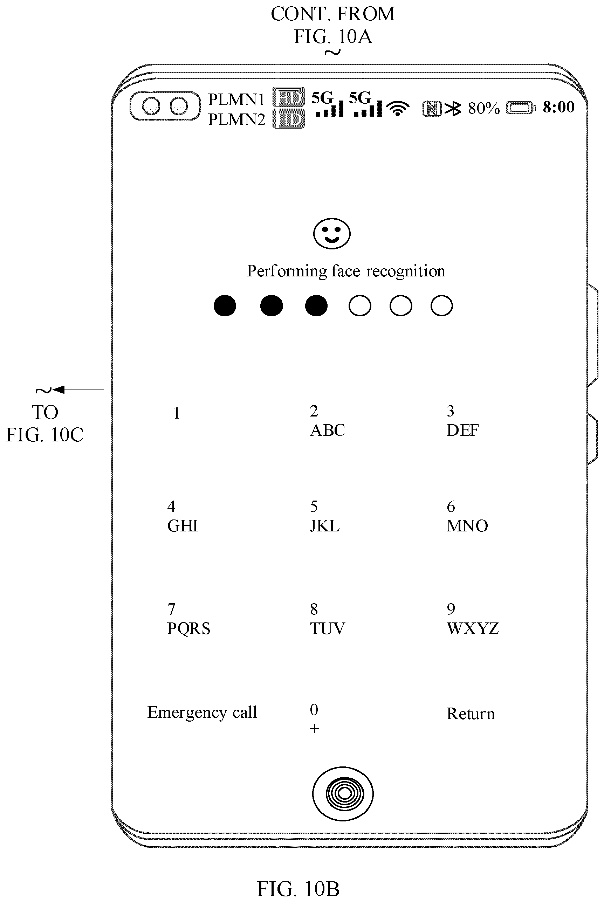

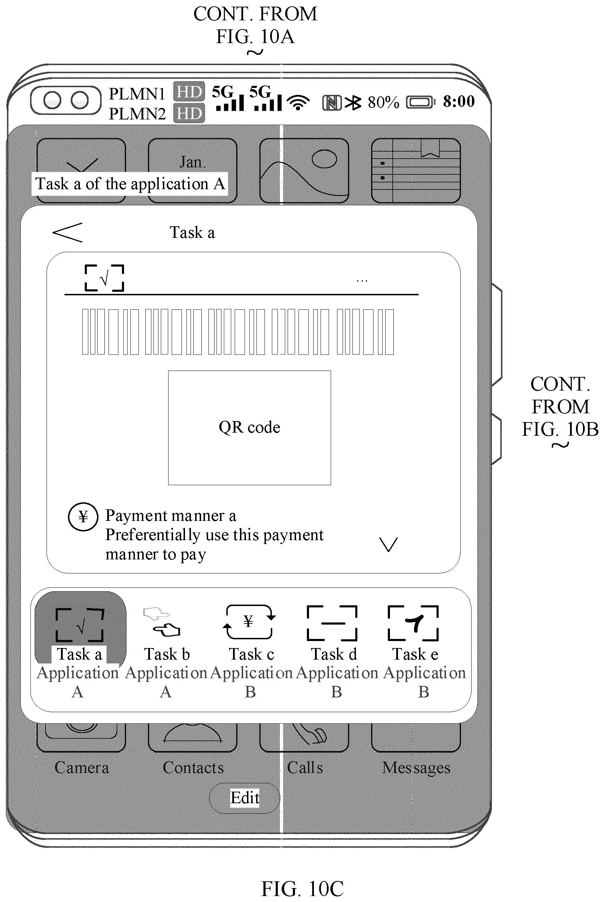

FIG. 10A to FIG. 10C are a diagram of interfaces from a lock screen interface to display of the embedded window on the electronic device. As shown in FIG. 10A, the electronic device is in a screen-on state and displays a lock screen interface. When the electronic device receives a double-tap operation on the back, the electronic device may have two possible implementations: In an implementation 1, a password is not set on the electronic device, or the electronic device recognizes a human face that can unlock the device, and in this case, the electronic device may jump to an interface shown in FIG. 10C from an interface shown in FIG. 10A. In an implementation 2, the electronic device needs to be unlocked with a password input by the user, and in this case, the electronic device may first jump to an interface shown in FIG. 10B from the interface shown in FIG. 10A. After a correct password input is received in the interface shown in FIG. 10B, the interface shown in FIG. 10C may be displayed. In a possible implementation, if no user operation is received in the interface shown in FIG. 10C after the interface has been displayed for a period of time, the embedded window stops to be displayed with an exit, and the electronic device displays the lock screen interface again. In this way, power consumption caused by a false trigger for display of the embedded window can be reduced.

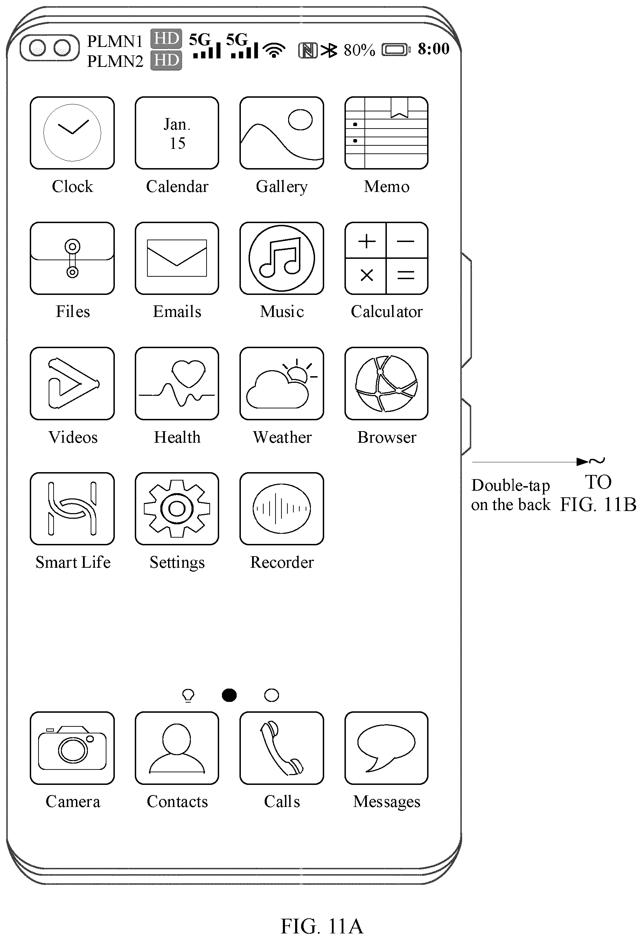

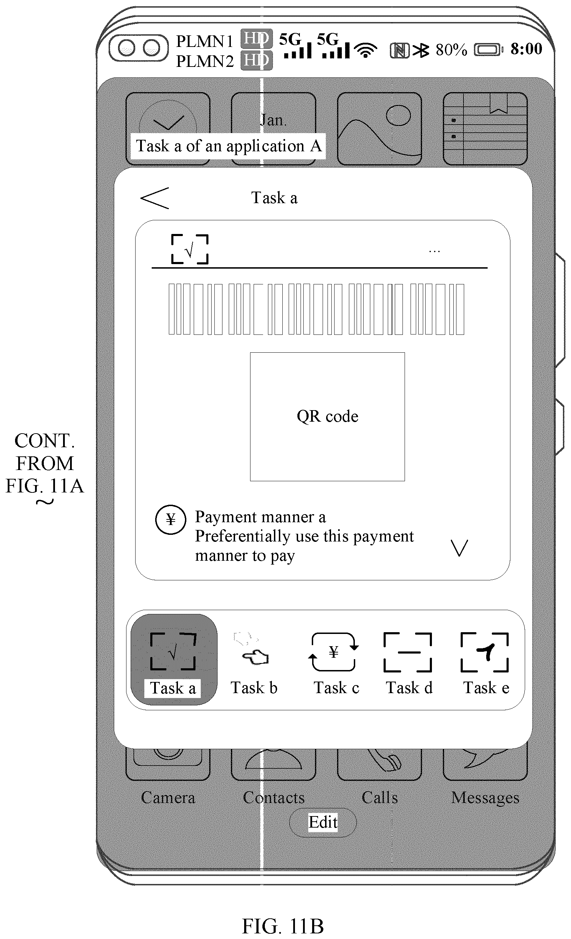

FIG. 11A and FIG. 11B are a diagram of interfaces from a home screen to display of the embedded window on the electronic device. As shown in FIG. 11A, the electronic device displays the home screen. When the electronic device receives a double-tap operation on the back, the electronic device may jump to an interface shown in FIG. 11B from the interface shown in FIG. 11A. In a possible implementation, if no user operation is received in the interface shown in FIG. 11B after the interface has been displayed for a period of time, the embedded window stops to be displayed with an exit, and the electronic device displays the home screen again.

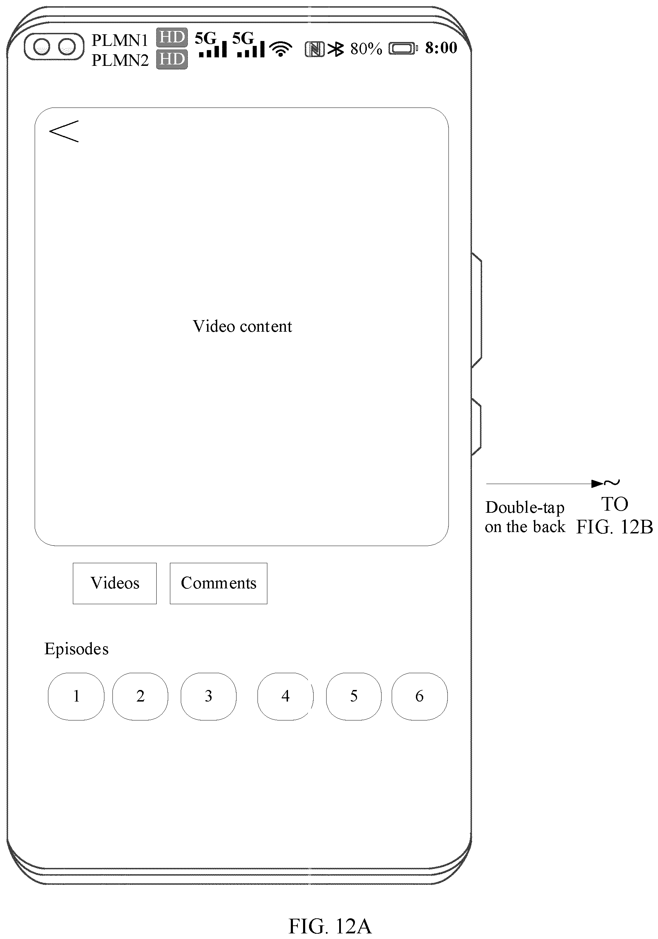

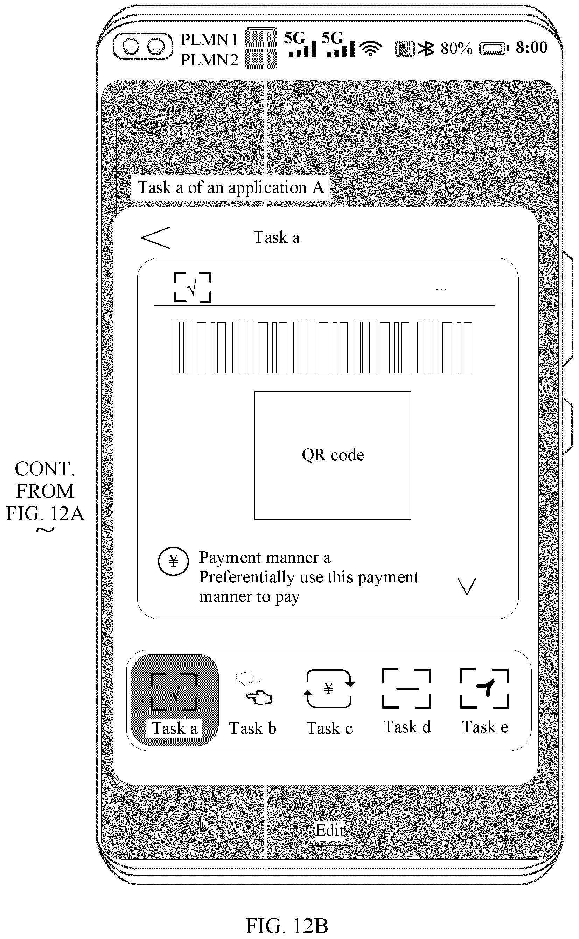

FIG. 12A and FIG. 12B are a diagram of interfaces from an interface of a video application to display of the embedded window on the electronic device. As shown in FIG. 12A, the electronic device displays the interface of the video application. When the electronic device receives a double-tap operation on the back, the electronic device may jump to an interface shown in FIG. 12B from an interface shown in FIG. 12A. When the electronic device displays the interface shown in FIG. 12B, the video application may not be interrupted. After an exit from the embedded window, the electronic device keeps displaying a video that is being played, to achieve continuous play in the video application.

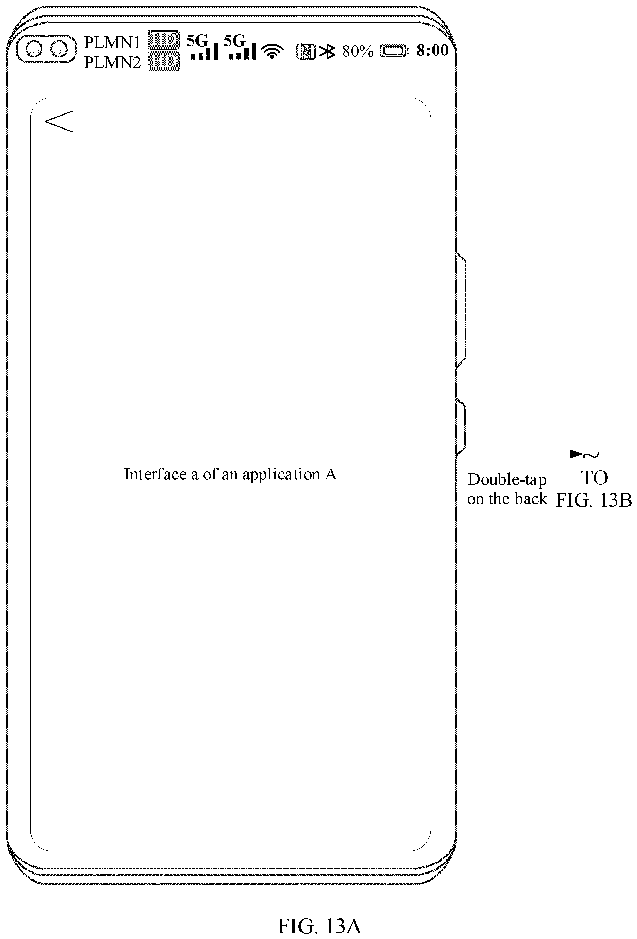

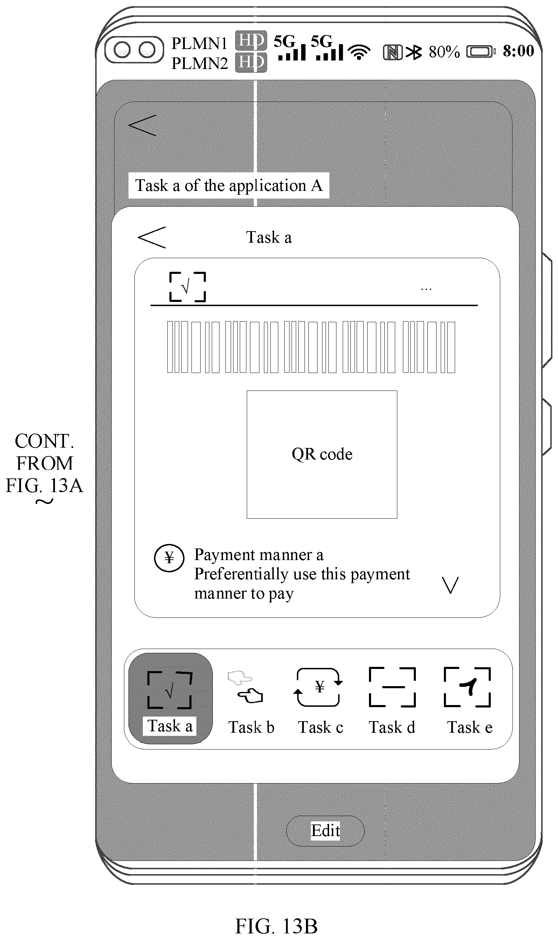

FIG. 13A and FIG. 13B are a diagram of interfaces from an interface a of an application A to display of the embedded window on the electronic device. As shown in FIG. 13A, the electronic device displays the interface a of the application A. When the electronic device receives a double-tap operation on the back, the electronic device may jump to an interface shown in FIG. 13B from an interface shown in FIG. 13A, and another page corresponding to a task a of the application A may be further displayed in the embedded window shown in FIG. 13B. After an exit from the embedded window, the electronic device keeps displaying the interface a of the application A without affecting running of the application A. In other words, the embedded window according to embodiments of this application is independent of the application A and does not interrupt running of the application A.

It should be noted that, the embedded windows in five interfaces, that is, the interface shown in FIG. 9D, the interface shown in FIG. 10C, the interface shown in FIG. 11B, the interface shown in FIG. 12B, and the interface shown in FIG. 13B described above all have same content. A difference lies in that interfaces covered by the embedded windows are respective interfaces displayed before the embedded windows are displayed. Therefore, for the content of the embedded windows in the five interfaces, refer to each other. Details are not provided again.

It can be understood that, when the electronic device starts the embedded window, there may be a cold start or failed loading. In this case, after the embedded window is started, content of a shortcut task card may not be normally displayed, and a cold start interface or a loading interface may be further displayed in the detail display area before the content of a shortcut task card is normally displayed.

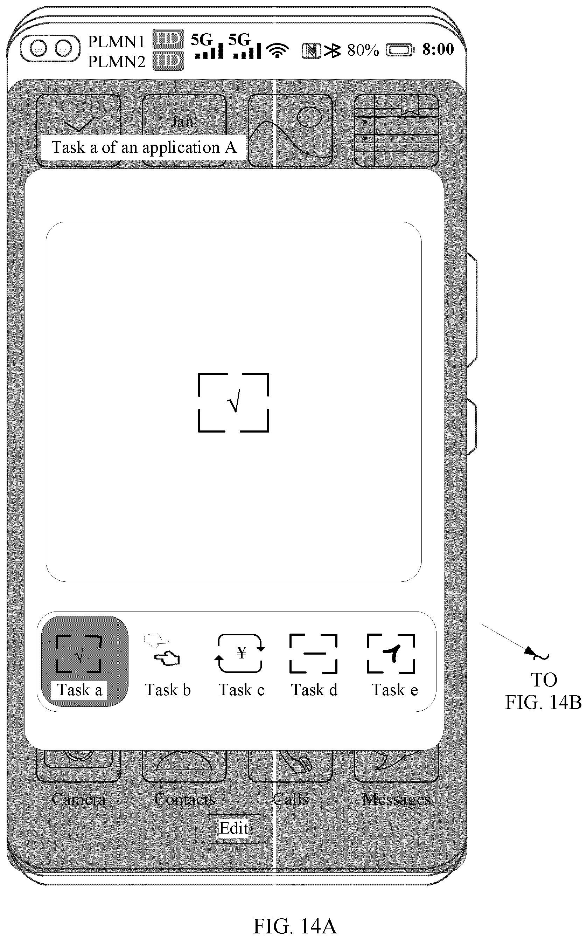

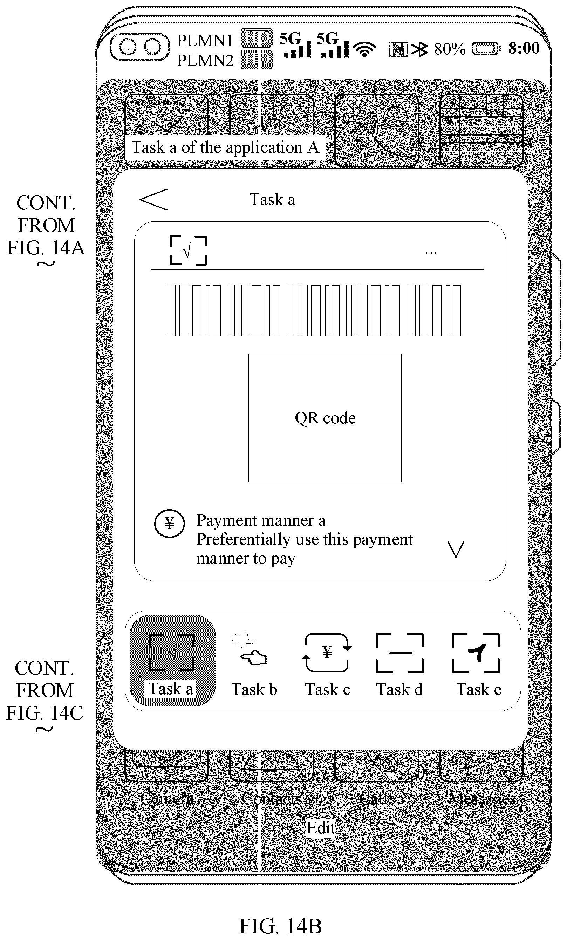

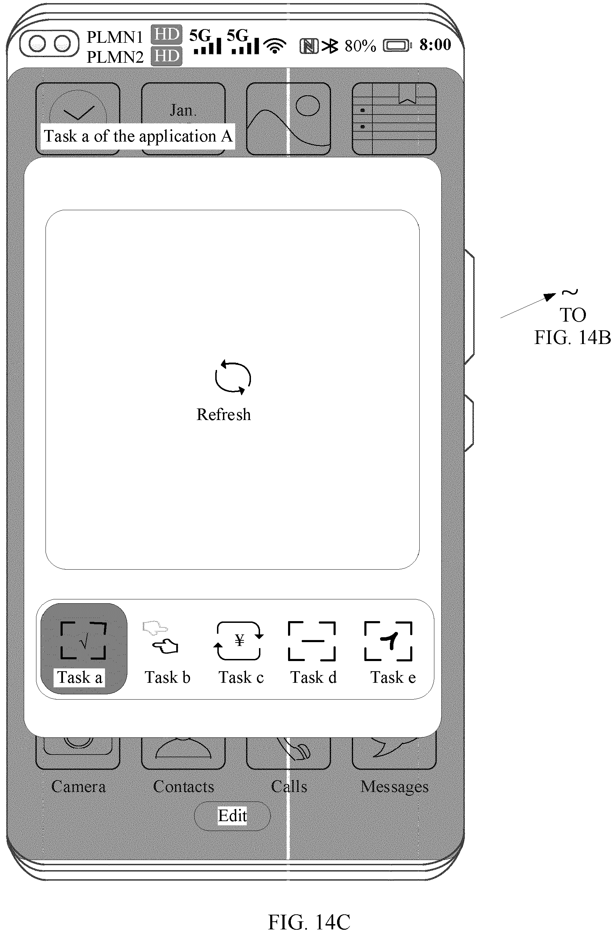

For example, FIG. 14A to FIG. 14C are a diagram of possible interfaces when a cold start or failed loading occurs in the electronic device. FIG. 14B may be the interface shown in FIG. 9D, the interface shown in FIG. 10C, the interface shown in FIG. 11B, the interface shown in FIG. 12B, or the interface shown in FIG. 13B. If the electronic device is cold-started, before FIG. 14B is displayed, the cold start interface may be further displayed in the embedded window shown in FIG. 14A. If content of a shortcut task card fails to be loaded because the electronic device is with a poor network or for another reason, before FIG. 14B is displayed, the loading interface may be further displayed in the embedded window shown in FIG. 14C. The loading interface may include a loading control, and when a trigger on the loading control is received, an interface shown in FIG. 14B may be displayed.

It should be noted that, in all six interfaces, that is, the interface shown in FIG. 9D, the interface shown in FIG. 10C, the interface shown in FIG. 11B, the interface shown in FIG. 12B, the interface shown in FIG. 13B, and the interface shown in FIG. 14B, an example in which a shortcut task card corresponding to the task a of the application A is displayed in the embedded window is used for description.

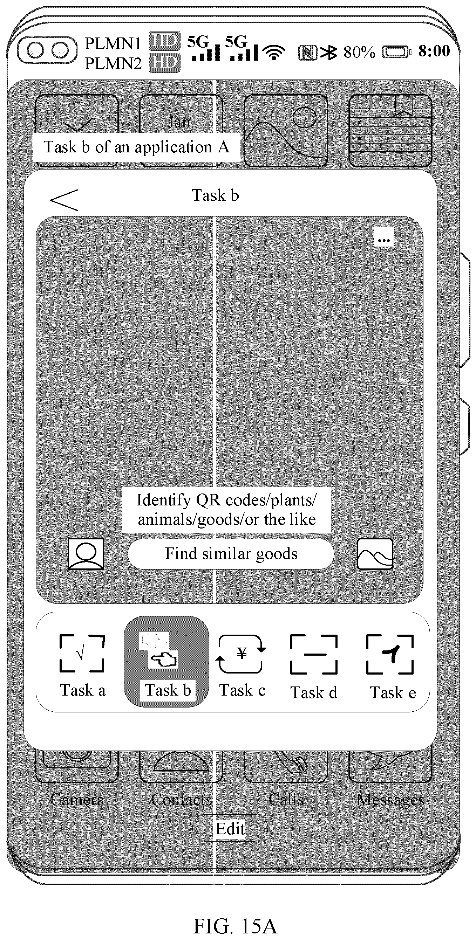

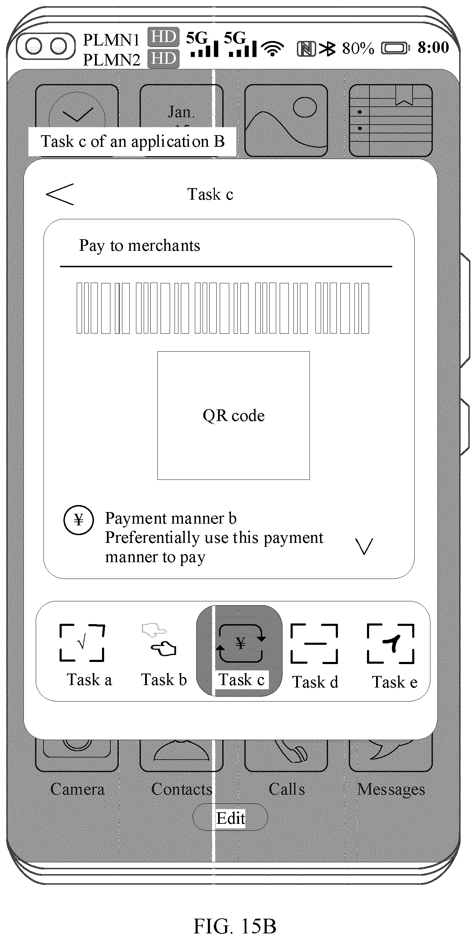

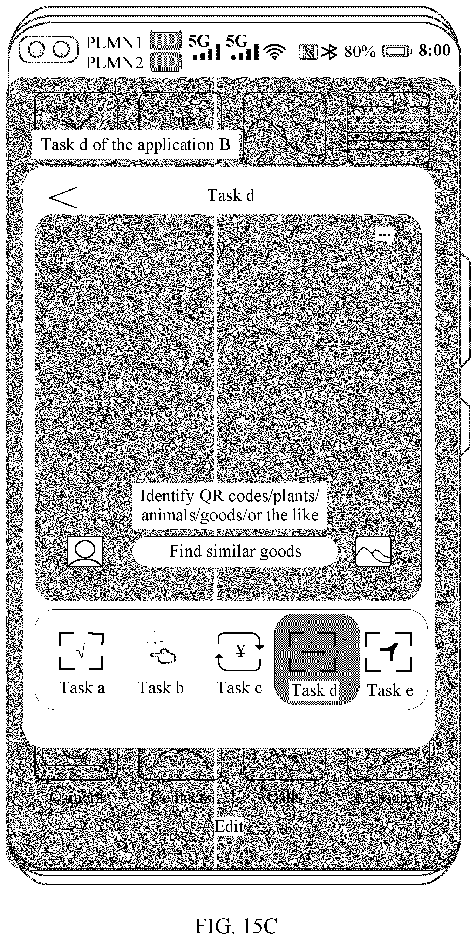

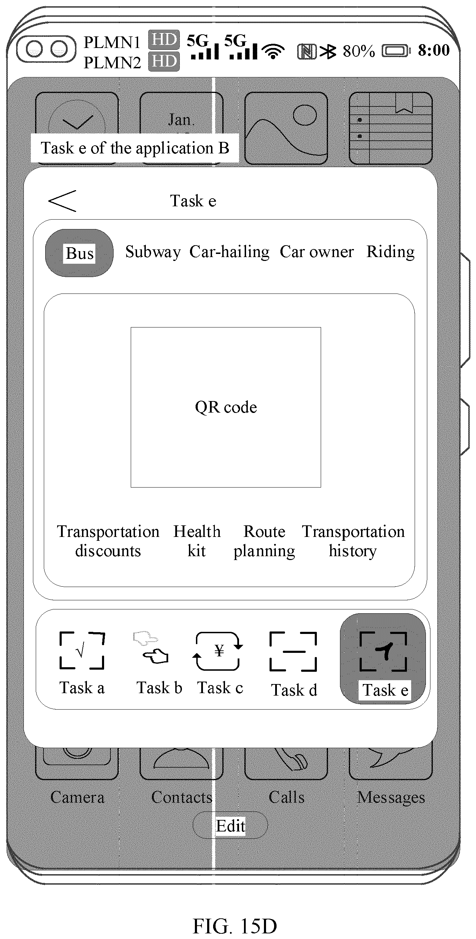

In a possible implementation, alternatively, in the embedded windows in the six interfaces, any one of the following may be displayed: a shortcut task card corresponding to a task b of the application A shown in FIG. 15A, a shortcut task card corresponding to a task c of the application B shown in FIG. 15B, a shortcut task card corresponding to a task d of the application B shown in FIG. 15C, and a shortcut task card corresponding to a task e of the application B shown in FIG. 15D.

When the embedded window in each of the six interfaces pops up, a specific task to which the first shortcut task card to be displayed belongs may be related to on or off of an intelligent switch.

For example, when the intelligent recommendation switch is off, the first shortcut task card to be displayed when the embedded window pops up may be a shortcut task card corresponding to the first task in the Added bar, a shortcut task card corresponding to a task used by the user last time, or a shortcut task card corresponding to any task in the Added bar.

When the intelligent recommendation switch is on, the first shortcut task card to be displayed when the embedded window pops up may be a shortcut task card corresponding to a task obtained through calculation according to a recommendation algorithm. The recommendation algorithm may be related to a trip pattern of the user, current time, a geo-fence within which the user is located, use habits of the user, a profession of the user, and the like. In a possible implementation, the trip pattern of the user, the use habits of the user, the profession of the user, and the like may be obtained from a user profile through authorization from the user.

For example, when the electronic device obtains, based on trip information of the user, another destination that the user is going to, after a double-tap operation on the back is detected, the first shortcut task card to be displayed when the embedded window pops up may be a shortcut task card corresponding to a transportation-related task, for example, the shortcut task card corresponding to the task e of the application B shown in FIG. 15D.

For example, when the electronic device learns, based on the current time, that the user needs to punch in, after a double-tap operation on the back is detected, the first shortcut task card to be displayed when the embedded window pops up may be a shortcut task card (not shown in the figure) corresponding to a punch-in task.

For example, when the electronic device learns, based on the geo-fence within which the user is located, that the user is about to make a payment, after a double-tap operation on the back is detected, the first shortcut task card to be displayed when the embedded window pops up may be a shortcut task card corresponding to a payment-related task, for example, the shortcut task card corresponding to the task a of the application A shown in FIG. 14B, or a shortcut task card corresponding to the task c of the application B shown in FIG. 15B. Whether it is specifically the shortcut task card corresponding to the task a of the application A or the shortcut task card corresponding to the task c of the application B may be further determined with reference to the use habits of the user. For example, when the user uses the shortcut task card corresponding to the task a of the application A more or more frequently, the shortcut task card corresponding to the task a of the application A may be first displayed, or when the user uses the shortcut task card corresponding to the task c of the application B more or more frequently, the shortcut task card corresponding to the task c of the application B may be first displayed.

For example, when the electronic device learns, based on the geo-fence within which the user is located, that the user is about to take subway or bus, after a double-tap operation on the back is detected, the first shortcut task card to be displayed when the embedded window pops up may be a shortcut task card (not shown in the figure) corresponding to a subway passenger QR code task or bus passenger QR code task. Clearly, if the profession labeled by the user is subway staff, and the user frequently goes to a subway station, when the user is at the subway station, the shortcut task card corresponding to the subway passenger QR code or bus passenger QR code task may not be recommended to be first displayed.

For example, when the electronic device learns, based on the geo-fence (for example, a delivery locker fence) within which the user is located, that the user is about to scan a code, after a double-tap operation on the back is detected, the first shortcut task card to be displayed when the embedded window pops up may be a shortcut task card corresponding to a code scanning task, for example, the shortcut task card corresponding to the task b of the application A shown in FIG. 15A, or the shortcut task card corresponding to the task d of the application B shown in FIG. 15C. Whether it is specifically the shortcut task card corresponding to the task b of the application A or the shortcut task card corresponding to the task d of the application B may be further determined with reference to the use habits of the user. For example, when the user uses the shortcut task card corresponding to the task b of the application A more or more frequently, the shortcut task card corresponding to the task b of the application A may be first displayed, or when the user uses the shortcut task card corresponding to the task d of the application B more or more frequently, the shortcut task card corresponding to the task d of the application B may be first displayed.

Clearly, the recommendation algorithm may have another implementation with reference to an actual case. This is not specifically limited in embodiments of this application. It should be noted that, any data in embodiments of this application is obtained with authorization, complying with regulations.

After the electronic device displays the first shortcut task card in the embedded window, the embedded window may support the user in switching between shortcut task cards corresponding to various tasks.

In a possible implementation, the user may swipe left and right or swipe up and down in the embedded window to switch between shortcut task cards corresponding to adjacent tasks. For example, when a swipe-right operation on the shortcut task card corresponding to the task b of the application A shown in FIG. 15A is received, the shortcut task card corresponding to the task c of the application B shown in FIG. 15B may be displayed. When a swipe-right operation on the shortcut task card corresponding to the task c of the application B shown in FIG. 15B is received, the shortcut task card corresponding to the task d of the application B shown in FIG. 15C may be displayed. When a swipe-right operation on the shortcut task card corresponding to the task d of the application B shown in FIG. 15C is received, the shortcut task card corresponding to the task e of the application B shown in FIG. 15D may be displayed. Clearly, when a swipe-left operation on the shortcut task card corresponding to the task e of the application B shown in FIG. 15D is received, the shortcut task card corresponding to the task d of the application B shown in FIG. 15C may be displayed, and so on.

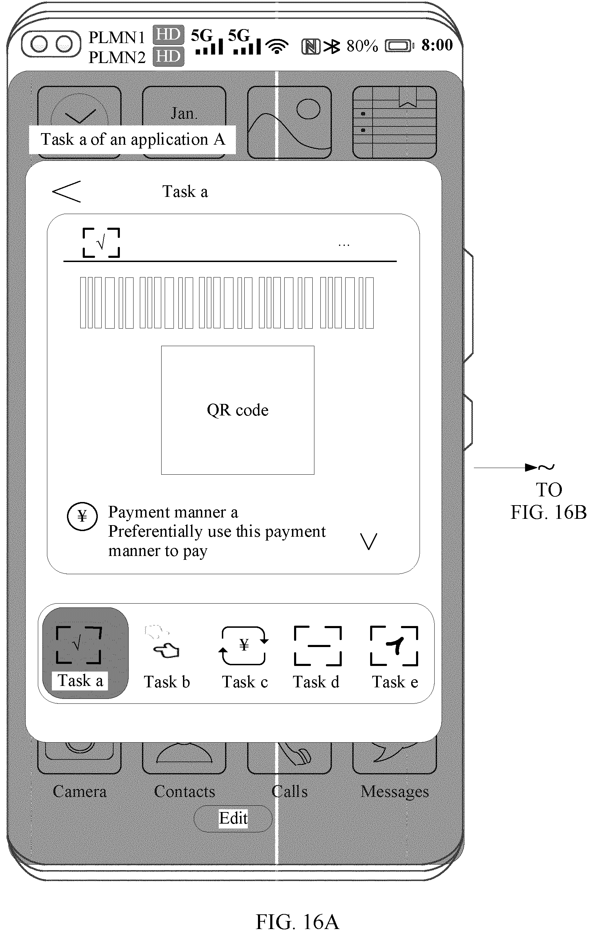

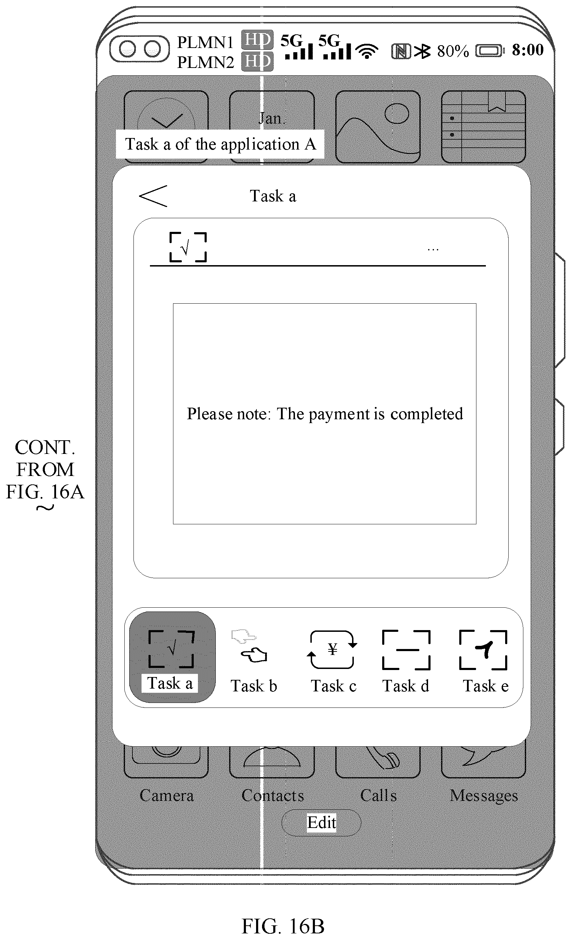

In another possible implementation, the user may trigger an identifier of any task in a taskbar in the embedded window, to switch a shortcut task card displayed in the embedded window to a shortcut task card corresponding to the identifier, of the task, triggered by the user. For example, when a trigger on an identifier of the task c in the taskbar below the shortcut task card corresponding to the task b of the application A shown in FIG. 15A is received, the shortcut task card corresponding to the task c of the application B shown in FIG. 15B may be displayed. Alternatively, when a trigger on an identifier of the task d in the taskbar below the shortcut task card corresponding to the task b of the application A shown in FIG. 15A is received, the shortcut task card corresponding to the task d of the application B shown in FIG. 15C may be displayed. Alternatively, when a trigger on an identifier of the task e in the taskbar below the shortcut task card corresponding to the task b of the application A shown in FIG. 15A is received, the shortcut task card corresponding to the task e of the application B shown in FIG. 15D may be displayed. When a shortcut task card displayed in the embedded window is being used, there may be a plurality of interface changes. For example, FIG. 16A and FIG. 16B to FIG. 19A to FIG. 19D show diagrams of several related interfaces when the shortcut task card is being used.

It can be understood that, each task in the embedded window may be associated with an interface of an application to which the task belongs. When a shortcut task card corresponding to a specific task is displayed in the embedded window, the embedded window may pull up, through an interface, of the application, associated with the task, a module corresponding to the task in the application for running, so that specific content of the shortcut task card to be displayed can be provided for the embedded window based on the application, and when a trigger is received in the shortcut task card, further interface display or the like after the trigger in the shortcut task card is implemented based on execution logic of the application. The execution logic of the application is not specifically limited in embodiments of this application.

FIG. 16A and FIG. 16B are a diagram of an example of an interface change of a shortcut task card corresponding to a payment-related task after a payment is completed. As shown in FIG. 16A, a shortcut task card corresponding to a payment-related task a of the application A may be displayed in the embedded window based on content provided by a module, in the application A, for implementing the task a. The shortcut task card may include a bar code or a two-dimensional code for paying or receiving money. After the electronic device determines that the bar code or the two-dimensional code is scanned and a payment or receipt is completed, an interface shown in FIG. 16B may be displayed based on the application A, and prompt information for prompting for the completed payment may be displayed at a position of the shortcut task card. In a possible implementation, after the prompt information for prompting for the completed payment is displayed, an exit from the embedded window may be performed, and an interface before the embedded window pops up is restored on the electronic device. In this way, instant use and exiting of the embedded window can be achieved, not only providing a convenient operation, but also avoiding interrupting a process of the user using the electronic device.

Optionally, the shortcut task card corresponding to the payment-related task a of the application A may further include another payment manner and some hidden content. The part of content may also be triggered by the user.

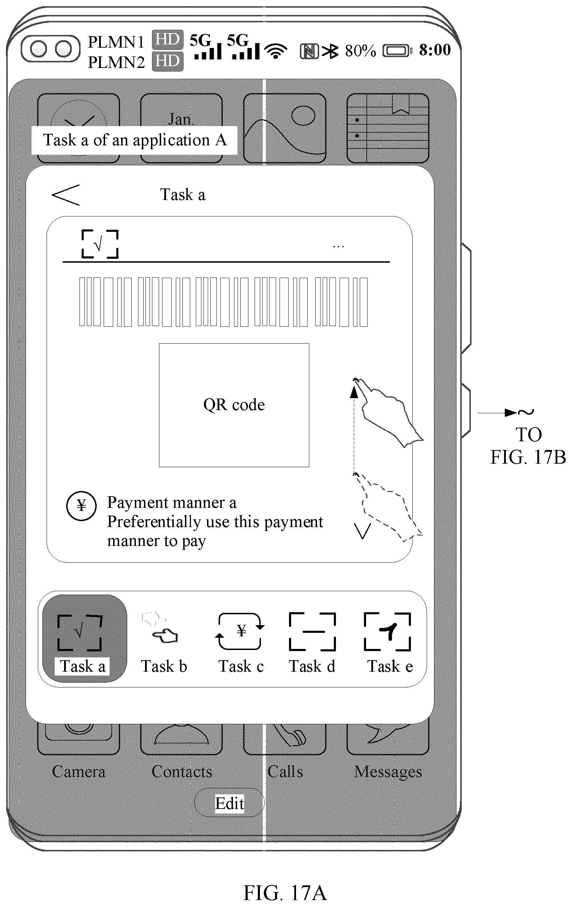

For example, FIG. 17A to FIG. 17F are a diagram of an interface change when there is a hidden option in a shortcut task card corresponding to a used payment-related task. As shown in FIG. 17A, the shortcut task card corresponding to the payment-related task a of the application A is displayed in the embedded window, and the shortcut task card further includes a bar code, a two-dimensional code, an option for a payment manner a, and some hidden options. The shortcut task card corresponding to the task a shown in FIG. 17A may also be understood as a root interface.

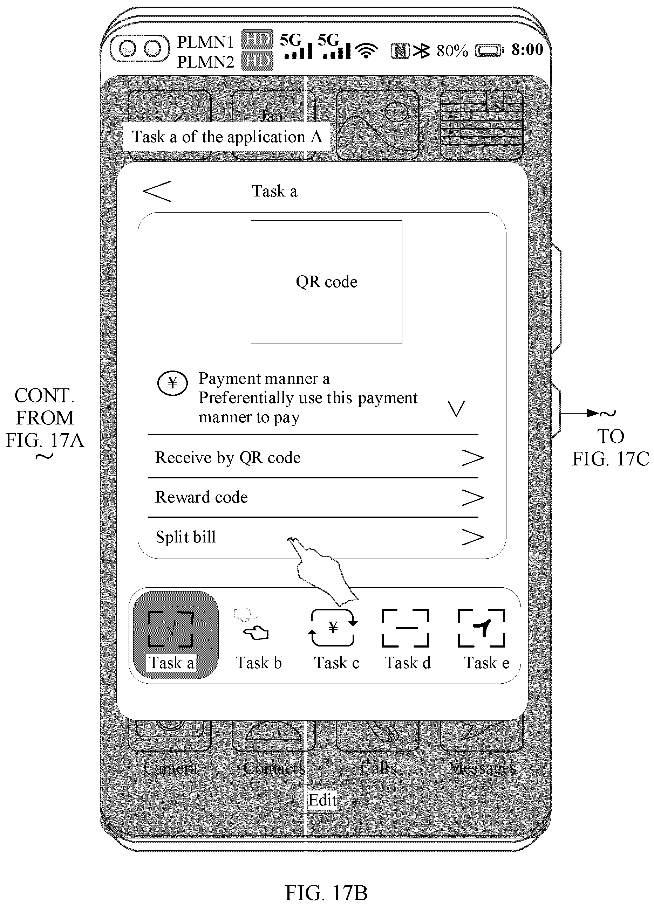

When a swipe-up operation of the user on the shortcut task card is received in an interface shown in FIG. 17A, an interface shown in FIG. 17B may be displayed. As shown in FIG. 17B, the bar code and the two-dimensional code in the shortcut task card move up, and options hidden before such as Receive by QR code, Reward code, and Split bill are displayed in the shortcut task card.

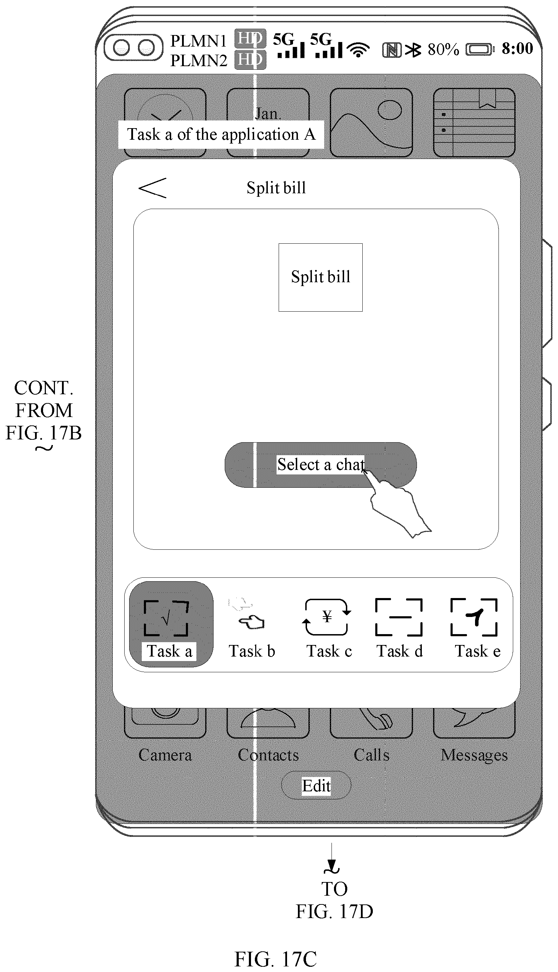

When a trigger operation of the user on Split bill is received in the interface shown in FIG. 17B, an interface shown in FIG. 17C may be displayed. As shown in FIG. 17C, an interface for Split bill is displayed in the shortcut task card, and a control for selecting a chat group may be displayed in the interface for Split bill.

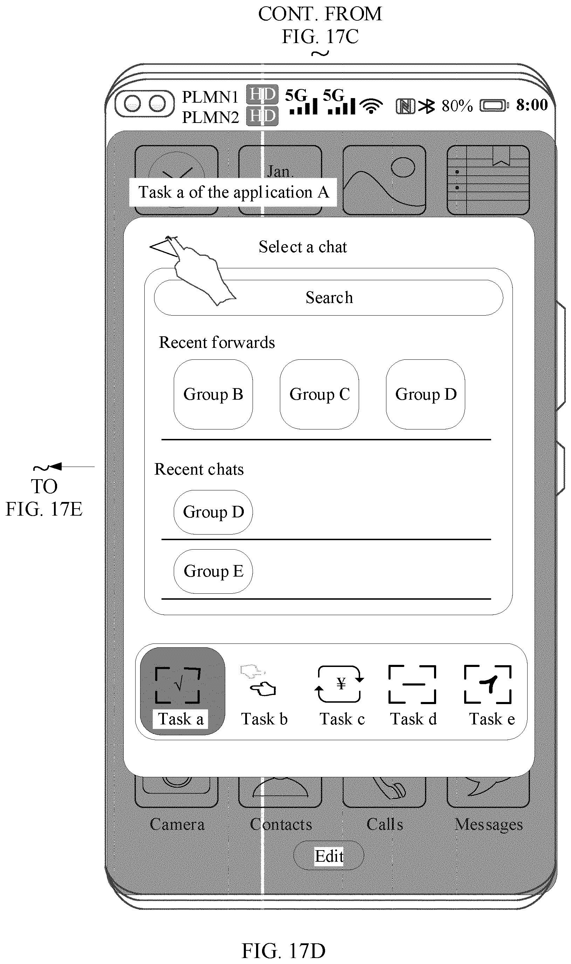

When a trigger operation of the user on the control for selecting a chat group is received in the interface shown in FIG. 17C, an interface shown in FIG. 17D may be displayed. As shown in FIG. 17D, an interface for selecting a chat is displayed in the shortcut task card, and one or more groups with recent forwards and one or more groups with recent chats may be displayed in the interface for selecting a chat. Further, the user may select one group in the interface shown in FIG. 17D to send a split-bill notification to members in the group.

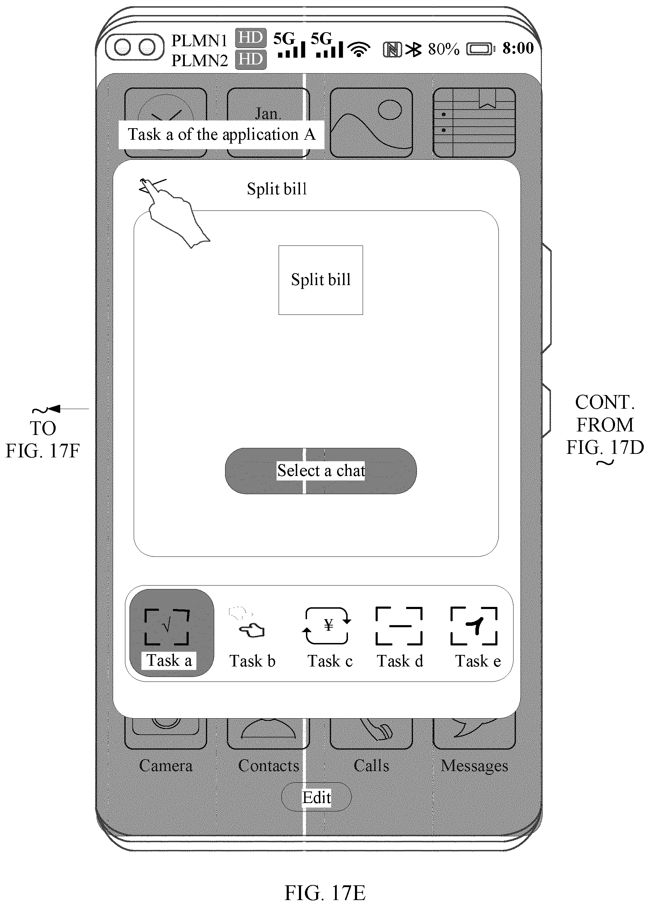

When a trigger of the user on a return button is received in the interface shown in FIG. 17D, the shortcut task card may return to an upper-level interface of the interface shown in FIG. 17D, and an interface shown in FIG. 17E is displayed. Content in the interface shown in FIG. 17E may be the same as content in the interface shown in FIG. 17C. Details are not provided again.

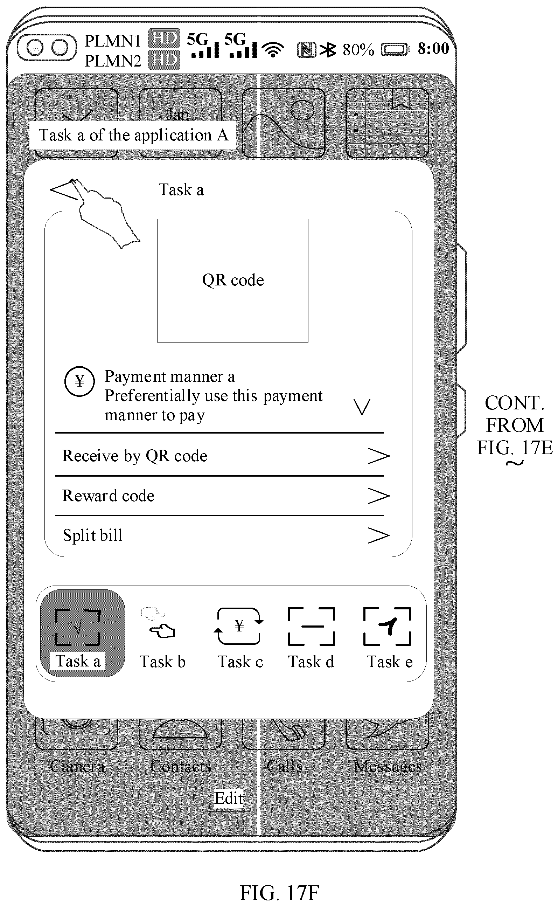

When a trigger of the user on the return button is received in the interface shown in FIG. 17E, the shortcut task card may return to an upper-level interface of the interface shown in FIG. 17E, and an interface shown in FIG. 17F is displayed. Content in the interface shown in FIG. 17F may be the same as content in the interface shown in FIG. 17B. Details are not provided again.

It can be understood that, the interface shown in FIG. 17B is a root interface of the shortcut task card corresponding to the task a, and therefore no further return is supported. If a trigger of the user on the return button is received in the interface shown in FIG. 17B, a shake or another animation effect may be added for the embedded window to prompt the user that further return cannot be executed.

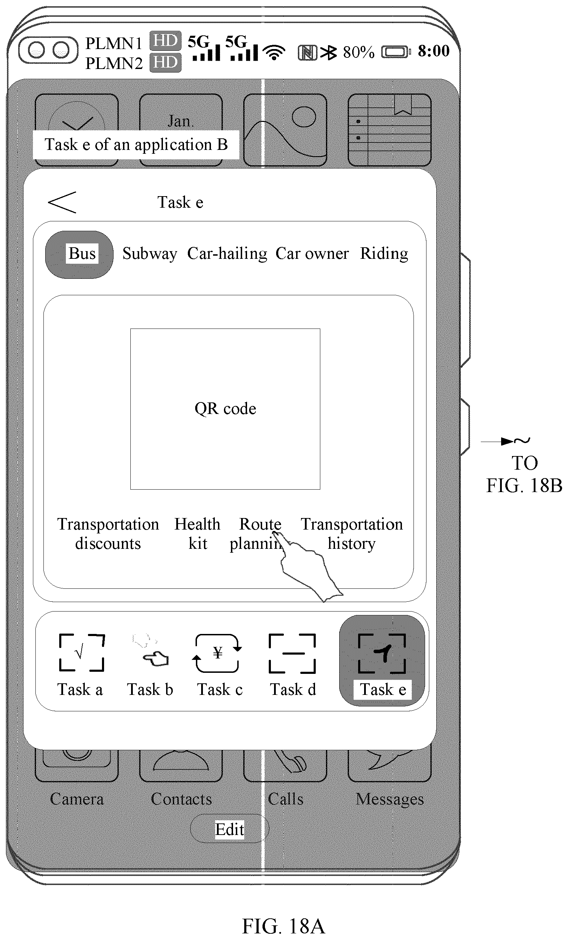

For example, FIG. 18A to FIG. 18C are a diagram of an interface change when a keyboard is displayed in a used shortcut task card corresponding to a transportation-related task. As shown in FIG. 18A, a shortcut task card corresponding to the transportation-related task e of the application B is displayed in the embedded window, and the shortcut task card includes options such as a transportation two-dimensional code, a transportation mode option (for example, a means, Subway, Car-hailing, or Riding), Transportation discounts, Route planning, and Transportation history.

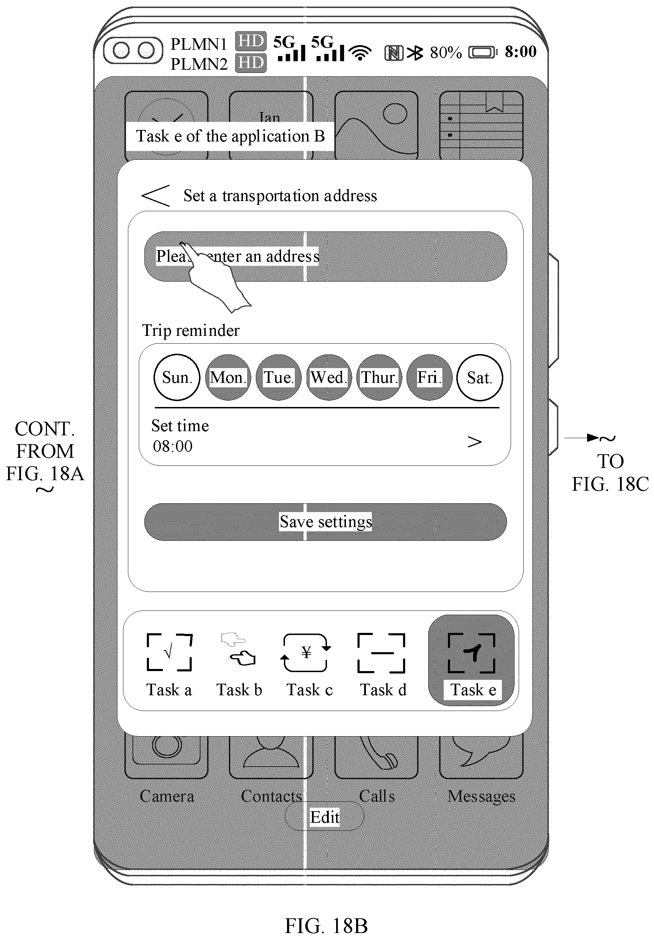

When a trigger operation on Route planning is received in an interface shown in FIG. 18A, an interface shown in FIG. 18B may be displayed. As shown in FIG. 18B, an interface for route planning is displayed in an embedded card, and options such as Set a transportation address and Trip reminder may be included in the interface for route planning.

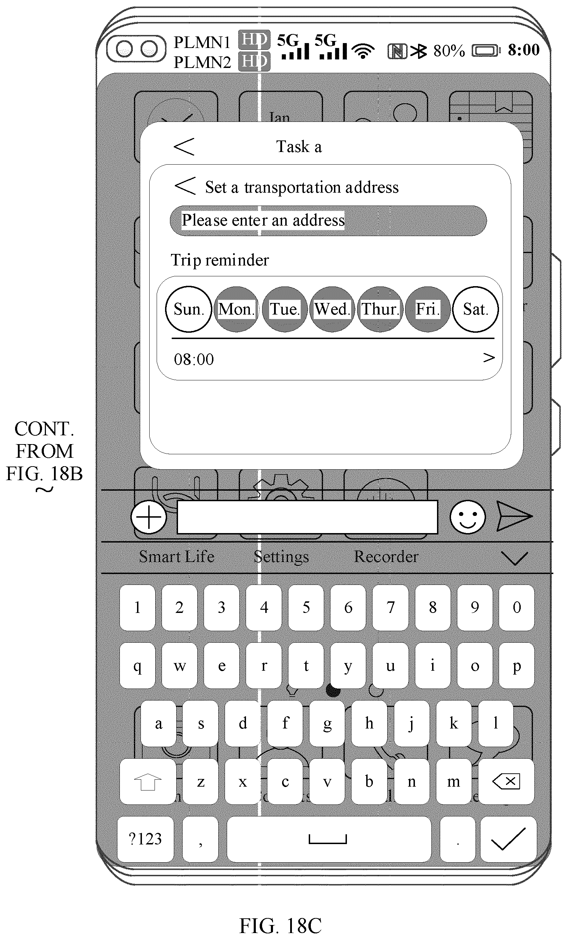

When a trigger operation on an input box for inputting an address is received in the interface shown in FIG. 18B, if the user has not set a transportation address before, the electronic device may display an interface shown in FIG. 18C. As shown in FIG. 18C, a keyboard may pop up on the electronic device, and at the same time, a height of the shortcut task card may be reduced. The shortcut task card may move toward the top of the electronic device, so that the user can use the keyboard to input related information, for example, the transportation address. After the user needs no more to use the keyboard, display of the keyboard may be further canceled, and display of the shortcut task card is restored (not shown in the figure). Details are not provided again. In this way, when a trigger of the user on Route planning is received again subsequently, the interface for route planning in which a destination is the transportation address may be displayed based on the transportation address that has been input by the user.

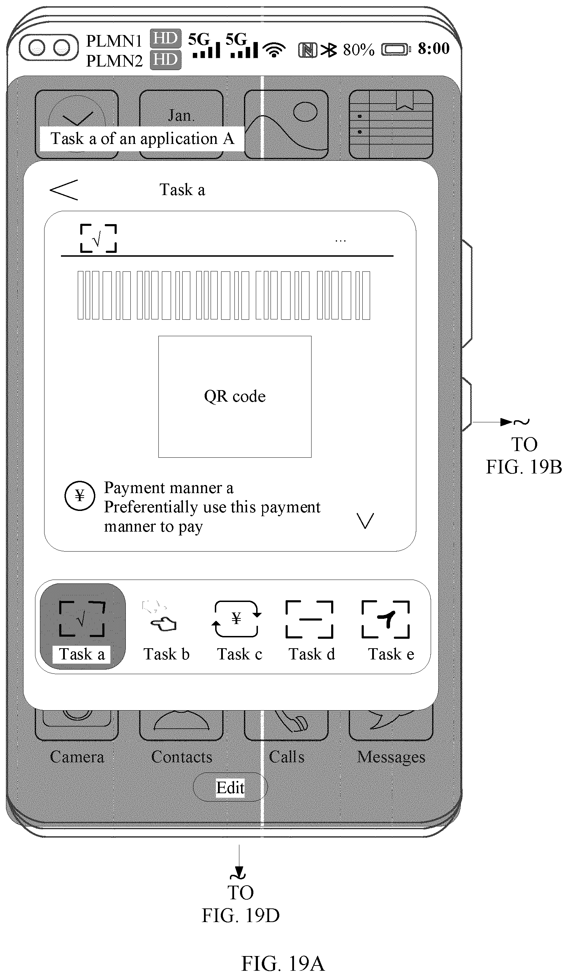

A notification message may be further received during display of the embedded window. FIG. 19A to FIG. 19D are a diagram of an interface change when a notification message is received during use of a shortcut task card.

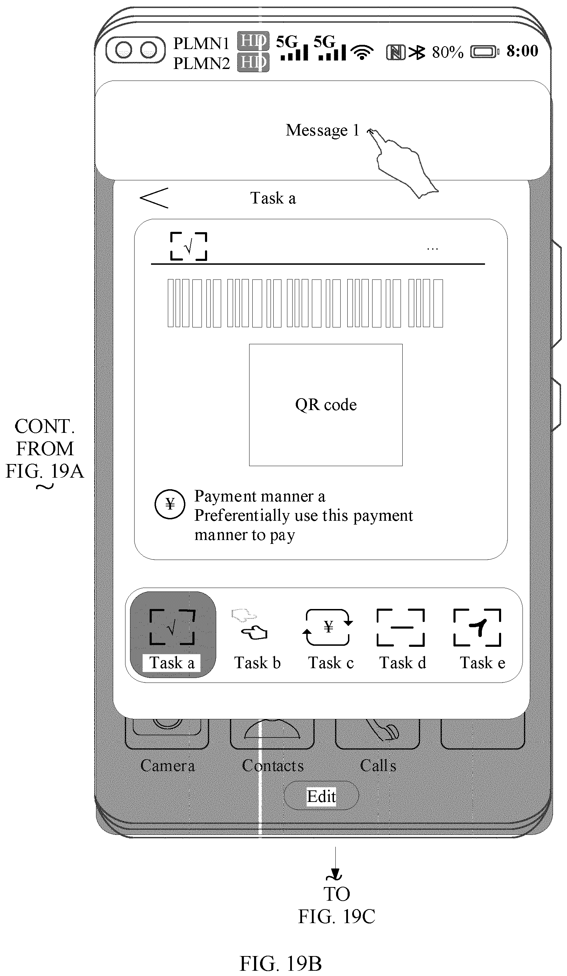

As shown in FIG. 19A, the shortcut task card corresponding to the payment-related task a of the application A is displayed in the embedded window. If a notification message 1 is received at this time, an interface shown in FIG. 19B may be displayed. As shown in FIG. 19B, display of the embedded window continues, and the message 1 may be displayed, in a form of a banner, a capsule, or the like, at an upper layer of the embedded window.

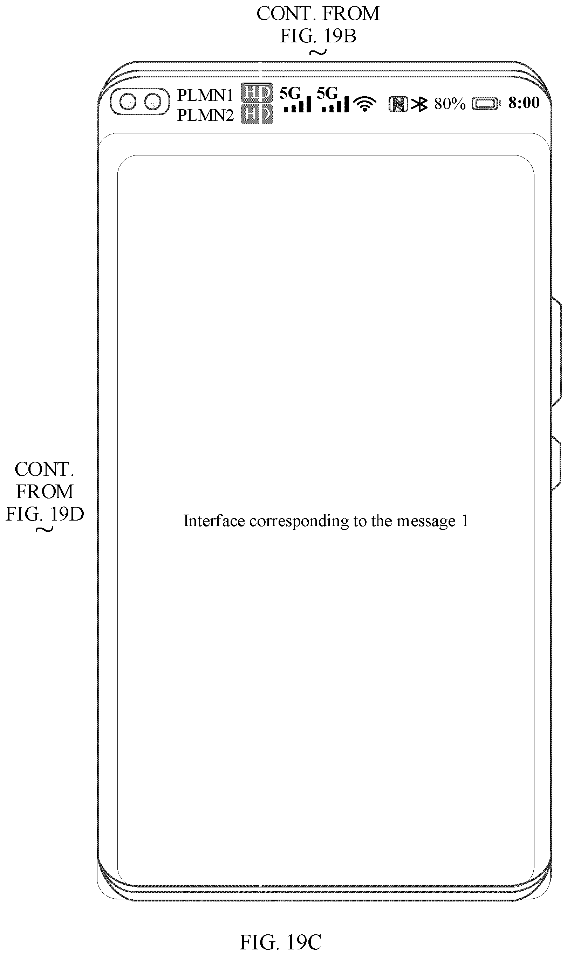

In the interface shown in FIG. 19B, if a trigger operation for opening the message 1 (for example, pulling down the notification or tapping the notification) is received, an interface shown in FIG. 19C may be displayed. As shown in FIG. 19C, the electronic device may cancel display of the embedded window, and display an interface corresponding to the message 1. Optionally, when returning to a previous page is performed in the interface corresponding to the message 1, an upper-level interface, in an application corresponding to the message 1, of the interface corresponding to the message 1 is displayed again, and the embedded window stops to be displayed. Clearly, the interface displayed in the embedded window shown in FIG. 19A may alternatively be displayed again. This is not specifically limited in embodiments of this application.

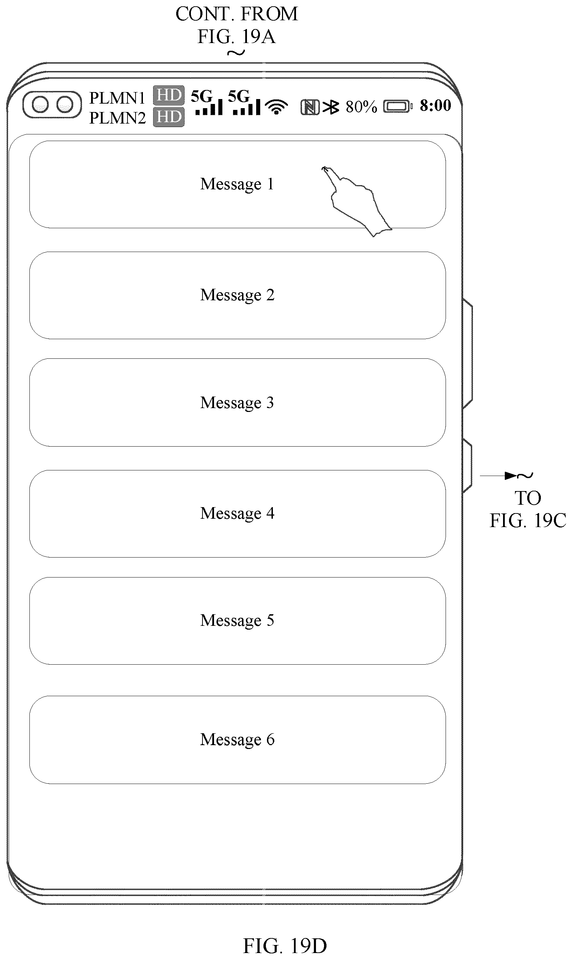

In the interface shown in FIG. 19B, if the message 1 is not triggered for a period of time or a trigger for closing the message 1 is received, display of the message 1 may be canceled, and the electronic device keeps displaying the interface shown in FIG. 19A including the embedded window. In the interface shown in FIG. 19A, if the user wants to recheck the notification message, the user may perform an operation of pulling down from an upper side of the screen or the like, to display an interface for message notification shown in FIG. 19D. The interface for message notification may include a plurality of pieces of messages, and the embedded window may further be displayed at a lower layer of the interface for message notification. If the interface for message notification is collapsed with a swipe-up of the user, the electronic device may keep displaying the interface shown in FIG. 19A including the embedded window. After a trigger operation for opening the message 1 in the plurality of pieces of messages is received, the interface shown in FIG. 19C for the message 1 may alternatively be displayed.

It can be understood that, if the electronic device receives an incoming call during display of the embedded window, an incoming call contact information, an answer control, and a reject control may be further displayed (not shown in the figure) in a form of a capsule at an upper layer of the embedded window. If a user trigger on the reject control is received, the electronic device rejects the call, and the embedded window may keep being displayed. If a user trigger on the answer control is received, the electronic device answers the call, and the embedded window may keep being displayed. A calling interface is displayed in a form of a capsule, or display of the embedded window may be canceled and the electronic device displays the calling interface.

It should be noted that, the possible interfaces involved when a shortcut task card is being used are described above by using examples. In actual application, the shortcut task card may further support in providing another user interaction interface, implementing another task, or using another interface to implement the foregoing interaction. The foregoing descriptions with examples do not constitute a definite limitation on use of the shortcut task card.

Interfaces possibly involved in closing the embedded window are described below by using examples.

In a possible implementation, when the electronic device displays the embedded window, if the electronic device detects that no trigger operation has been received in the embedded window within a preset time length, the electronic device may close the embedded window. The preset time length may be set based on actual application, for example, may be set to a relatively short time length to reduce interference of the embedded window on an application running on the electronic device.

That no trigger operation has been received within the preset time length may include that no trigger operation has been received within the preset time length starting form when the embedded window pops up, or that no trigger operation has been received within the preset time length after an interaction procedure, for example, scanning, is completed in the embedded window.

After the embedded window is closed, the electronic device may restore display of an interface before the embedded window pops up. The interface before the embedded window pops up that may be displayed on the electronic device may include screen-off, an always-on-display screen, a lock screen, a home screen, an interface of any application, and the like.

For example, FIG. 20A to FIG. 20D are a diagram of interfaces in which the embedded window pops up in the interface a of the application A, and after a function related to the task a of the application A is performed in the embedded window, the embedded window is closed, to return to the interface a of the application A.

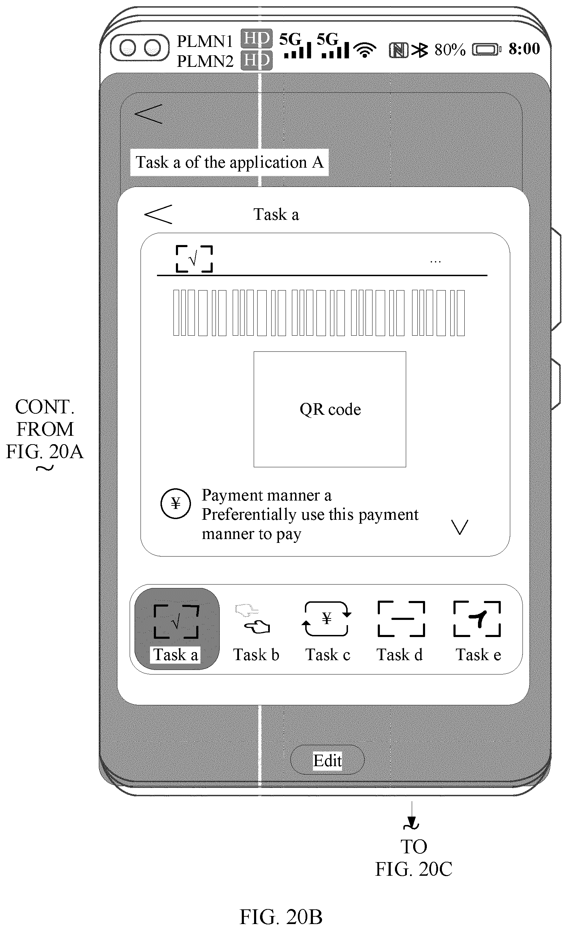

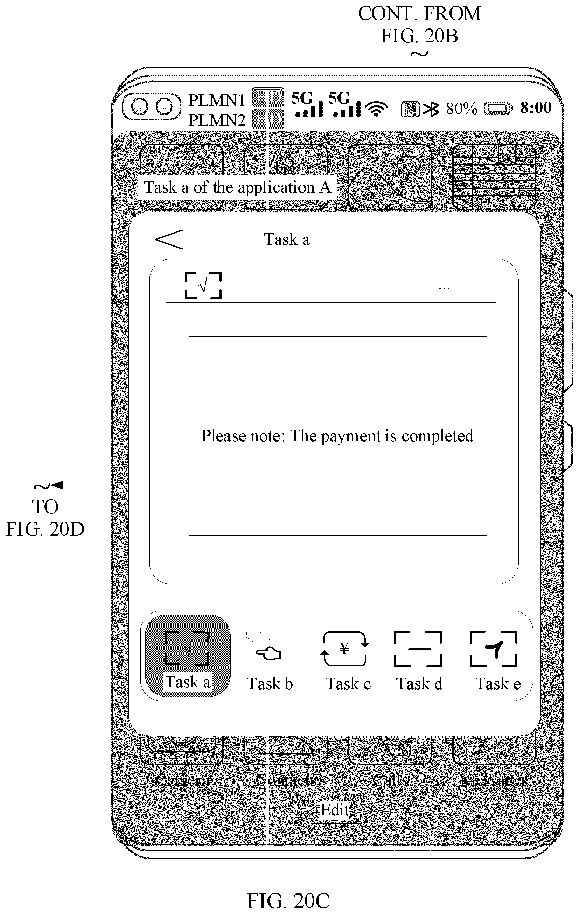

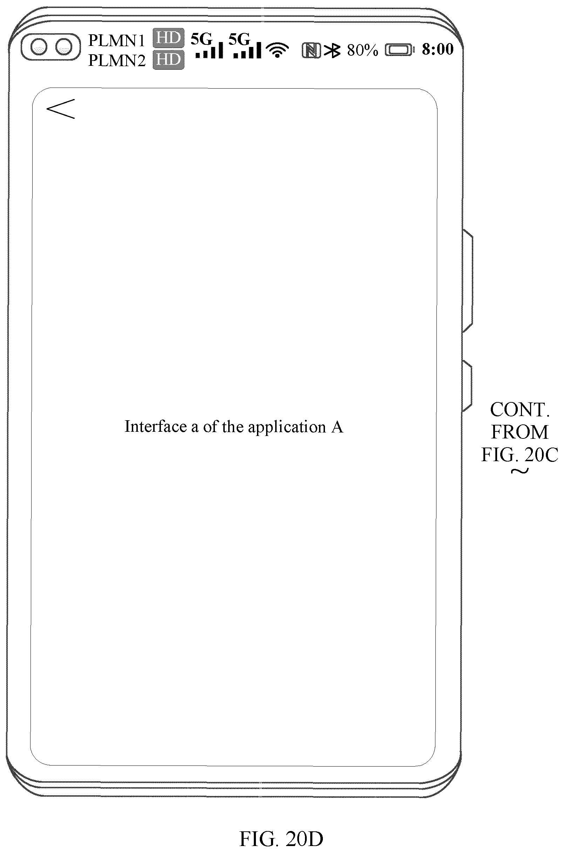

As shown in FIG. 20A, the electronic device may display the interface a of the application A. If the electronic device detects a double-tap operation on the back of the electronic device at this time, an interface shown in FIG. 20B may be displayed. As shown in FIG. 20B, the electronic device displays the embedded window over the interface a of the application A at an upper layer, and the embedded window includes the shortcut task card corresponding to the payment-related task a of the application A. The shortcut task card corresponding to the task a may include a payment code. When the electronic device detects that the payment code is scanned and a payment is completed, an interface shown in FIG. 20C may be displayed. As shown in FIG. 20C, payment completion is prompted in the shortcut task card corresponding to the task a, and the electronic device may close the embedded window after a preset time length, and display an interface shown in FIG. 20D, to restore display of the interface a of the application A. Content in the interface shown in FIG. 20D may be the same as content in the interface shown in FIG. 20A. Clearly, after the electronic device displays the interface shown in FIG. 20B, if it is detected that no trigger or scanning is received in the embedded window after a preset time length, the electronic device may alternatively jump to the interface shown in FIG. 20D from the interface shown in FIG. 20B, to restore display of the interface a of the application A.

In other words, in this embodiment of this application, regardless of a type of interface interaction for the task a of the application A in the embedded window, when the electronic device closes the embedded window, the electronic device may restore display of the interface a of the application interface. A new task created in the embedded window according to embodiments of this application does not cause any interruption or impact on a task of another application.

In another possible implementation, the electronic device may close the embedded window based on a user trigger.

For example, in a process in which the electronic device displays the embedded window, when the electronic device receives a user operation of swiping up from the bottom of the screen of the electronic device and holding, the electronic device does not trigger display of a recent task and triggers to close the embedded window. Alternatively, when the user performs an operation of swiping inward from an edge of the screen of the electronic device and holding, the electronic device does not trigger a sidebar and triggers to close the embedded window.

Alternatively, a control for displaying a recent task may be provided in the embedded window, and when the user triggers the control for displaying a recent task, the embedded window may be closed, and the recent task may be displayed.

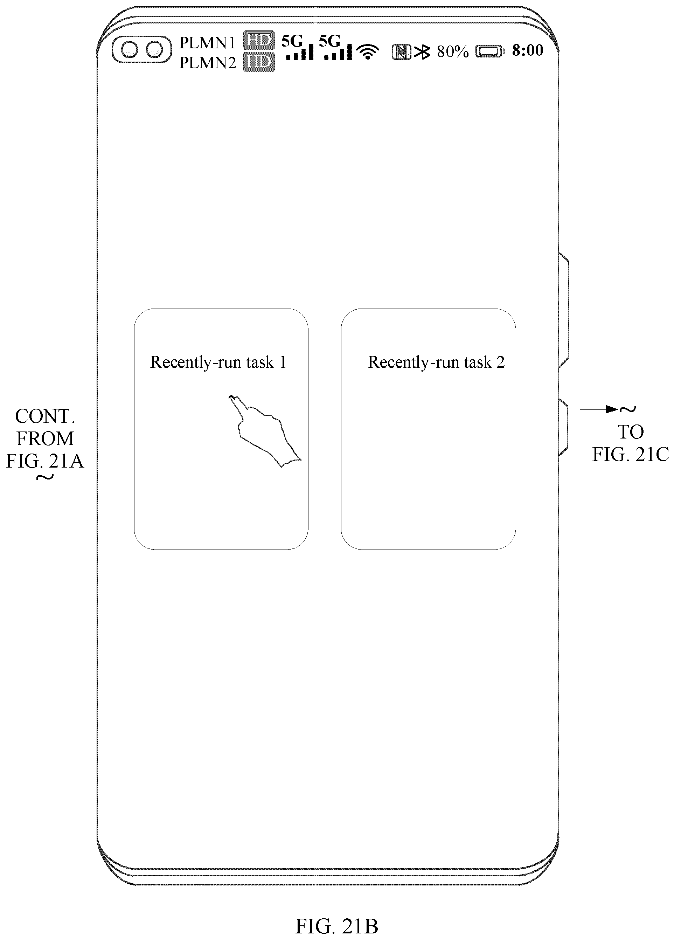

As shown in FIG. 21A, the electronic device displays the embedded window, and the embedded window includes the shortcut task card corresponding to the task a of the application A and the control for displaying a recent task. When a user operation of triggering the control for displaying a recent task is received, the embedded window may be closed, and an interface shown in FIG. 21B may be displayed.

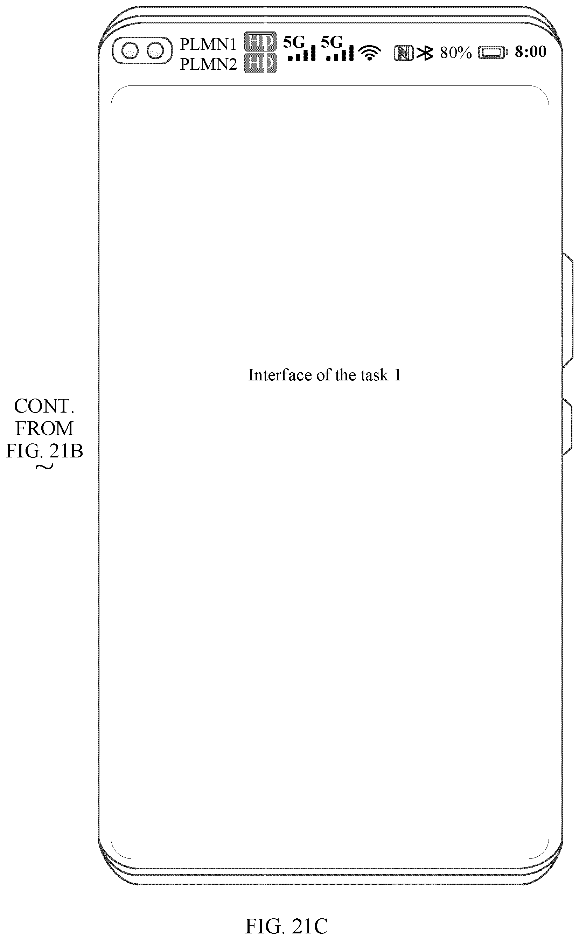

As shown in FIG. 21B, a floating window for displaying a recently run task may be displayed in the interface, and if a trigger on a recently run task 1 is received in the interface shown in FIG. 21B, an interface for the task 1 shown in FIG. 21C may be displayed.

It can be understood that, if there is no recently run task, when the electronic device receives, in an interface shown in FIG. 21A, a user operation of triggering the control for displaying a recent task, the embedded window may be closed, and the home screen may be displayed.

Clearly, in another possible implementation, a control for closing the embedded window (not shown in the figure) may be further provided in the embedded window. When an user operation on the control for closing the embedded window in the embedded window is received, the electronic device may restore display of the interface before the embedded window pops up.

Alternatively, when a preset operation, for example, a press operation, a touch operation, or a swipe operation, on some areas in the embedded window is received, the electronic device may close the embedded window, and restore display of the interface before the embedded window pops up.

Alternatively, when a tap operation, a voice control operation, a gesture control operation, or the like for closing the embedded window is received, the electronic device may close the embedded window, and restore display of the interface before the embedded window pops up.

Alternatively, the electronic device may include functional or physical buttons such as a return button, a home-screen display button, and a lock screen button, and when a trigger on the return button is received, the electronic device closes the embedded window, and restores display of the interface before the embedded window pops up; when a trigger on the home-screen button is received, the electronic device closes the embedded window, and displays the home screen; when a trigger on the lock screen button is received, the electronic device closes the embedded window, and displays the lock screen interface; or the like.

A specific implementation of closing the embedded window is not limited in embodiments of this application.

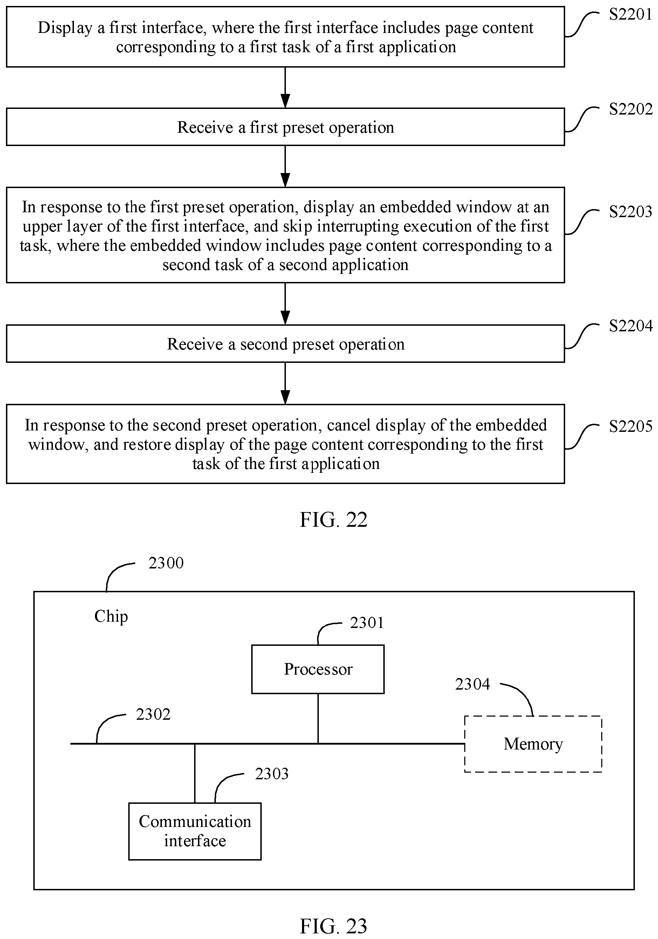

A schematic flowchart embodiment of a window display method according to an embodiment of this application is described below. It should be noted that in embodiments of this application, "when ..." may be an instantaneous occurrence time of a case, or may be a period of time after occurrence of a case, and this is not specifically limited in embodiments of this application. As shown in FIG. 22, the method includes the following steps.

S2201: Display a first interface, where the first interface includes page content corresponding to a first task of a first application.

The first interface in this embodiment of this application may be an interface of any application displayed on an electronic device. For example, the first interface may correspond to the interface shown in FIG. 11A, FIG. 12A, or FIG. 13A.

The first application may be an application currently displayed on the electronic device. The first application may be any application installed on the electronic device, for example, a desktop application, a video application, or a game application. The first task of the first application may be any task of the first application, and the page content corresponding to the first task may be provided by the first application. Specific content displayed in the first interface is not limited in embodiments of this application.

S2202: Receive a first preset operation.

In a possible implementation, the first preset operation may be a double-tap operation on the back of the electronic device. Such an operation manner is convenient and easy for a user to implement.

Clearly, the first preset operation may alternatively be any alternative solution to the double-tap operation on the back described above in the foregoing embodiments. Details are not provided herein again.

S2203: In response to the first preset operation, display an embedded window at an upper layer of the first interface, and skip interrupting execution of the first task, where the embedded window includes page content corresponding to a second task of a second application.

The embedded window in this embodiment of this application may be a window, provided by a system on the electronic device, independent of the first application and the second application. For a function and a possible name of the embedded window, refer to the foregoing descriptions in the foregoing embodiments. For specific content in the embedded window, refer to the interfaces shown in FIG. 9D, FIG. 10C, FIG. 11B, FIG. 12B, FIG. 13B, FIG. 14B, and FIG. 15A, FIG. 15B, FIG. 15C, and FIG. 15D. Details are not provided herein again.

Running the embedded window does not affect execution of the first task. For example, when the first application includes an application that supports in playing video or audio content, in a process in which the electronic device displays the embedded window, the electronic device keeps the first application playing the video or audio. In this way, the application already running on the electronic device can run continuously.

The second application may be a same application as the first application, or may be an application different from the first application. The second task of the second application may be any application of the second application. The second application and the second task are not specifically limited in embodiments of this application.

In a possible implementation, the electronic device may create a new task for the second application corresponding to the second task in the embedded window, so that the second application can provide the page content corresponding to the second task for the embedded window based on the newly created task, and the electronic device does not need to jump to the second application.

It can be understood that, even if the second task of the second application is run in the embedded window and the second application on the electronic device is running in the background, according to the method in this embodiment of this application, when the electronic device exits a page of the second task of the second application displayed in the embedded window, an interface memorized before the second application is running in the background is displayed again, and running before the second application is not interrupted. In other words, a task performed by the second application in the embedded window may be independent of a task performed by the second application in the foreground or the background on the electronic device.

S2204: Receive a second preset operation.

In this embodiment of this application, the second preset operation may be any operation for exiting the embedded window, and may be, for example, any operation described in FIG. 20A to FIG. 20D, FIG. 21A to FIG. 21C, or the foregoing embodiments for exiting the embedded window.

S2205: In response to the second preset operation, cancel display of the embedded window, and restore display of the page content corresponding to the first task of the first application.

In this embodiment of this application, after display of the embedded window is canceled, the electronic device may restore display of the page content corresponding to the application before the embedded window pops up, so that display of the embedded window causes no interference on the application already running on the electronic device.

In conclusion, in this embodiment of this application, the embedded window can be displayed conveniently based on a user operation, to provide some tasks for the user in the embedded window, so that the user can use a task in the embedded window conveniently. In addition, display of the embedded window does not interrupt the application already running on the electronic device, so that the application already running on the electronic device has good continuity. The user is less disturbed when using the application, and user experience is improved.

In a possible implementation, the page content corresponding to the second task of the second application is displayed in a first area of the embedded window, the embedded window further includes a second area, and at the upper layer of the first interface, the following are further displayed in the second area of the embedded window: a first icon corresponding to the second task, and a second icon corresponding to a third task, where the first icon is in a selected state, and the second icon is in an unselected state.

In this embodiment of this application, the first area may be understood as an area for displaying a shortcut task card (that is, specific page content corresponding to a task), and the second area may be understood as an area for displaying identifiers of a plurality of tasks. The identifiers of the plurality of tasks may be set by the user, or may be default on or recommended by the electronic device. An identifier of a task may be a task icon. A task corresponding to a currently displayed shortcut task card may be in the selected state in the second area, and an identifier of another task corresponding to no currently displayed shortcut task card may be in the unselected state. A task icon in the selected state may be different from an icon in the unselected state in colors, fonts, animation effects, and the like.

For content displayed in the first area and second area of the embedded window, refer to the interfaces shown in FIG. 9D, FIG. 10C, FIG. 11B, FIG. 12B, FIG. 13B, FIG. 14B, and FIG. 15A, FIG. 15B, FIG. 15C, and FIG. 15D. Details are not provided herein again.

In a possible implementation, before the second preset operation is received, the method further includes: receiving, in the embedded window, a third preset operation for switching the second task to the third task; and in response to the third preset operation, displaying interface content corresponding to the third task in the first area of the embedded window, and displaying the first icon and the second icon in the second area of the embedded window, where the first icon is in the unselected state, and the second icon is in the selected state.

In this embodiment of this application, the third task may be a task of the first application, a task of the second application, or a task of a third application. In other words, a plurality of tasks of one application or a plurality of tasks of a plurality of applications may be displayed in the embedded window. In this way, the user can use different tasks of different applications based on the embedded window, bringing more richness and convenience in use.

The third preset operation for switching the second task to the third task may be a swipe operation, or may be an operation for triggering a task icon in the second area. For details, refer to the descriptions corresponding to FIG. 15A to FIG. 15D. Details are not provided herein again.

In a possible implementation, after the interface content corresponding to the third task is displayed in the first area of the embedded window, the method further includes: receiving a swipe-up operation in the first area of the embedded window; in response to the swipe-up operation, displaying a first button in the first area of the embedded window; and when a trigger operation on the first button is received, displaying page content, associated with the first button, of the third task in the first area of the embedded window.

In this embodiment of this application, the embedded window may support in displaying part of a page of a task, and hidden content not displayed in the page may be displayed based on the swipe-up operation. The button in the embedded window may further support jumping of content displayed in the embedded window to a next level of page or a plurality of lower levels of pages. In this way, there can be more content in the embedded window, so that the user can implement more services based on the embedded window. For details, refer to the descriptions in FIG. 17A and FIG. 17B. The first button may correspond to "Split bill" in FIG. 17A to FIG. 17F. Details are not provided herein again.

In a possible implementation, the page content, associated with the first button, of the third task includes a second button, and the method further includes: when a trigger operation on the second button is received, restoring display of the interface content corresponding to the first task in the first area of the embedded window.

In this embodiment of this application, the second button may be a return button. The embedded window may further support in returning to an upper level of interface based on a trigger on the return button. For details, refer to the descriptions in FIG. 17D, FIG. 17E, and FIG. 17F. Details are not provided herein again.

In a possible implementation, the page content corresponding to the second task of the second application includes a third button, and the method further includes: when a trigger on the third button is received, displaying an input box in the embedded window; when a trigger on the input box is received, displaying a keyboard; and displaying, in the input box, input content received by the keyboard.

In this embodiment of this application, the embedded window may support in using a keyboard for input. In this way, the user can implement input in the embedded window conveniently. For details, refer to the descriptions in FIG. 18A, FIG. 18B, and FIG. 18C. The third button may correspond to the input box in FIG. 18A to FIG. 18C. Details are not provided herein again.

In a possible implementation, after the embedded window is displayed at the upper layer of the first interface, the method further includes: receiving a notification message; and keeping displaying the embedded window, and displaying the notification message in a form of a capsule or a banner at an upper layer of the embedded window.

In this embodiment of this application, if the notification message is received during display of the embedded window, the embedded window may keep being displayed, and the notification message is displayed in a form of a capsule or a banner at the upper layer of the embedded window. In this way, the user can see the notification message in real time when watching the embedded window. For details, refer to related the descriptions in FIG. 19A, FIG. 19B, FIG. 19C, and FIG. 19D. Details are not provided herein again.

In a possible implementation, the method further includes: displaying a second interface, where the second interface includes a first switch; when a trigger operation for enabling the first switch is received, displaying a third interface, where the third interface includes an Added bar and a Not-added bar, the Added bar includes an identifier of one or more custom tasks added by a user, and the Not-added bar includes an identifier of one or more tasks that are provided by the electronic device and that are not added by the user; and when an operation for deleting a first target task from the Added bar is received, canceling display of an identifier of the first target task in the Added bar, and displaying the identifier of the first target task in the Not-added bar; or when an operation for adding a second target task in the Not-added bar is received, canceling display of an identifier of the second target task in the Not-added bar, and displaying the identifier of the second target task in the Added bar.

The second interface may be an interface for displaying a main switch, for example, may correspond to FIG. 6A. The third interface may be an interface for setting a task, for example, may correspond to FIG. 6B. The first target task may be any task in the Added bar, and the second target task may be any application, in the Not-added bar, already installed on the electronic device. For a specific setting procedure, refer to the descriptions of FIG. 6A to FIG. 6F or FIG. 7A to FIG. 7F. Details are not provided herein again. In this way, the user can be supported in customizing a needed task conveniently.

In a possible implementation, the Not-added bar includes an identifier of a third target task, an application corresponding to the third target task is not installed on the electronic device, and the method further includes: when an operation for adding the third target task in the Not-added bar is received, displaying prompt information, where the prompt information is used to prompt for installing the application corresponding to the third target task.

In this embodiment of this application, when the user selects a task of an application not installed on the electronic device, the electronic device can prompt the user for installing the application. In this way, the user can customize various tasks, not limited to an application already installed on the electronic device. The third target task may correspond to, for example, the "task f" in FIG. 6A to FIG. 6F.

In a possible implementation, the third interface further includes a second switch, and the method further includes: when a trigger operation for enabling the second switch is received, displaying a recommended identifier in a blank area of the Added bar.

The second switch in this embodiment of this application may correspond to the intelligent recommendation switch in the foregoing embodiments. When the intelligent recommendation switch is on, if a quantity of tasks in the Added bar has not reached an upper limit of a quantity of tasks that can be displayed, a recommendation identifier may be displayed in the Added bar, and the recommendation identifier may be indicated by a dashed box, text, and/or the like. For details, refer to the interfaces in FIG. 7A to FIG. 7F. Details are not provided herein again.

After the intelligent recommendation switch is turned on, if the user triggers the electronic device to display the embedded window, a task corresponding to the first shortcut task card to be displayed in the embedded window may be obtained according to a recommendation algorithm.

For example, in a possible implementation, the displaying an embedded window at an upper layer of the first interface, where the embedded window includes page content corresponding to a second task of a second application includes: in response to the first preset operation, determining the second task of the second application according to a recommendation algorithm if it is determined that the second switch is on, where the recommendation algorithm is related to one or more of the following: time information, a geo-fence within which the user is located, or user-related information in a user profile; and displaying the embedded window at the upper layer of the first interface, where the embedded window includes a page corresponding to the second task of the second application.

For example, the determining the second task of the second application according to a recommendation algorithm includes: when it is determined according to the recommendation algorithm that the user is going to go out, determining that the second task of the second application is a transportation-related task; when it is determined according to the recommendation algorithm that the user is going to punch in, determining that the second task of the second application is a punch in-related task; when it is determined according to the recommendation algorithm that the user is going to make a payment, determining that the second task of the second application is a payment-related task; or when it is determined according to the recommendation algorithm that the user is going to use transportation, determining that the second task of the second application is a passenger QR code-related task.

For related content of the recommendation algorithm in this embodiment of this application, refer to descriptions in the foregoing embodiments. Details are not provided herein again. In this way, the electronic device can recommend an appropriate shortcut task card to the user based on a scenario that the user is in, improving user experience.

In a possible implementation, when the first preset operation is received by the electronic device in a screen-off state or an always-on-display state, a display screen of the electronic device is lightened up; a lock screen interface is displayed, where a lower layer of the lock screen interface includes the embedded window; and when a correct unlock input is received in the lock screen interface, the embedded window is displayed.

In this embodiment of this application, the electronic device can wake from the screen-off state or the always-on-display state and display the embedded window based on a simple trigger of the user. For details, refer to the descriptions of FIG. 9A to FIG. 9D. Details are not provided herein again.

In a possible implementation, the method further includes: when the first preset operation is received by the electronic device in a lock screen-on state, displaying the lock screen interface, where the lower layer of the lock screen interface includes the embedded window; and when the correct unlock input is received in the lock screen interface, displaying the embedded window.

In this embodiment of this application, the electronic device can wake from the lock screen-on state and display the embedded window based on a simple trigger of the user. For details, refer to the descriptions of FIG. 10A to FIG. 10C. Details are not provided herein again.

The window display method according to this embodiment of this application is described above. An apparatus for performing the window display method provided in this embodiment of this application is described below. A person skilled in the art may understand that the method and the apparatus may be mutually combined and referenced. The related apparatus provided in an embodiment of this application may perform the steps in the window display method.

To implement the foregoing functions, the apparatus for implementing window display includes corresponding hardware structures and/or software modules for performing the functions. A person skilled in the art should be easily aware that the method steps in the examples described with reference to the embodiments disclosed in this specification may be implemented in this application in a form of hardware or a combination of hardware and computer software. Whether a function is performed by hardware or computer software driving hardware depends on particular application and design constraints of the technical solutions. A person skilled in the art may use different methods to implement the described functions for each particular application, but it should not be considered that the implementation goes beyond the scope of this application.

In embodiments of this application, an apparatus for implementing the window display method may be divided into functional modules based on the foregoing method examples, for example, each functional module may be obtained through division for each corresponding function, or two or more functions may be integrated into one processing module. An integrated module may be implemented by hardware, or may be implemented by a software functional module. It should be noted that the division into the modules in embodiments of this application is an example and is merely logical function division, and may be another division in actual implementation.

FIG. 23 is a diagram of a structure of a chip according to an embodiment of this application. A chip 2300 includes one or at least two (including two) processors 2301, a communication line 2302, a communication interface 2303, and a memory 2304.

In some implementations, the memory 2304 stores the following elements: an executable module or a data structure, subsets thereof, or extended sets thereof.

The method described in embodiments of this application may be applied to the processor 2301 or implemented by the processor 2301. The processor 2301 may be an integrated circuit chip having a signal processing capability. In an implementation process, the steps in the foregoing method may be completed by using a hardware-integrated logic circuit in the processor 2301 or instructions in a form of software. The processor 2301 may be a general-purpose processor (for example, a microprocessor or a conventional processor), a digital signal processor (digital signal processor, DSP), an application-specific integrated circuit (application-specific integrated circuit, ASIC), a field-programmable gate array (field-programmable gate array, FPGA) or another programmable logic device, a discrete gate, a transistor logic device, or a discrete hardware component. The processor 2301 may implement or perform various processing-related methods, steps, and logical block diagrams disclosed in embodiments of this application.

The steps in the methods disclosed with reference to embodiments of this application may be directly performed and completed by using a hardware decoding processor, or may be performed and completed by using a combination of hardware and software modules in the decoding processor. The software module may be located in a mature storage medium in the field, for example, a random access memory, a read-only memory, a programmable read-only memory, or an electrically erasable programmable memory (electrically erasable programmable read only memory, EEPROM). The storage medium is located in the memory 2304, and the processor 2301 reads information in the memory 2304, and completes the steps in the foregoing method in combination with hardware thereof.

The processor 2301, the memory 2304, and the communication interface 2303 may communicate with each other through the communication line 2302.

In the foregoing embodiments, the instructions stored in the memory and to be executed by the processor may be implemented in the form of a computer program product. The computer program product may be written into the memory in advance, or may be downloaded to and installed in the memory in a form of software.

An embodiment of this application further provides a computer program product, including one or more computer instructions. When the computer program instruction is loaded and executed on the computer, procedures or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another web site, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, including one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

An embodiment of this application further provides a computer-readable storage medium. All or some of methods in the foregoing embodiments may be implemented by software, hardware, firmware, or any combination thereof. The computer-readable medium may include a computer storage medium and a communication medium, and may further include any medium that can transmit a computer program from one place to another. The storage medium may be any target medium that can be accessed by a computer.

In a possible design, the computer-readable medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server, or another remote source through a coaxial cable, an optical fiber cable, a twisted pair, a DSL, or wireless technologies (such as infrared ray, radio, and microwave), the coaxial cable, the optical fiber cable, the twisted pair, the DSL, or the wireless technologies such as infrared ray, radio, and microwave are included in the definition of the medium. The magnetic disk and the optical disc used in this specification include an optical disc (CD), a laser disc, an optical disc, a digital versatile disc (digital versatile disc, DVD), a floppy disk, and a blue-ray disc. The magnetic disk generally reproduces data in a magnetic manner, and the optical disc reproduces data optically by using laser.

Embodiments of this application are described with reference to the flowcharts and/or block diagrams of the method, the device (system), and the computer program product according to embodiments of this application. It should be understood that computer program instructions can implement each procedure and/or block in the flowcharts and/or block diagrams and a combination of procedures and/or blocks in the flowcharts and/or block diagrams. These computer program instructions may be provided for a general-purpose computer, a dedicated computer, an embedded processor, or a processing unit of any other programmable data processing device to generate a machine, so that the instructions executed by a computer or a processing unit of any other programmable data processing device generate an apparatus for implementing a specific function in one or more processes in the flowcharts and/or in one or more blocks in the block diagrams.

## Claims

1. A window display method, applied to an electronic device and comprising:
displaying a first interface, wherein the first interface comprises page content corresponding to a first task of a first application;
receiving a first preset operation;
in response to the first preset operation, creating a new task for the second application, displaying an embedded window at an upper layer of the first interface, and skipping interrupting execution of the first task, wherein the embedded window comprises page content corresponding to a second task of a second application, the embedded window is not a window of the second application, and the embedded window is an independent window provided by a system on the electronic device;
receiving a second preset operation; and
in response to the second preset operation, canceling display of the embedded window, and restoring display of the page content corresponding to the first task of the first application;
wherein the first application comprises an application that supports video or audio content play, and the electronic device keeps the first application playing a video or audio in a process in which the electronic device displays the embedded window.

2. The method according to claim 1, wherein the page content corresponding to the second task of the second application is displayed in a first area of the embedded window, the embedded window further comprises a second area, and at the upper layer of the first interface, the following are further displayed in the second area of the embedded window: a first icon corresponding to the second task, and a second icon corresponding to a third task, wherein the first icon is in a selected state, and the second icon is in an unselected state.

3. The method according to claim 2, wherein before the receiving a second preset operation, the method further comprises:
receiving, in the embedded window, a third preset operation for switching the second task to the third task; and
in response to the third preset operation, displaying interface content corresponding to the third task in the first area of the embedded window, and displaying the first icon and the second icon in the second area of the embedded window, wherein the first icon is in the unselected state, the second icon is in the selected state, and wherein the third task is a task of the first application, a task of the second application, or a task of a third application.

4. The method according to claim 3, wherein after the displaying interface content corresponding to the third task in the first area of the embedded window, the method further comprises:
receiving a swipe-up operation in the first area of the embedded window;
in response to the swipe-up operation, displaying a first button in the first area of the embedded window; and
when a trigger operation on the first button is received, displaying page content, associated with the first button, of the third task in the first area of the embedded window.

5. The method according to claim 4, wherein the page content, associated with the first button, of the third task comprises a second button, and the method further comprises:
when a trigger operation on the second button is received, restoring display of the page content corresponding to the first task in the first area of the embedded window.

6. The method according to any one of claims 1 to 5, wherein after the displaying an embedded window at the upper layer of the first interface, the method further comprises:
receiving a notification message; and
keeping displaying the embedded window, and displaying the notification message in a form of a capsule or a banner at an upper layer of the embedded window.

7. The method according to any one of claims 1 to 6, wherein the method further comprises:
displaying a second interface, wherein the second interface comprises a first switch;
when a trigger operation for enabling the first switch is received, displaying a third interface, wherein the third interface comprises an Added bar and a Not-added bar, the Added bar comprises an identifier of one or more custom tasks added by a user, and the Not-added bar comprises an identifier of one or more tasks that are provided by the electronic device and that are not added by the user; and
when an operation for deleting a first target task from the Added bar is received, canceling display of an identifier of the first target task in the Added bar, and displaying the identifier of the first target task in the Not-added bar; or
when an operation for adding a second target task in the Not-added bar is received, canceling display of an identifier of the second target task in the Not-added bar, and displaying the identifier of the second target task in the Added bar.

8. The method according to claim 7, wherein the Not-added bar comprises an identifier of a third target task, an application corresponding to the third target task is not installed on the electronic device, and the method further comprises:
when an operation for adding the third target task in the Not-added bar is received, displaying prompt information, wherein the prompt information is used to prompt for installing the application corresponding to the third target task.

9. The method according to claim 7 or 8, wherein the third interface further comprises a second switch, and the method further comprises:
when a trigger operation for enabling the second switch is received, displaying a recommended identifier in a blank area of the Added bar.

10. The method according to claim 9, wherein the in response to the first preset operation, displaying an embedded window at the upper layer of the first interface, wherein the embedded window comprises page content corresponding to a second task of a second application comprises:
in response to the first preset operation, determining the second task of the second application according to a recommendation algorithm if it is determined that the second switch is on, wherein the recommendation algorithm is related to one or more of the following: time information, a geo-fence within which the user is located, or user-related information in a user profile; and
displaying the embedded window at the upper layer of the first interface, wherein the embedded window comprises the page content corresponding to the second task of the second application.

11. The method according to claim 10, wherein the determining the second task of the second application according to a recommendation algorithm comprises:
when it is determined according to the recommendation algorithm that the user is going to go out, determining that the second task of the second application is a transportation-related task;
when it is determined according to the recommendation algorithm that the user is going to punch in, determining that the second task of the second application is a punch in-related task;
when it is determined according to the recommendation algorithm that the user is going to make a payment, determining that the second task of the second application is a payment-related task; or
when it is determined according to the recommendation algorithm that the user is going to use transportation, determining that the second task of the second application is a passenger QR code-related task.

12. The method according to any one of claims 1 to 11, wherein the method further comprises:
when the first preset operation is received by the electronic device in a screen-off state, a lock screen-on state or an always-on-display state, lighting up a display screen of the electronic device;
displaying a lock screen interface, wherein a lower layer of the lock screen interface comprises the embedded window; and
when a correct unlock input is received in the lock screen interface, displaying the embedded window.

13. The method according to any one of claims 1 to 12, wherein the receiving a first preset operation comprises:
receiving a double-tap operation on the back of the electronic device.

14. An electronic device, comprising a memory and a processor, wherein the memory is configured to store a computer program, and the processor is configured to execute the computer program, to perform the method according to any one of claims 1 to 13.

15. A computer-readable storage medium, wherein the computer-readable storage medium stores instructions, and when the instructions are executed, a computer is enabled to perform the method according to any one of claims 1 to 13.

## Patentansprüche

1. Ein Anzeigemodell zur Fensterausgabe, anwendbar auf ein elektronisches Gerät, umfassend:
Anzeigen einer ersten Benutzeroberfläche, wobei die erste Benutzeroberfläche einen Seiteninhalt umfasst, der einer ersten Aufgabe einer ersten Anwendung entspricht;
Empfangen einer ersten voreingestellten Aktion;
Als Reaktion auf die erste voreingestellte Aktion wird eine neue Aufgabe für die zweite Anwendung erstellt, ein eingebettetes Fenster auf einer höheren Ebene der ersten Benutzeroberfläche angezeigt und die Ausführung der ersten Aufgabe nicht unterbrochen, wobei das eingebettete Fenster Seiteninhalt umfasst, der einer zweiten Aufgabe einer zweiten Anwendung entspricht, das eingebettete Fenster kein Fenster der zweiten Anwendung ist und das eingebettete Fenster ein unabhängiges Fenster ist, das von einem System auf dem elektronischen Gerät bereitgestellt wird;
Empfangen einer zweiten voreingestellten Aktion; und
Als Reaktion auf die zweite voreingestellte Aktion wird die Anzeige des eingebetteten Fensters aufgehoben und die Anzeige des Seiteninhalts, der der ersten Aufgabe der ersten Anwendung entspricht, wiederhergestellt;
wobei die erste Anwendung eine Anwendung umfasst, die die Wiedergabe von Video- oder Audioinhalten unterstützt, und das elektronische Gerät die erste Anwendung während des Vorgangs, in dem das elektronische Gerät das eingebettete Fenster anzeigt, weiterhin ein Video oder Audio abspielen lässt.

2. Verfahren nach Anspruch 1, wobei der Seiteninhalt, der der zweiten Aufgabe der zweiten Anwendung entspricht, in einem ersten Bereich des eingebetteten Fensters angezeigt wird, das eingebettete Fenster ferner einen zweiten Bereich umfasst und in der oberen Ebene der ersten Benutzeroberfläche im zweiten Bereich des eingebetteten Fensters Folgendes weiter angezeigt wird: ein erstes Symbol, das der zweiten Aufgabe entspricht, und ein zweites Symbol, das einer dritten Aufgabe entspricht, wobei sich das erste Symbol im ausgewählten Zustand und das zweite Symbol im nicht ausgewählten Zustand befindet.

3. Verfahren nach Anspruch 2, wobei das Verfahren vor dem Empfangen einer zweiten voreingestellten Aktion weiterhin Folgendes umfasst:
Empfangen einer dritten voreingestellten Aktion im eingebetteten Fenster, um die zweite Aufgabe auf die dritte Aufgabe umzuschalten; und
Als Reaktion auf die dritte voreingestellte Aktion wird der der dritten Aufgabe entsprechende Schnittstelleninhalt im ersten Bereich des eingebetteten Fensters angezeigt sowie das erste und zweite Symbol im zweiten Bereich des eingebetteten Fensters angezeigt, wobei sich das erste Symbol im nicht ausgewählten Zustand und das zweite Symbol im ausgewählten Zustand befinden, und wobei die dritte Aufgabe eine Aufgabe der ersten Anwendung, der zweiten Anwendung oder einer dritten Anwendung ist.

4. Verfahren nach Anspruch 3, wobei das Verfahren nach der Anzeige des Schnittstelleninhalts, der der dritten Aufgabe im ersten Bereich des eingebetteten Fensters entspricht, weiterhin Folgendes umfasst:
Empfangen einer Wisch-nach-oben-Geste im ersten Bereich des eingebetteten Fensters;
als Reaktion auf die Wisch-nach-oben-Geste Anzeigen einer ersten Schaltfläche im ersten Bereich des eingebetteten Fensters; und
wenn eine Auslöseaktion an der ersten Schaltfläche empfangen wird, Anzeigen des mit der ersten Schaltfläche verknüpften Seiteninhalts der dritten Aufgabe im ersten Bereich des eingebetteten Fensters.

5. Verfahren nach Anspruch 4, wobei der mit der ersten Schaltfläche verknüpfte Seiteninhalt der dritten Aufgabe eine zweite Schaltfläche umfasst und das Verfahren ferner umfasst:
wenn eine Auslöseaktion an der zweiten Schaltfläche empfangen wird, Wiederherstellung der Anzeige des zum ersten Task gehörenden Seiteninhalts im ersten Bereich des eingebetteten Fensters.

6. Verfahren nach einem der Ansprüche 1 bis 5, wobei das Verfahren nach der Anzeige eines eingebetteten Fensters auf der oberen Ebene der ersten Oberfläche weiterhin umfasst:
Empfangen einer Benachrichtigungsmeldung; und
Anzeige des eingebetteten Fensters beibehalten und die Benachrichtigungsmeldung in Form einer Kapsel oder eines Banners auf einer oberen Ebene des eingebetteten Fensters anzeigen.

7. Verfahren nach einem der Ansprüche 1 bis 6, wobei das Verfahren ferner umfasst:
Anzeigen einer zweiten Oberfläche, wobei die zweite Oberfläche einen ersten Schalter umfasst;
wenn eine Auslöseaktion zum Aktivieren des ersten Schalters empfangen wird, Anzeigen einer dritten Oberfläche, wobei die dritte Oberfläche eine Hinzugefügte-Leiste und eine Nicht-hinzugefügte-Leiste umfasst, die Hinzugefügte-Leiste eine Kennung für eine oder mehrere vom Nutzer hinzugefügte benutzerdefinierte Aufgaben umfasst und die Nicht-hinzugefügte-Leiste eine Kennung für eine oder mehrere Aufgaben umfasst, die vom elektronischen Gerät bereitgestellt und nicht vom Nutzer hinzugefügt wurden; und
wenn eine Aktion zum Löschen einer ersten Zielaufgabe aus der Hinzugefügte-Leiste empfangen wird, die Anzeige der Kennung der ersten Zielaufgabe in der Hinzugefügte-Leiste aufheben und die Kennung der ersten Zielaufgabe in der Nicht-hinzugefügte-Leiste anzeigen; oder
wenn eine Aktion zum Hinzufügen einer zweiten Zielaufgabe in der Nicht-hinzugefügte-Leiste empfangen wird, die Anzeige der Kennung der zweiten Zielaufgabe in der Nicht-hinzugefügte-Leiste aufheben und die Kennung der zweiten Zielaufgabe in der Hinzugefügte-Leiste anzeigen.

8. Verfahren nach Anspruch 7, wobei die Nicht-hinzugefügte-Leiste eine Kennung für eine dritte Zielaufgabe enthält, eine der dritten Zielaufgabe entsprechende Anwendung nicht auf dem elektronischen Gerät installiert ist und das Verfahren ferner umfasst:
wenn eine Aktion zum Hinzufügen der dritten Zielaufgabe in der Nicht-hinzugefügte-Leiste empfangen wird, Anzeigen von Hinweisinformationen, wobei die Hinweisinformationen für die Aufforderung zur Installation der der dritten Zielaufgabe entsprechenden Anwendung verwendet werden.

9. Verfahren nach Anspruch 7 oder 8, wobei die dritte Schnittstelle ferner einen zweiten Schalter umfasst und das Verfahren weiter Folgendes umfasst:
wenn ein Auslöser zum Aktivieren des zweiten Schalters empfangen wird, wird ein empfohlener Bezeichner in einem leeren Bereich der Hinzugefügten-Leiste angezeigt.

10. Verfahren nach Anspruch 9, wobei als Reaktion auf die erste voreingestellte Operation ein eingebettetes Fenster auf der oberen Ebene der ersten Schnittstelle angezeigt wird, wobei das eingebettete Fenster Seiteninhalt umfasst, der einer zweiten Aufgabe einer zweiten Anwendung entspricht, und folgendes umfasst:
als Reaktion auf die erste voreingestellte Operation wird die zweite Aufgabe der zweiten Anwendung anhand eines Empfehlungsalgorithmus bestimmt, sofern festgestellt wird, dass der zweite Schalter eingeschaltet ist, wobei der Empfehlungsalgorithmus mit einem oder mehreren der folgenden Elemente in Zusammenhang steht: Zeitinformation, ein Geofence, in dem sich der Benutzer befindet, oder benutzerbezogene Informationen im Benutzerprofil; und
Anzeigen des eingebetteten Fensters auf der oberen Ebene der ersten Schnittstelle, wobei das eingebettete Fenster den Seiteninhalt enthält, der der zweiten Aufgabe der zweiten Anwendung entspricht.

11. Verfahren nach Anspruch 10, wobei das Bestimmen der zweiten Aufgabe der zweiten Anwendung mittels eines Empfehlungsalgorithmus Folgendes umfasst:
wenn anhand des Empfehlungsalgorithmus festgestellt wird, dass der Benutzer im Begriff ist, das Haus zu verlassen, wird bestimmt, dass die zweite Aufgabe der zweiten Anwendung eine transportbezogene Aufgabe ist;
wenn anhand des Empfehlungsalgorithmus festgestellt wird, dass der Benutzer sich einstechen wird, wird bestimmt, dass die zweite Aufgabe der zweiten Anwendung eine Einstempeln-bezogene Aufgabe ist;
wenn anhand des Empfehlungsalgorithmus festgestellt wird, dass der Benutzer eine Zahlung durchführen wird, wird bestimmt, dass die zweite Aufgabe der zweiten Anwendung eine zahlungsbezogene Aufgabe ist; oder
wenn anhand des Empfehlungsalgorithmus festgestellt wird, dass der Benutzer ein Transportmittel verwenden wird, wird bestimmt, dass die zweite Aufgabe der zweiten Anwendung eine Passagier-QR-Code-bezogene Aufgabe ist.

12. Verfahren nach einem der Ansprüche 1 bis 11, wobei das Verfahren ferner Folgendes umfasst:
wenn die erste voreingestellte Operation vom elektronischen Gerät im Bildschirmaus-Zustand, Sperrbildschirm-an-Zustand oder Immer-Anzeige-Zustand empfangen wird, wird ein Anzeigebildschirm des elektronischen Geräts eingeschaltet;
Anzeigen einer Sperrbildschirm-Oberfläche, wobei eine untere Ebene der Sperrbildschirm-Oberfläche das eingebettete Fenster umfasst; und
wenn eine korrekte Entsperreingabe in der Sperrbildschirm-Oberfläche empfangen wird, wird das eingebettete Fenster angezeigt.

13. Verfahren nach einem der Ansprüche 1 bis 12, wobei das Empfangen einer ersten voreingestellten Bedienung Folgendes umfasst:
Empfangen eines Doppeltipp-Vorgangs auf der Rückseite des elektronischen Geräts.

14. Elektronisches Gerät, umfassend einen Speicher und einen Prozessor, wobei der Speicher dazu konfiguriert ist, ein Computerprogramm zu speichern, und der Prozessor dazu konfiguriert ist, das Computerprogramm auszuführen, um das Verfahren nach einem der Ansprüche 1 bis 13 auszuführen.

15. Computerlesbares Speichermedium, wobei das computerlesbare Speichermedium Anweisungen speichert, und wenn die Anweisungen ausgeführt werden, ist ein Computer in der Lage, das Verfahren nach einem der Ansprüche 1 bis 13 auszuführen.

## Revendications

1. Procédé d'affichage de fenêtre, appliqué à un dispositif électronique et comprenant :
l'affichage d'une première interface, la première interface comprenant un contenu de page correspondant à une première tâche d'une première application ;
la réception d'une première opération prédéfinie ;
en réponse à la première opération prédéfinie, la création d'une nouvelle tâche pour la deuxième application, l'affichage d'une fenêtre incorporée au niveau supérieur de la première interface, sans interruption de l'exécution de la première tâche, la fenêtre incorporée comprenant un contenu de page correspondant à une deuxième tâche d'une deuxième application, la fenêtre incorporée n'étant pas une fenêtre de la deuxième application, et étant une fenêtre indépendante fournie par le système sur le dispositif électronique ;
la réception d'une deuxième opération prédéfinie ; et
en réponse à la deuxième opération prédéfinie, l'annulation de l'affichage de la fenêtre incorporée et la restauration de l'affichage du contenu de page correspondant à la première tâche de la première application ;
la première application comprenant une application prenant en charge la lecture de contenu vidéo ou audio, et le dispositif électronique maintenant la lecture d'une vidéo ou d'un audio par la première application pendant le processus d'affichage de la fenêtre incorporée.

2. Procédé selon la revendication 1, dans lequel le contenu de page correspondant à la deuxième tâche de la deuxième application est affiché dans une première zone de la fenêtre incorporée, la fenêtre incorporée comprenant en outre une deuxième zone, et au niveau supérieur de la première interface, les éléments suivants sont également affichés dans la deuxième zone de la fenêtre incorporée : une première icône correspondant à la deuxième tâche, et une deuxième icône correspondant à une troisième tâche, la première icône étant dans un état sélectionné, et la deuxième icône dans un état non sélectionné.

3. Procédé selon la revendication 2, dans lequel, avant la réception d'une deuxième opération prédéfinie, le procédé comprend en outre :
la réception, dans la fenêtre incorporée, d'une troisième opération prédéfinie permettant de passer de la deuxième tâche à la troisième tâche ; et
en réponse à la troisième opération prédéfinie, l'affichage du contenu d'interface correspondant à la troisième tâche dans la première zone de la fenêtre incorporée, et l'affichage de la première icône et de la deuxième icône dans la deuxième zone de la fenêtre incorporée, la première icône étant dans un état non sélectionné, la deuxième icône dans un état sélectionné, la troisième tâche étant une tâche de la première application, une tâche de la deuxième application ou une tâche d'une troisième application.

4. Procédé selon la revendication 3, dans lequel, après l'affichage du contenu d'interface correspondant à la troisième tâche dans la première zone de la fenêtre incorporée, le procédé comprend en outre :
recevoir une opération de balayage vers le haut dans la première zone de la fenêtre intégrée ;
en réponse à l'opération de balayage vers le haut, afficher un premier bouton dans la première zone de la fenêtre intégrée ; et
lorsqu'une opération de déclenchement sur le premier bouton est reçue, afficher le contenu de la page, associé au premier bouton, de la troisième tâche dans la première zone de la fenêtre intégrée.

5. Procédé selon la revendication 4, où le contenu de la page, associé au premier bouton, de la troisième tâche comprend un second bouton, et le procédé comprend en outre :
lorsqu'une opération de déclenchement sur le second bouton est reçue, rétablir l'affichage du contenu de la page correspondant à la première tâche dans la première zone de la fenêtre intégrée.

6. Procédé selon l'une des revendications 1 à 5, où, après avoir affiché une fenêtre intégrée dans la couche supérieure de la première interface, le procédé comprend en outre :
recevoir un message de notification ; et
maintenir l'affichage de la fenêtre intégrée, et afficher le message de notification sous forme de capsule ou de bannière sur une couche supérieure de la fenêtre intégrée.

7. Procédé selon l'une des revendications 1 à 6, où le procédé comprend en outre :
afficher une deuxième interface, où la deuxième interface comprend un premier interrupteur ;
lorsqu'une opération de déclenchement pour activer le premier interrupteur est reçue, afficher une troisième interface, où la troisième interface comprend une barre Ajoutée et une barre Non ajoutée ; la barre Ajoutée comprend un identifiant d'une ou de plusieurs tâches personnalisées ajoutées par un utilisateur, et la barre Non ajoutée comprend un identifiant d'une ou plusieurs tâches fournies par le dispositif électronique et qui ne sont pas ajoutées par l'utilisateur ; et
lorsqu'une opération pour supprimer une première tâche cible de la barre Ajoutée est reçue, annuler l'affichage de l'identifiant de la première tâche cible dans la barre Ajoutée, et afficher l'identifiant de la première tâche cible dans la barre Non ajoutée ; ou
lorsqu'une opération pour ajouter une seconde tâche cible dans la barre Non ajoutée est reçue, annuler l'affichage de l'identifiant de la seconde tâche cible dans la barre Non ajoutée, et afficher l'identifiant de la seconde tâche cible dans la barre Ajoutée.

8. Procédé selon la revendication 7, où la barre Non ajoutée comprend un identifiant d'une troisième tâche cible, l'application correspondant à la troisième tâche cible n'est pas installée sur le dispositif électronique, et le procédé comprend en outre :
lorsqu'une opération pour ajouter la troisième tâche cible dans la barre Non ajoutée est reçue, afficher une information de notification, où l'information de notification est utilisée pour demander l'installation de l'application correspondant à la troisième tâche cible.

9. Procédé selon la revendication 7 ou 8, dans lequel la troisième interface comprend en outre un second interrupteur, et le procédé comprend en outre :
lorsqu'une opération de déclenchement pour activer le second interrupteur est reçue, afficher un identifiant recommandé dans une zone vide de la barre Ajoutée.

10. Procédé selon la revendication 9, dans lequel, en réponse à la première opération prédéfinie, une fenêtre intégrée s'affiche sur la couche supérieure de la première interface, ladite fenêtre intégrée comprenant le contenu de page correspondant à une seconde tâche d'une seconde application, comprenant :
en réponse à la première opération prédéfinie, déterminer la seconde tâche de la seconde application selon un algorithme de recommandation si l'on détermine que le second interrupteur est activé, l'algorithme de recommandation étant lié à une ou plusieurs des données suivantes : des informations temporelles, un périmètre géographique dans lequel l'utilisateur se trouve ou des informations liées à l'utilisateur dans son profil ; et
afficher la fenêtre intégrée sur la couche supérieure de la première interface, ladite fenêtre comprenant le contenu de page correspondant à la seconde tâche de la seconde application.

11. Procédé selon la revendication 10, dans lequel la détermination de la seconde tâche de la seconde application selon un algorithme de recommandation comprend :
lorsqu'il est déterminé selon l'algorithme de recommandation que l'utilisateur va sortir, déterminer que la seconde tâche de la seconde application est une tâche liée au transport ;
lorsqu'il est déterminé selon l'algorithme de recommandation que l'utilisateur va pointer, déterminer que la seconde tâche de la seconde application est une tâche liée à la pointage ;
lorsqu'il est déterminé selon l'algorithme de recommandation que l'utilisateur va effectuer un paiement, déterminer que la seconde tâche de la seconde application est une tâche liée au paiement ; ou
lorsqu'il est déterminé selon l'algorithme de recommandation que l'utilisateur va utiliser un moyen de transport, déterminer que la seconde tâche de la seconde application est une tâche liée au code QR pour passager.

12. Procédé selon l'une quelconque des revendications 1 à 11, dans lequel le procédé comprend en outre :
lorsque la première opération prédéfinie est reçue par le dispositif électronique dans un état d'écran éteint, un état de verrouillage d'écran ou un état d'affichage permanent, allumer l'écran du dispositif électronique ;
afficher une interface d'écran de verrouillage, dans laquelle une couche inférieure de l'interface de verrouillage comprend la fenêtre intégrée ; et
lorsqu'une saisie correcte de déverrouillage est reçue dans l'interface d'écran de verrouillage, afficher la fenêtre intégrée.

13. Le procédé selon l'une quelconque des revendications 1 à 12, dans lequel la réception d'une première opération prédéfinie comprend :
la réception d'une opération de double-tap sur l'arrière du dispositif électronique.

14. Un dispositif électronique comprenant une mémoire et un processeur, où la mémoire est conçue pour stocker un programme informatique, et le processeur est conçu pour exécuter le programme informatique afin de réaliser le procédé selon l'une quelconque des revendications 1 à 13.

15. Un support de stockage lisible par ordinateur, dans lequel le support de stockage lisible par ordinateur stocke des instructions et, lorsque les instructions sont exécutées, un ordinateur est habilité à réaliser le procédé selon l'une quelconque des revendications 1 à 13.
